(19) Europäisches Patentamt
European Patent Office
Office européen des brevets

(11) EP 2 503 665 A1

(12) # EUROPEAN PATENT APPLICATION
published in accordance with Art. 153(4) EPC

(43) Date of publication:
**26.09.2012 Bulletin 2012/39**

(21) Application number: **10834356.7**

(22) Date of filing: **16.11.2010**

(51) Int Cl.:
***H02J 7/35*** *(2006.01)* ***H01M 10/44*** *(2006.01)*

(86) International application number:
**PCT/JP2010/006710**

(87) International publication number:
**WO 2011/067900 (09.06.2011 Gazette 2011/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**03.12.2009 JP 2009275119**
**11.12.2009 JP 2009281264**
**19.01.2010 JP 2010008761**
**20.01.2010 JP 2010009778**
**20.01.2010 JP 2010009779**
**03.02.2010 JP 2010021766**

(71) Applicant: **Panasonic Corporation**
**Kadoma-shi**
**Osaka 571-8501 (JP)**

(72) Inventors:
- **ANDO, Kazunari**
**Osaka 540-6207 (JP)**
- **KADOUCHI, Eiji**
**Osaka 540-6207 (JP)**
- **YOSHIMINE, Toshifumi**
**Osaka 540-6207 (JP)**

(74) Representative: **Schwabe - Sandmair - Marx**
**Patentanwälte**
**Stuntzstraße 16**
**81677 München (DE)**

(54) **POWER SUPPLY SYSTEM AND STORAGE BATTERY CHARGE CONTROL METHOD**

(57) A power supply system has: an energy conversion unit that converts natural energy to electric energy; an electricity storage unit; a supply control unit that controls supply of electric energy to the electricity storage unit; an instruction unit that stops the supply of the electric energy by the supply control unit when a terminal voltage of the electricity storage unit becomes equal to or higher than a charge-stopping voltage set in advance and starts the supply of electric energy when the terminal voltage of the electricity storage unit becomes equal to or lower than a charge-starting voltage, in order to alternately repeat a charge period during which the electric energy is supplied to the electricity storage unit and a suspension period during which the supply of the electric energy to the electricity storage unit is stopped; and an information acquisition unit that acquires, as charge information, a charge electric quantity charged to the electricity storage unit during each of the charge periods, wherein the instruction unit causes the supply control unit to supply the electric energy to the electricity storage unit during a charge-continuation period which starts from a force-in start timing based on a timing when charge information satisfies a judgment condition set in advance and which expires upon elapse of a charge-continuation time set in advance.

FIG. 1

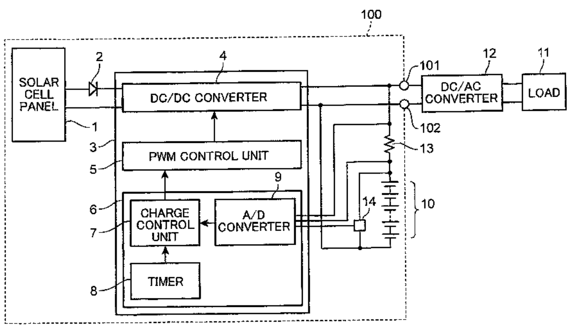


EP 2 503 665 A1

## Description

Technical Field

The present invention relates to a power supply system and a storage battery charge control method which use electric energy converted from natural energy.

Background Art

Conventionally, with a storage battery constituting an electricity storage unit, depending on the type of the storage battery, a charge-stopping voltage at which charge is stopped during a charge period is set in order to prevent deterioration of components (a positive electrode, a negative electrode, a separator, an electrolyte, and the like) due to overcharge. When converting natural energy to electric energy, a current value supplied to a storage battery fluctuates significantly due to changes in the natural environment (in the case of photovoltaic power generation, fluctuations in the amount of sunlight). Generally, a charge efficiency (electric quantity actually charged to a storage battery/electric quantity supplied to the storage battery) of a storage battery is higher when charge is performed at a low current value. Therefore, when supplying natural energy to a storage battery to charge the storage battery, even if a battery voltage reaches a charge-stopping voltage, the electric quantity actually charged to the storage battery is not always the same because charge currents differ for each charge.

In consideration thereof, Patent Document 1 describes a technique for measuring an electric quantity stored in a storage battery by adding up charge/discharge electric quantity of the storage battery using a microcomputer or the like.

In addition, Patent Document 2 describes charging a storage battery with output from a solar cell, wherein a charging circuit is opened when a battery voltage of the storage battery becomes equal to or higher than a given value and the charging circuit is once again closed and recharge is performed when the battery voltage equals or falls below a certain value in order to repetitively stop charge and perform recharge. A technique is described for preventing insufficient charge, when a storage battery charge current obtained from the solar cell is equal to or lower than a predetermined current value, by continuing charge without opening the charging circuit even if the battery voltage reaches or exceeds a given value. Furthermore, by continuing charge with a fine charge current that is equal to or lower than the predetermined current value, a deterioration of the storage battery due to significant overcharge by a large current such as deterioration due to a reduced electrolyte amount caused by dissolution of the electrolyte can presumably be avoided.

However, as is the case of the technique described in Patent Document 1, with a method in which an electric quantity stored in a storage battery is measured by adding up charge/discharge electric quantity of the storage battery and the storage battery is charged until the stored electric battery quantity calculated in this manner reaches an electric quantity when the storage battery is fully charged, there is a risk that an accumulation of add-up errors of the charge/discharge electric quantity may cause an increase in a measurement error of the stored electric battery quantity. In addition, there is a risk that an add-up value of the charge/discharge electric quantity may be inadvertently reset when an impulse noise or the like causes a malfunction of the microcomputer that adds up the charge/discharge electric quantity. In this case, the measurement value of the stored electric quantity may end up having a large discrepancy from the actual state. As a result, a charge accuracy for bringing the storage battery to a full charge decreases.

Furthermore, as is the case of the technique described in Patent Document 2, with a technique for preventing insufficient charge by continuing charge when a storage battery charge current obtained from a solar cell is equal to or lower than a predetermined current value, since an output of the solar call dies out and charge can no longer be performed when the sun sets before reaching full charge, a charge accuracy for bringing the storage battery to a full charge decreases. In addition, if a decline in the output of the solar cell after sundown causes the charge current to become equal to or lower than the predetermined current value, even when attempting to resolve the insufficient charge by subsequently stopping the repetitive stopping of charge and performing recharge so as to successively continue charge, since an electric quantity necessary for charge can no longer be obtained due to sundown, there is a risk that a charge accuracy for bringing the storage battery to a full charge may decrease.

Patent Document 1: Japanese Patent Application Laid-open No. S63-103627
Patent Document 2: Japanese Patent Application Laid-open No. 2002-315226

Summary of the Invention

An object of the present invention is to provide a power supply system and a storage battery charge control method capable of readily improving a charge accuracy of a storage battery.

A power supply system according to an aspect of the present invention has: an energy conversion unit that converts natural energy to electric energy; an electricity storage unit that stores electric energy supplied from the energy conversion unit; a supply control unit that controls supply of the electric energy from the energy conversion unit to the electricity storage unit; an instruction unit that stops the supply of the electric energy by the supply control unit when a terminal voltage of the electricity storage unit becomes equal to or higher than a charge-stopping voltage set in advance and starts the supply of the electric energy by the supply control unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and an information acquisition unit that acquires, as charge information, information regarding a charge electric quantity charged to the electricity storage unit during each of the charge periods, wherein the instruction unit causes the supply control unit to supply the electric energy to the electricity storage unit during a charge-continuation period which starts from a force-in start timing based on a timing when charge information acquired by the information acquisition unit satisfies a judgment condition set in advance and which expires upon elapse of a charge-continuation time set in advance.

In addition, a storage battery charge control method according to an aspect of the present invention includes: an energy conversion step of converting natural energy to electric energy; a supply control step of controlling supply of the electric energy to an electricity storage unit; an instruction step of stopping the supply of the electric energy to the electricity storage unit when a terminal voltage of the electricity storage unit becomes equal to or higher than a charge-stopping voltage set in advance, and starting the supply of the electric energy to the electricity storage unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and an information acquisition step of acquiring, as charge information, information regarding a charge electric quantity charged to the electricity storage unit during each of the charge periods, wherein in the instruction step, the electric energy is supplied to the electricity storage unit during a charge-continuation period which starts from a force-in start timing based on a timing when charge information satisfies a judgment condition set in advance and which expires upon elapse of a charge-continuation time set in advance.

Brief Description of the Drawings

[Fig. 1] Fig. 1 is a block diagram showing an example of a power supply system using a storage battery charge control method according to a first embodiment of the present invention.

[Fig. 2] Fig. 2 is an explanatory diagram showing an example of a charge-discharge curve when charging a storage battery with the power supply system shown in Fig. 1.

[Fig. 3] Fig. 3 is a flow chart showing an example of a storage battery charge control method executed by the power supply systems shown in Figs. 1 and 7.

[Fig. 4] Fig. 4 is a flow chart showing an example of a storage battery charge control method executed by the power supply systems shown in Figs. 1 and 11.

[Fig. 5] Fig. 5 is a block diagram showing a modification of the power supply system shown in Fig. 1.

[Fig. 6] Fig. 6 is a flow chart showing a modification of the flow chart shown in Fig. 3.

[Fig. 7] Fig. 7 is a block diagram showing an example of a power supply system according to a second embodiment of the present invention.

[Fig. 8] Fig. 8 is an explanatory diagram showing an example of a charge-discharge curve when charging a storage battery with the power supply system shown in Fig. 7.

[Fig. 9] Fig. 9 is a flow chart showing an example of a storage battery charge control method executed by the power supply systems shown in Figs. 7 and 14.

[Fig. 10] Fig. 10 is a flow chart showing a modification of the flow chart shown in Fig. 9.

[Fig. 11] Fig. 11 is a block diagram showing an example of a power supply system according to a third embodiment of the present invention.

[Fig. 12] Fig. 12 is an explanatory diagram showing an example of a charge-discharge curve when charging a storage battery with the power supply system shown in Fig. 7.

[Fig. 13] Fig. 13 is a flow chart showing an example of a storage battery charge control method executed by the power supply system shown in Fig. 11.

[Fig. 14] Fig. 14 is a block diagram showing an example of a power supply system according to a fourth embodiment of the present invention.

[Fig. 15] Fig. 15 is an explanatory diagram showing an example of a charge-discharge curve when charging a storage battery with the power supply system shown in Fig. 14.

[Fig. 16] Fig. 16 is a flow chart showing an example of a storage battery charge control method executed by the power supply system shown in Fig. 14.

[Fig. 17] Fig. 17 is a block diagram showing an example of a power supply system according to a fifth embodiment of the present invention.

[Fig. 18] Fig. 18 is an explanatory diagram showing an example of a charge-discharge curve when charging a storage battery with the power supply system shown in Fig. 17.

[Fig. 19] Fig. 19 is a flow chart showing an example of a storage battery charge control method executed by the power supply system shown in Fig. 17.

[Fig. 20] Fig. 20 is a flow chart showing an example of a storage battery charge control method executed by the power supply system shown in Figs. 17 and 20.

[Fig. 21] Fig. 21 is a flow chart showing a modification of the flow chart shown in Fig. 19.

[Fig. 22] Fig. 22 is a block diagram showing an example of a power supply system according to a sixth embodiment of the present invention.

[Fig. 23] Fig. 23 is an explanatory diagram showing an example of a charge-discharge curve when charging a storage battery with the power supply system shown in Fig. 22.

[Fig. 24] Fig. 24 is a flow chart showing an example of a storage battery charge control method executed by the power supply system shown in Fig. 22.

Description of Embodiments

Power supply systems such as a solar cell or wind power generation are known which convert natural energy to electric energy and in which at least a part of the electric energy is charged to a battery and supplied to a load. High expectations are being placed on such power supply systems as independent power sources for remote islands and the like on which major energy sources such as hydroelectric power generation and thermal power generation are unavailable.

However, the aforementioned natural energy fluctuates in accordance with periodic or unexpected fluctuations of the natural environment. Therefore, there is a problem in that electric energy cannot be supplied from natural energy in a stable manner. Hereinafter, as an example of a power supply system that converts natural energy to electric energy, from the perspective of ease of description, a power supply system will be described which uses a solar cell to utilize and convert natural energy (sunlight) into electric energy.

In the case of a solar cell, electric power generation declines significantly when overcast, during rainy weather, and during periods with less sunshine such as sunrise and sunset as compared with sunny afternoons. If an electricity storage system is not configured to track such fluctuations in the natural environment, various inconveniences may occur. For example, if an electric quantity generated by photovoltaic power generation is significantly smaller than a nominal capacity of a storage battery, the storage battery cannot be sufficiently charged. Consequently, the storage battery is unable to supply sufficient electric energy to a load. In addition, since the electric quantity stored in the storage battery by charge is small, the storage battery is more likely to enter an overdischarged state. Therefore, there is a risk of progressive deterioration of the storage battery due to a longer period in which the storage battery is left in an overdischarged state. Conversely, if an electric quantity generated by photovoltaic power generation is significantly larger than the nominal capacity of the storage battery, there is a risk of deterioration of the storage battery due to overcharge.

In this light, desirably, various methods that take fluctuations in natural energy into consideration are introduced into a power supply system that combines power generation using natural energy such as photovoltaic power generation with a storage battery in order to control charge of the storage battery.

Hereafter, embodiments according to the present invention will be described with reference to the drawings. In the drawings, components denoted by same reference numerals represent same components and a description thereof will be omitted.

(First embodiment)

Fig. 1 is a block diagram showing an example of a power supply system using a storage battery charge control method according to a first embodiment of the present invention. Fig. 1 shows an example in which a solar cell panel 1 is used as an energy conversion unit that converts natural energy to electric energy. In addition, an example is shown in which a storage battery 10 is used as an electricity storage unit to which electric energy supplied from the energy conversion unit is charged and which discharges and supplies the electric energy to a load.

A power supply system 100 shown in Fig. 1 comprises the solar cell panel 1, a back flow-preventing diode 2, a control unit 3, the storage battery 10, a shunt resistor 13, a total voltage measurement terminal 14, and output terminals 101 and 102. In addition, the control unit 3 comprises a DC/DC converter 4, a PWM (Pulse Width Modulation) control unit 5, and a microcomputer unit 6. The microcomputer unit 6 is constituted by a charge control unit 7, a timer 8, and an A/D converter 9.

A high potential-side output terminal of the solar cell panel 1 is connected to an anode of the diode 2. A cathode of the diode 2 is connected to a high potential-side input terminal of the DC/DC converter 4. In addition, a low potential-side output terminal of the solar cell panel 1 is connected to a low potential-side input terminal of the DC/DC converter 4. Accordingly, power generated by the solar cell panel 1 is outputted to the DC/DC converter 4 via the diode 2.

A high potential-side output terminal of the DC/DC converter 4 is connected to a positive electrode terminal of the storage battery 10 via the shunt resistor 13. In addition, a connection point of the high potential-side output terminal of the DC/DC converter 4 and the shunt resistor 13 is connected to the output terminal 101. A low potential-side output terminal of the DC/DC converter 4 is connected to a negative electrode terminal of the storage battery 10 and to the output terminal 102.

For example, input terminals of a DC/AC converter 12 is connected to the output terminals 101 and 102. A load 11 is connected to output terminals of the DC/AC converter 12. Accordingly, a DC voltage outputted from the output terminals 101 and 102 is converted into an AC voltage by the DC/AC converter 12 and supplied to the load 11. Moreover, when the load 11 is a DC load, the load 11 may be directly connected to the output terminals 101 and 102 without providing the DC/AC converter 12, or a DC/DC converter may be used instead of the DC/AC converter 12.

For example, a voltage step-up ratio (output voltage/input voltage) between input and output of the DC/DC converter 4 varies according to a duty ratio of a PWM signal outputted from the PWM control unit 5. For example, when the duty ratio of the PWM signal increases, the voltage step-up ratio of the DC/DC converter 4 is increased to increase an output voltage of the DC/DC converter 4. When the output voltage of the DC/DC converter 4 increases, a current supplied to the storage battery 10 increases.

In addition, for example, when the duty ratio of the PWM signal decreases, the voltage step-up ratio of the DC/DC converter 4 is lowered to lower the output voltage of the DC/DC converter 4. When the output voltage of the DC/DC converter 4 decreases, a current supplied to the storage battery 10 decreases.

Furthermore, for example, when the duty ratio of the PWM signal becomes zero, the DC/DC converter 4 interrupts supply of current from the solar cell panel 1 to the storage battery 10.

Furthermore, when the DC/DC converter 4 has a large load current, even if an operation is performed to increase or reduce the voltage step-up ratio of the DC/DC converter 4, a voltage corresponding to the voltage step-up ratio may not be obtained as an actual output voltage. In such a case, an operation for increasing the voltage step-up ratio of the DC/DC converter 4 becomes an operation for increasing the output current of the DC/DC converter 4, and an operation for reducing the voltage step-up ratio of the DC/DC converter 4 becomes an operation for reducing the output current of the DC/DC converter 4.

The DC/DC converter 4 corresponds to an example of a supply control unit. Moreover, in the following description, it is assumed that no energy conversion loss occurs at the DC/DC converter 4 and at DC/DC converters 4a and 4b to be described later.

The PWM control unit 5 is constituted by, for example, a logic circuit, a pulse-forming network, and the like. The PWM control unit 5 generates a PWM signal that is a periodic pulse signal in accordance with a control signal outputted from the microcomputer unit 6, and outputs the PWM signal to the DC/DC converter 4.

For example, when a control signal instructing that the voltage step-up ratio be increased is outputted from the microcomputer unit 6, the PWM control unit 5 increases the duty ratio of the PWM signal, and when a control signal instructing that the voltage step-up ratio be reduced is outputted from the microcomputer unit 6, the PWM control unit 5 reduces the duty ratio of the PWM signal. In addition, when a control signal instructing that the charge be stopped is outputted from the microcomputer unit 6, the PWM control unit 5 sets the duty ratio of the PWM signal to zero or, in other words, outputs a low-level signal as the PWM signal.

Moreover, the PWM control unit 5 need not necessarily be provided, and operations of the DC/DC converter 4 need only be controllable in accordance with control signals outputted from the microcomputer unit 6.

For example, the storage battery 10 is constituted by a plurality of lead storage batteries connected in series. Moreover, the storage battery 10 is not limited to an example in which a plurality or lead storage batteries are connected in series. For example, the storage battery 10 may be constituted by connecting a plurality or lead storage batteries in parallel or by a plurality of lead storage batteries in a combination of series and parallel connections. In addition, the storage battery 10 may be constituted by a single lead storage battery.

The total voltage measurement terminal 14 outputs a voltage between both terminals of the storage battery 10 as a battery voltage Vb to the microcomputer unit 6.

The microcomputer unit 6 comprises, for example, a CPU (Central Processing Unit) that executes predetermined arithmetic processing, a nonvolatile ROM (Read Only Memory) that stores a predetermined control program and data, a RAM (Random Access Memory) that temporarily stores data, a timer 8, an A/D converter 9, and peripheral circuits thereof.

By executing the control program stored in the ROM, the CPU functions as the charge control unit 7. The charge control unit 7 corresponds to an example of an instruction unit. The timer 8 corresponds to an example of an information acquisition unit and a time measurement unit.

The A/D converter 9 converts a voltage between both ends of the shunt resistor 13 into a digital value. In addition, the A/D converter 9 outputs the digital value to the charge control unit 7 as data indicating a charge/discharge current value Ib that is a charge current value supplied from the solar cell panel 1 to the storage battery 10 and a discharge current value supplied from the storage battery 10 to the load 11. With the charge/discharge current value Ib, for example, a charge current of the storage battery 10 is represented by a positive sign, and a discharge current of the storage battery 10 is represented by a negative sign.

The A/D converter 9 converts the battery voltage Vb outputted from the total voltage measurement terminal 14 into a digital value. The A/D converter 9 then outputs the digital value to the charge control unit 7 as data indicating the battery voltage Vb.

For example, a charge-stopping voltage V1 and a charge-starting voltage V2 are stored in advance in the ROM. A charge efficiency of a lead storage battery changes according to a charge voltage. In consideration thereof, a charge voltage that enables the storage battery 10 to have a high charge efficiency is set as the charge-stopping voltage V1.

In addition, when the storage battery 10 is charged, sulfuric acid is generated around an electrode active material. Subsequently, when the charge stops, the sulfuric acid generated around the electrode active material diffuses. As the sulfuric acid diffuses, the battery voltage Vb drops gradually. For example, the battery voltage Vb that is experimentally obtained when the storage battery 10 is charged up to the charge-stopping voltage V1, the charge is subsequently stopped, and the battery voltage Vb then drops and reaches an approximately stable state is set as the charge-starting voltage V2.

For example, when a nominal voltage of the storage battery 10 is 12 V, the charge-stopping voltage V1 is preferably around 15 V and the charge-starting voltage V2 is preferably around 13 V to 14 V.

The charge control unit 7 continuously receives voltage data indicating the battery voltage Vb that rises when electric energy is supplied from the solar cell panel 1 (when entering a charge period). Subsequently, when the battery voltage Vb becomes equal to or higher than the charge-stopping voltage V1, the charge control unit 7 transmits a control signal that instructs the PWM control unit 5 to stop the charge.

Upon receiving the control signal that instructs the PWM control unit 5 to stop the charge, the PWM control unit 5 sets the duty ratio of a switching PWM signal to zero and outputs the switching PWM signal to the DC/DC converter 4. Consequently, the current from the solar cell panel 1 is interrupted by the DC/DC converter 4 and a suspension period begins. Even during the suspension period, the charge control unit 7 continuously receives voltage data indicating the battery voltage Vb. Subsequently, when the battery voltage Vb becomes equal to or higher than the charge-stopping voltage V1, the charge control unit 7 transmits a control signal that instructs the PWM control unit 5 to increase a voltage step-up ratio.

Upon receiving the control signal that instructs the PWM control unit 5 to increase the voltage step-up ratio, the PWM control unit 5 increases the duty ratio of the switching PWM signal and outputs the switching PWM signal to the DC/DC converter 4. Consequently, the current from the solar cell panel 1 is once again supplied to the storage battery 10 by the DC/DC converter 4 (a charge period begins). In this manner, charge (charge period) and suspension of the charge (suspension period) of the storage battery 10 are repeated between the charge-stopping voltage V1 and the charge-starting voltage V2.

On the other hand, the timer 8 repeatedly measures a duration of a charge period (a charge time T1) and a duration of an immediately-subsequent suspension period (a suspension time T2), and transmits the measured durations to the charge control unit 7 as time data. Based on the time data, the charge control unit 7 repeatedly calculates a ratio T1/T2 of the charge time T1 and the suspension time T2.

Fig. 2 is a diagram showing an example of a charge-discharge curve (battery voltage Vb, charge/discharge current value Ib) when charging the storage battery 10 with the power supply system 100 shown in Fig. 1. When the duration of a charge period (the charge time T1) and the duration of an immediately-subsequent suspension period (the suspension time T2) are collectively considered a single period, by repeating the period, the charge time T1 gradually becomes shorter and the suspension time T2 gradually becomes longer. For example, although the charge time T1 is longer than the suspension time T2 (T1 > T2, T1/T2 > 1) in an early state of a period, once the charge progresses to intermediate and late stages of the period, the charge time T1 becomes shorter than the suspension time T2 (T1 < T2, T1/T2 < 1). Therefore, the ratio T1/T2 of the charge time T1 and the suspension time T2 gradually becomes smaller.

Durations of the charge time T1 and the suspension time T2 approximately range between a few seconds to a maximum duration of around one minute.

With charge during a period in an early stage in which the ratio T1/T2 is large, the storage battery 10 reaches the charge-stopping voltage V1 in a short period of time. However, when charge progresses to periods in the intermediate and late stages, since a proportion of the suspension time T2 increases, an electric quantity that is charged during a single period decreases. In other words, the closer to the late stage of charge, the smaller the average electric quantity charged during a single period or, in other words, the electric quantity charged per unit time, and the lower the charge efficiency.

The charge control unit 7 does not transmit a control signal instructing the PWM control unit 5 to interrupt the current from the solar cell panel 1 even when a force-in start timing at which the battery voltage Vb equals the charge-stopping voltage V1 is reached during charge immediately following the ratio T1/T2 becoming equal to or lower than a predetermined judgment ratio Rj. At this point, the charge control unit 7 causes the DC/DC converter 4 to supply the current from the solar cell panel 1 to the storage battery 10. Hereinafter, charge that is executed starting at the force-in start timing and ending when a charge-continuation time T3 elapses will be referred to as force-in charge.

The timer 8 measures time elapsed from the force-in start timing as a measured time t. When the measured time t of the timer 8 equals the charge-continuation time T3, the charge control unit 7 transmits a control signal instructing the PWM control unit 5 to interrupt the current from the solar cell panel 1 and the series of charge is terminated.

While the judgment ratio Rj can be set arbitrarily, $0.1 \le Rj \le 10$ is desirable from the perspective of satisfying both of increasing a charge electric quantity per unit time until the series of charge is concluded and securing uniformity of an electric quantity actually charged to the storage battery 10 at the same time.

In addition, when the ratio T1/T2 falls below 1, the charge time T1 becomes shorter than the suspension time T2 in a single period and charge efficiency per unit time declines. In consideration thereof, the judgment ratio Rj is set to, for example, 1. Accordingly, since a transition is made to force-in charge when the ratio T1/T2 becomes equal to or lower than 1, a decline in charge efficiency due to a longer suspension time T2 can be alleviated.

Moreover, while an example has been shown in which the charge control unit 7 performs constant current charge by feedback control in a force-in charge mode (during a charge-continuation period), alternatively, a constant current circuit may be used to supply a force-in current value Ag to the storage battery 10.

In addition, while an example has been shown in which the DC/DC converter 4 is used as the supply control unit, instead of using the DC/DC converter 4 and the PWM control unit 5, a switching element such as a solid-state relay may be used as the supply control unit in place of the DC/DC converter 4. In place of the DC/DC converter 4, the switching element is connected between a connection point of the shunt resistor 13 and the output terminal 101, and the cathode of the diode 2. The charge control unit 7 may be arranged to turn on the switching element during a charge period, turn off the switching element during a suspension period, and turn on the switching element during a charge-continuation period.

In Fig. 1, while the storage battery 10 that is an electricity storage unit may be a lithium-ion rechargeable battery, a nickel-hydrogen storage battery, or the like, the storage battery 10 is more favorably a lead storage battery. In a lead storage battery, a discharge product (lead sulfate) generated at the positive and negative electrodes is susceptible to immobilization (fixation) due to a phenomenon referred to as sulfation. Therefore, accumulation of such a discharge product (lead sulfate) is desirably resolved before the immobilization (fixation) of the discharge product sets in.

According to the power supply system 100 shown in Fig. 1, by performing force-in charge until the charge-continuation time T3 elapses even after the storage battery 10 has accepted a predetermined charge electric quantity (even after the ratio T1/T2 becomes equal to or lower than the judgment ratio Rj), the accumulation of the discharge product can be resolved.

In particular, when the storage battery 10 is constituted by a plurality of lead storage batteries, unless force-in charge is performed, a phenomenon in which actually charged electric quantity varies among the individual lead storage batteries cannot be resolved and, as a result, there is a risk that cycle life characteristics of the storage battery 10 may deteriorate. However, according to the power supply system 100 shown in Fig. 1, by performing force-in charge, a variation in the actually charged electric quantity among the individual lead storage batteries is reduced.

Figs. 3 and 4 are flow charts showing an example of a storage battery charge control method executed by the power supply system 100 shown in Fig. 1. Hereinafter, the flow chart shown in Fig. 3 will be described in detail by collating the configuration of the power supply system 100 shown in Fig. 1. Moreover, in the following flow charts, steps denoted by a same step number indicate that a same operation is performed.

For example, when the solar cell panel 1 starts generating power in concurrence with sunrise or the like, in step S001, the charge control unit 7 starts charge of the storage battery 10 by transmitting a control signal instructing the PWM control unit 5 to increase the voltage step-up ratio. The PWM control unit 5 increases the duty ratio of the PWM signal to, for example, 100%, and outputs the PWM signal to the DC/DC converter 4. Consequently, the DC/DC converter 4 starts supply (charge) of electric energy from the solar cell panel 1 to the storage battery 10. As a result, the battery voltage Vb rises with the charge.

Moreover, in step S001, the charge control unit 7 and the PWM control unit 5 control the DC/DC converter 4 so that, in so far as the performance of the DC/DC converter 4 permits, power approximating 100% of the power generated by the solar cell panel 1 is outputted from the DC/DC converter 4 or, in other words, all of the power generated by the solar cell panel 1 is outputted from the DC/DC converter 4. Setting the duty ratio of the PWM signal to 100% exemplifies such control. For example, the charge control unit 7 may be arranged to monitor the charge/discharge current value Ib and to control the DC/DC converter 4 so that all of the power supplied from the solar cell panel 1 its outputted from the DC/DC converter 4 to achieve a maximum charge/discharge current value Ib. Alternatively, a maximum voltage step-up ratio executable by the DC/DC converter 4 may be instructed to cause the DC/DC converter 4 to output all of the power supplied from the solar cell panel 1.

Subsequently, in order to measure a charge time T1, the timer 8 measures an elapsed time from the start of charge as a measured time t (step S002).

Next, in step S003, the charge control unit 7 determines whether or not the battery voltage Vb equals or exceeds the charge-stopping voltage V1 ($Vb \geq V1$) based on voltage data outputted from the A/D converter 9 which indicates the battery voltage Vb. When $Vb < V1$ (NO in step S003), the charge control unit 7 returns to step S002 and continues the charge of the storage battery 10 and the measurement of the measured time t. On the other hand, when $Vb \geq V1$ (YES in step S003), the charge control unit 7 sets the measured time t of the timer 8 at the moment $Vb \geq V1$ is satisfied as the charge time T1 (step S004).

Next, the charge control unit 7 transmits a control signal that instructs the PWM control unit 5 to stop the charge. The PWM control unit 5 sets the duty ratio of the PWM signal to zero and outputs the PWM signal to the DC/DC converter 4. As a result, a current from the solar cell panel 1 to the storage battery 10 is interrupted and the charge is suspended (step S005).

Subsequently, in order to measure a suspension time T2, the timer 8 measures an elapsed time from the suspension of the charge as a measured time t (step S006).

In addition, when the charge of the storage battery 10 is suspended, sulfuric acid generated in a vicinity of the electrodes of the storage battery 10 by the charge is diffused throughout an electrolyte of the storage battery 10. As the sulfuric acid diffuses, the battery voltage Vb drops gradually.

Next, the charge control unit 7 determines whether or not the battery voltage Vb of the storage battery 10 during the suspension of the charge has reached the charge-starting voltage V2 (whether Vb ≤ V2 or not) based on voltage data outputted from the A/D converter 9 which indicates the battery voltage Vb (step S007). When Vb > V2 (NO in step S007), the charge control unit 7 returns to step S006 and continues the suspension of the charge and the measurement of the measured time t. On the other hand, when Vb ≤ V2 (YES in step S007), the charge control unit 7 sets the measured time t of the timer 8 at the moment Vb ≤ V2 is satisfied as the suspension time T2 (step S008).

Next, the charge control unit 7 determines whether or not the ratio T1/T2 of the charge time T1 and the suspension time T2 has reached the judgment ratio Rj (whether T1/T2 ≤ Rj or not) (step S009). When T1/T2 > Rj (NO in step S009), the charge control unit 7 returns to step S001 and repeats steps S001 to S009. On the other hand, when T1/T2 ≤ Rj (YES in step S009), the charge control unit 7 proceeds to step S010.

As described above, due to the operations in steps S001 to S009, as shown in Fig. 2, a pulsing charge current is supplied to the storage battery 10 during early, intermediate, and late stages of the charge to charge the storage battery 10.

Since operations in steps S010 and S011 shown in Fig. 4 are similar to the operations in steps S001 and S003, a description thereof will be omitted. When the battery voltage Vb equals or exceeds the charge-stopping voltage V1 (Vb ≥ V1) or, in other words, when the force-in start timing arrives (YES in step S011), the charge control unit 7 starts force-in charge (step S012). In one example, the same operation as in step S010 (S001) is performed in step S012.

Subsequently, the timer 8 measures an elapsed time from the force-in start timing as a measured time t (step S013).

The charge control unit 7 then determines whether or not the measured time t of the timer 8 has reached the charge-continuation time T3 indicating an end of the force-in charge (whether t ≥ T3 or not) (step S014). When t < T3 (NO in step S014), the charge control unit 7 returns to step S013 and continues force-in charge and the measurement of the measured time t. On the other hand, when t ≥ T3 (YES in step S014), the charge control unit 7 proceeds to step S015 and concludes the series of charge.

A lead storage battery exhibits a phenomenon referred to as sulfation in which lead sulfate in an advanced stage of crystallization accumulates as a discharge reaction product at the positive and negative electrodes. According to the force-in charge of steps S012 to S015, sulfation of the lead storage battery can be resolved.

Incidentally, unlike in the power supply system 100, when the storage battery 10 is charged by constant voltage charge in which a constant charge voltage is applied, sulfuric acid is constantly generated in the vicinity of the electrodes. Therefore, the sulfuric acid in the vicinity of the electrodes is not diffused and a sulfuric acid concentration in the vicinity of the electrodes remains high. Consequently, an impedance attributable to ionic migration in the electrolyte increases while a charge current decreases. A reduced charge current results in a longer charge time.

On the other hand, as in the case of the power supply system 100, when the storage battery 10 is charged using a pulsing charge current, sufficient ionic migration occurs in the electrolyte of the storage battery 10 during the suspension time T2. Therefore, sulfuric acid generated during the charge period diffuses during the suspension period and a sulfuric acid concentration in the vicinity of the electrodes declines. Accordingly, since factors that increase impedance such as a distribution of sulfuric acid concentration in the electrolyte can be eliminated, a charge reaction occurs more smoothly. As a result, charge can be performed using a relatively large current.

Therefore, by supplying a pulsing charge current to the storage battery 10 through steps S001 to S009, a total charge efficiency can be improved in comparison to a case where the storage battery 10 is charged by constant voltage charge. Once charge efficiency is improved, charge time can be easily reduced. In order to achieve such an effect, a difference between the charge-stopping voltage V1 and the charge-starting voltage V2 (V1-V2) is desirably set within a 1 to 10% range of the nominal voltage of the storage battery 10.

In addition, since charge can be repeated in a pulsing manner at a relatively large current value by appropriately setting the charge-stopping voltage V1 and the charge-starting voltage V2, charge of a predetermined quantity can be performed in a shorter period of time than in the constant voltage charge described above. Therefore, as long as the charge-continuation time T3 is appropriately set, the storage battery can be fully charged in a speedy and easy manner before a significant change occurs in the natural environment (for example, sundown).

Furthermore, as shown in Fig. 2, assuming that a single period starts when the charge is started, and ends when the suspension, which is started when the charge is stopped upon the storage battery 10 reaching the charge-stopping voltage V1, is cancelled (a next charge is started) upon the storage battery 10 reaching the charge-starting voltage V2 during the suspension, an electric quantity actually charged to the storage battery 10 decreases with each repeated period. Specifically, the charge time T1 gradually becomes shorter and the ratio T1/T2 of the charge time T1 and the suspension time T2 gradually becomes smaller.

The power supply system 100 takes advantage of this phenomenon, and when the ratio T1/T2 becomes equal to or lower than the judgment ratio Rj (YES in S009), the power supply system 100 determines that a predetermined electric quantity has actually been stored in the storage battery 10. In addition, using the state where the predetermined electric quantity is charged as a reference, a charge accuracy of the storage battery 10 can be improved by continuing the supply of electric energy until a charge time after the electric quantity stored in the storage battery 10 reaching the predetermined quantity becomes equal to the charge-continuation time T3 even when the storage battery 10 reaches the charge-stopping voltage V1 during charge immediately following the charge of the predetermined electric quantity.

Furthermore, when converting natural energy to electric energy, since the charge current fluctuates with changes in the natural environment, it is more difficult to add up and accurately grasp the electric quantity supplied to the storage battery 10 than in a case of a conventional pulse charge using a commercial power supply with a constant charge current. However, with the power supply system 100, by utilizing the fact that the ratio T1/T2 decreases with charge and that an added-up electric quantity actually charged to the storage battery 10 when the ratio T1/T2 becomes equal to the judgment ratio Rj is a predetermined quantity (approximately similar), a state of charge of the storage battery 10 before starting force-in charge can be made approximately uniform even when the charge current fluctuates with changes in the natural environment. Moreover, if the state of charge of the storage battery 10 before starting force-in charge can be made approximately uniform, a final state of charge of the storage battery 10 after the force-in charge is concluded can also be made approximately uniform. In other words, the charge accuracy of the storage battery 10 can be improved.

At this point, in step S012, by continuing the charge started in step S010 without modification, an operation of the force-in charge may be made the same as the operation of charge started in step S001 or step S010 described above.

However, by executing constant current charge as described below as the force-in charge, a current value of the force-in charge can be set constant regardless of changes in the natural environment (in the case of photovoltaic power generation, changes in the amount of sunlight). Accordingly, a risk that a discrepancy from a desired state may occur due to a fluctuation in an overcharge electric quantity that is an electric quantity charged by force-in charge or, in other words, a risk of a failure to reach full charge by a slight margin due to insufficient overcharge or a risk of a slight deterioration of the storage battery due to excessive overcharge can be reduced.

Specifically, a more favorable mode of force-in charge is as follows. During the force-in charge that starts in step S012, the charge control unit 7 transmits a control signal to the PWM control unit 5 so that a current value of a charge current supplied from the solar cell panel 1 to the storage battery 10 becomes a constant force-in current value Ag by performing feedback control based on the charge/discharge current value Ib. Upon receiving the control signal, the PWM control unit 5 adjusts the duty ratio of a switching PWM signal and outputs the PWM signal to the DC/DC converter 4, adjusts the current from the solar cell panel 1 to the force-in current value Ag, and supplies the current to the storage battery 10.

Specifically, as force-in charge, the charge control unit 7 executes constant current charge using feedback control by transmitting a control signal that instructs a reduction of the voltage step-up ratio to the PWM control unit 5 when the charge/discharge current value Ib exceeds the force-in current value Ag, and transmitting a control signal that instructs an increase of the voltage step-up ratio to the PWM control unit 5 when the charge/discharge current value Ib falls below the force-in current value Ag.

For example, a current value capable of sufficiently charging the storage battery 10 to full charge without causing deterioration of the storage battery 10 when constant current charge is performed at the force-in current value Ag from a force-in start timing for a duration of the charge-continuation time T3 is experimentally obtained in advance and set as the force-in current value Ag.

While the solar cell panel 1 is presented as an energy conversion unit in Fig. 1, other configurations capable of converting natural energy to electric energy may be adopted such as wind power generation and tidal power generation. However, the solar cell panel 1 is advantageous in that changes in the natural environment are more easily predicted and reflected in a charge system. Specifically, by adopting a specification in which the storage battery 10 is charged in a concentrated manner during daytime (the storage battery 10 is discharged only during nighttime), a concern that an irregular discharge during charge makes it difficult to grasp the ratio T1/T2 can be eliminated.

In addition, by having the charge control unit 7 retrieve a weather forecast issued by the Meteorological Agency or the like as information, predict that, for example, a period of time required to reach the ratio T1/T2 is longer on cloudy days than on sunny days, transmit a control signal to the PWM control unit 5 so that the duty ratio of a switching PWM signal during force-in charge is higher on cloudy days than on sunny days, and increase the force-in current value Ag and shorten the charge-continuation time T3 compared to sunny days (so that overcharge is concluded in a short period of time while keeping an overcharge electric quantity constant), the series of charge can be concluded in approximately the same amount of time regardless of the weather.

Specifically, for example, a power supply system 100a shown in Fig. 5 can be adopted. The power supply system 100a shown in Fig. 5 comprises a microcomputer unit 6a in place of the microcomputer unit 6 in the power supply system 100.

The microcomputer unit 6a is constituted by a charge control unit 7a (instruction unit), a timer 8, an A/D converter 9, a clock unit 21, and a storage unit 22.

The clock unit 21 is a clock circuit that measures current time. A so-called RTC (Real Time Clock) can be used as the clock unit 21.

The storage unit 22 is constituted using a nonvolatile storage element such as an EEPROM (Electrically Erasable and Programmable Read Only Memory). In addition, the storage unit 22 stores a time of sunset. As the time of sunset, for example, an annual average time of sunset may be stored in advance in the storage unit 22, a time of sunset may be stored in the storage unit 22 by a user by inputting a time of sunset using an operating unit (not shown), times of sunset of a plurality of days may be received from the outside using communicating means (not shown) and stored in the storage unit 22, or a time of sunset may be stored in the storage unit 22 using other means.

With the exception of the following, the charge control unit 7a has a same configuration as the charge control unit 7.

At a force-in start timing (step S012), the charge control unit 7a calculates a period of time from a current time measured by the clock unit 21 until a time of sunset stored in the storage unit 22 as a remaining time Tr. Subsequently, when the remaining time Tr is shorter than the charge-continuation time T3, the charge control unit 7 performs force-in charge by constant current charge by causing the DC/DC converter to supply a charge current having a current value Ir expressed by the following formula (1) to the storage battery 10.

$$\text{Current value Ir} = (T3/Tr) \times Ag \qquad (1)$$

Accordingly, when the remaining time Tr is shorter than the charge-continuation time T3, since the charge current for force-in charge is increased so as to exceed the force-in current value Ag, an electric quantity that is approximately the same as when constant current charge at the force-in current value Ag is continued for the charge-continuation time T3 can be charged to the storage battery 10 by the force-in charge. Therefore, the risk of the solar cell panel 1 becoming incapable of generating power due to sunset before the conclusion of force-in charge and being unable to sufficiently charge the storage battery 10 can be alleviated.

Moreover, when the storage battery 10 is a lead storage battery, the charge-continuation time T3 favorably ranges between 0.1 to 4 hours. When the charge-continuation time T3 is shorter than 0.1 hours, there is a risk that sulfation of the storage battery 10 cannot be sufficiently resolved. Conversely, when the charge-continuation time T3 exceeds 4 hours, there is a risk that excessive overcharge may cause deterioration of cycle life characteristics. In addition, when exploiting photovoltaic power generation, considering the hours of sunlight in a day, a control specification in which the charge-continuation time T3 exceeds 4 hours is unrealistic.

Furthermore, when the storage battery 10 is a lead storage battery, the force-in current value Ag and the current value Ir favorably range between a 100 hour rate and a 10 hour rate. In this case, a 100 hour rate refers to a current value capable of charging the storage battery 10 from 0% SOC (State Of Charge) to 100% SOC in 100 hours, and a 10 hour rate refers to a current value capable of charging the storage battery 10 from 0% SOC to 100% SOC in 10 hours.

There is a tendency that the greater the charge current, the lower the charge efficiency of the storage battery 10 and energy other than the electric energy actually charged is used for electrolysis of the electrolyte. Therefore, when the force-in current value Ag or the current value Ir exceeds a 10 hour rate, there is a risk of deterioration of cycle life characteristics due to a decrease in the amount of the electrolyte of the storage battery 10 when the electrolyte is electrolyzed into gas and the gas is subsequently dissipated and reduced. Conversely, when the force-in current value Ag or the current value Ir is lower than a 100 hour rate, there is a risk that sulfation of the storage battery 10 cannot be sufficiently resolved.

An example has been shown in which a timing when, after a judgment condition that the ratio T1/T2 becomes equal to or lower than the predetermined judgment ratio Rj has been satisfied, the battery voltage Vb reaches the charge-stopping voltage V1 is considered a force-in start timing, and in which force-in charge is started at the force-in start timing. However, the timing at which force-in charge is started need not be strictly accurate. For example, the charge accuracy of the storage battery 10 is not substantially affected even when force-in charge is started at a timing preceding or trailing a timing at which the predetermined judgment condition is satisfied by one or two periods that comprise charge and suspension of the charge.

Therefore, the force-in start timing need only be a timing based on the timing at which the predetermined judgment condition is satisfied. In other words, the force-in start timing need only be a timing that is substantially the same as the timing at which the predetermined judgment condition is satisfied. For example, as the force-in start timing, the timing at which the predetermined judgment condition is satisfied may be used as-is, or a timing that trails the timing at which the predetermined judgment condition is satisfied by two repeated cycles or less may be used as the force-in start timing. The fact that the force-in start timing need only be substantially the same as the timing at which the predetermined judgment condition is satisfied and allows a certain amount of flexibility also applies to other embodiments described later.

For example, a configuration may be adopted in which a timing at which T1/T2 ≤ Rj is satisfied in step S009 in Fig. 3 (YES in step S009) is adopted as the force-in start timing and the steps S010 and S011 in Fig. 4 are not executed.

In addition, an example has been shown in which, in steps S004 to S009 in Fig. 3, a condition that the ratio T1/T2 of a charge time T1 measured immediately before a suspension time T2 measured by the timer 8 to the suspension time T2 becomes equal to or lower than a judgment ratio Rj is adopted as the predetermined judgment condition. However, for example, as shown in Fig. 6, by first executing steps S001, S003, and S005, then executing steps S006 to S008, and subsequently executing steps S001 to S004 and S009, a condition that the ratio T1/T2 of a charge time T1 measured by the timer 8 to a suspension time T2 measured immediately before the charge time T1 becomes equal to or lower than the judgment ratio Rj may be adopted as the predetermined judgment condition.

(Second embodiment)

Next, a power supply system using a storage battery charge control method according to a second embodiment of the present invention will be described. Fig. 7 is a block diagram showing an example of a power supply system according to the second embodiment of the present invention. A power supply system 100b shown in Fig. 7 differs from the power supply system 100 shown in Fig. 1 in a configuration of the microcomputer unit 6b. The microcomputer unit 6b differs from the microcomputer unit 6 in a configuration of a charge control unit 7b (instruction unit).

The charge control unit 7b differs from the charge control unit 7 in that, during force-in charge, pulse charge is performed in which a storage battery 10 is charged by supplying a pulsing charge current to the storage battery 10.

In addition to a charge-stopping voltage V1 and a charge-starting voltage V2, a pulse charge-stopping voltage V3 and a pulse charge-starting voltage V4 are stored in a ROM in advance. Respective voltage values of the charge-stopping voltage V1, the charge-starting voltage V2, the pulse charge-stopping voltage V3, and the pulse charge-starting voltage V4 are set so as to satisfy a relationship expressed as V2 < V1 ≤ V4 < V3.

For example, when a nominal voltage of the storage battery 10 is 12 V, preferably, the charge-stopping voltage V1 is around 15 V, the charge-starting voltage V2 is 13 to 14 V, the pulse charge-stopping voltage V3 is 16 to 17 V, and the pulse charge-starting voltage V4 is around (V3-0.5) to (V3-1.0) V.

After a force-in start timing, when a battery voltage Vb becomes equal to or higher than the pulse charge-stopping voltage V3, the charge control unit 7b transmits a control signal that instructs a PWM control unit 5 to stop the charge. Accordingly, the charge control unit 7b causes the DC/DC converter 4 to interrupt a charge current from a solar cell panel 1. Subsequently, when the battery voltage Vb becomes equal to or lower than the pulse charge-starting voltage V4, the charge control unit 7b transmits a control signal that instructs the PWM control unit 5 to increase a voltage step-up ratio, such as a control signal that causes a duty ratio of a PWM signal to be set to 100%. As a result, the charge current is supplied from the DC/DC converter 4 to the storage battery 10. By repeating the supply of charge current and the suspension of the supply thereof to the storage battery 10 in this manner, the charge control unit 7b executes force-in charge by pulse charge for a duration of a charge-continuation time T3 by causing the battery voltage Vb to rise and fall between the pulse charge-stopping voltage V3 and the pulse charge-starting voltage V4.

Since other components are similar to those of the power supply system 100 shown in Fig. 1, a description thereof will be omitted. Hereinafter, features of the present embodiment will be described.

Fig. 8 is a diagram showing an example of a charge-discharge curve (battery voltage Vb, charge/discharge current value Ib) when charging the storage battery 10 with the power supply system 100b shown in Fig. 7. Figs. 3 and 9 are flow charts showing an example of operations of the power supply system 100b shown in Fig. 7. Moreover, in the description of the aforementioned flow charts, processes denoted by same step numbers as the steps executed by the charge control units 7 and 7a are to be executed by the charge control unit 7b.

Since the steps S001 to S009 shown in Fig. 3 are similar to the operations of the power supply system 100, a description thereof will be omitted. In step S009, when T1/T2 ≤ Rj (YES in step S009), the charge control unit 7b proceeds to step S010 shown in Fig. 9. Since the steps S010 to S013 are similar to steps S010 to S013 shown in Fig. 4, a description thereof will be omitted.

Subsequently, in step S101, the charge control unit 7b determines whether or not the battery voltage Vb equals or exceeds the pulse charge-stopping voltage V3 (Vb ≥ V3) based on voltage data outputted from an A/D converter 9 which indicates the battery voltage Vb. When Vb < V3 (NO in step S101), the charge control unit 7b repeats step S101 to continue charge of the storage battery 10. On the other hand, when Vb ≥ V3 (YES in step S101), the charge control unit 7b transmits a control signal that instructs the PWM control unit 5 to stop the charge. The PWM control unit 5 sets the duty ratio of the PWM signal to zero and outputs the PWM signal to the DC/DC converter 4. As a result, a current from the solar cell panel 1 to the storage battery 10 is interrupted and the charge is suspended (step S102).

In addition, when the charge of the storage battery 10 is suspended, sulfuric acid generated in a vicinity of the electrodes of the storage battery 10 due to the charge is diffused throughout an electrolyte of the storage battery 10. As the sulfuric acid diffuses, the battery voltage Vb drops gradually.

Next, the charge control unit 7b determines whether or not the battery voltage Vb of the storage battery 10 during the suspension of the charge has reached the charge-starting voltage V4 (whether Vb ≤ V4 or not) based on voltage data outputted from the A/D converter 9 which indicates the battery voltage Vb (step S103). When Vb > V4 (NO in step S103), the charge control unit 7b repeats step S103 to continue suspension of the charge. On the other hand, when Vb ≤ V4 (YES in step S103), the charge control unit 7b proceeds to step S104.

The charge control unit 7b then determines whether or not a measured time t of the timer 8 has reached the charge-continuation time T3 (whether t ≥ T3 or not) (step S104). When t < T3 (NO in step S104), for example, the charge control unit 7b starts charge in the same manner as in step S010 (step S105) and once again repeats steps S101 to S104. Accordingly, pulse charge is executed as force-in charge. On the other hand, when t ≥ T3 (YES in step S104), a transition is made to step S106 and the series of charge is concluded.

As shown above in steps S012 to S106, by performing pulse charge as the force-in charge, the pulse charge-stopping voltage V3 that is higher than the charge-stopping voltage V1 can be applied to the storage battery 10 in a region close to full charge in a late stage of charge in order to restore crystallized lead sulfate to an easily-chargeable state and to increase an effect of resolving sulfation.

In this case, the charge started in step S010 may be continued as-is in step S012, or charge similar to step S010 can be executed in step S105.

However, for example, by using the following first and second methods to make a charge electric quantity that is charged during force-in charge approximately constant, an electric quantity that is charged by force-in charge can be set to a constant value regardless of changes in the natural environment (in the case of photovoltaic power generation, changes in the amount of sunlight). Accordingly, a risk that a discrepancy from a desired state may occur due to a fluctuation in an overcharge electric quantity that is charged by force-in charge or, in other words, a risk of a failure to reach full charge by a slight margin due to an insufficient overcharge electric quantity or a risk of a slight deterioration of the storage battery due to excessive overcharge can be reduced.

The first method is as follows. Fig. 10 is a flow chart for illustrating operations of the power supply system 100b according to the first method. First, after steps S010 and S011 are executed in the same manner as in the flow chart shown in Fig. 9, when a force-in start timing arrives in step S012b, the charge control unit 7b executes constant current charge by causing the DC/DC converter 4 to supply a constant force-in current value Ag to the storage battery 10 (step S 107).

Subsequently, since the steps S013 to S103 are similar to steps S013 to S103 shown in Fig. 9, a description thereof will be omitted. Then, in step S104b, when t < T3 (NO in step S104b), the charge control unit 7b once again repeats steps S107 to S104b.

In this case, a current value capable of sufficiently charging the storage battery 10 to full charge without causing deterioration of the storage battery 10 when pulse charge is performed from the force-in start timing for the duration of the charge-continuation time T3 by adopting the force-in current value Ag as a current value during charge (charge pulse) is experimentally obtained in advance and set as the force-in current value Ag.

Moreover, the microcomputer unit 6b may comprise a clock unit 21 and a storage unit 22 in the same manner as the power supply system 100a shown in Fig. 5, wherein when a remaining time Tr is shorter than the charge-continuation time T3 at the force-in start timing (step S012b) shown in Fig. 10, the charge control unit 7b may perform force-in charge by adopting the current value Ir expressed by formula (1) above as a charge pulse current value by causing the DC/DC converter to supply to the storage battery 10 a charge current having the current value Ir in step S107.

The second method is as follows. In the flow chart shown in Fig. 9, when the force-in start timing arrives (step S012), the charge control circuit 7b varies the pulse charge-starting voltage V4 in accordance with the charge/discharge current value Ib.

Specifically, the smaller the charge/discharge current value Ib, the more the pulse charge-starting voltage V4 is increased by the charge control circuit 7b in an attempt to approximate the pulse charge-stopping voltage V3. Accordingly, a suspension time can be relatively shortened, and a charge electric quantity is increased so as to compensate for a decrease in an electric quantity charged during a force-in charge due to the charge/discharge current value Ib being small.

In addition, the greater the charge/discharge current value Ib, the less the pulse charge-starting voltage V4 is reduced by the charge control circuit 7b in an attempt to separate the pulse charge-starting voltage V4 from the pulse charge-stopping voltage V3. Accordingly, a suspension time can be relatively extended so as to offset an increase in the electric quantity charged during the force-in charge due to the charge/discharge current value Ib being large.

Consequently, even when the charge current varies with changes in the natural environment (in the case of photovoltaic power generation, changes in the amount of sunlight), an electric quantity charged during a force-in charge period can be kept approximately constant.

Moreover, when the storage battery 10 is a lead storage battery, even if force-in charge is performed by pulse charge, the charge-continuation time T3 favorably ranges between 0.1 to 4 hours in the same manner as when performing force-in charge by constant current charge or the like. In addition, the force-in current value Ag and the current value Ir favorably range between a 100 hour rate and a 10 hour rate.

(Third embodiment)

Next, a power supply system using a storage battery charge control method according to a third embodiment of the present invention will be described. Fig. 11 is a block diagram showing an example of a power supply system according to the third embodiment of the present invention. A power supply system 104c shown in Fig. 11 differs from the power supply system 100 shown in Fig. 1 in a configuration of the microcomputer unit 6c.

The microcomputer unit 6c differs from the microcomputer unit 6 in that the microcomputer unit 6c also functions as a charge electric quantity measurement unit 15 (information acquisition unit) by, for example, executing a predetermined control program. In addition, a charge control unit 7c (instruction unit) differs from the charge control unit 7 in a judgment condition of a force-in charge start timing.

Since other components are similar to those of the power supply system 100 (100a, 100b) shown in Fig. 1, a description thereof will be omitted. Hereinafter, features of the present embodiment will be described.

During charge of a storage battery 10 by repetitive charge periods and suspension periods, the charge electric quantity measurement unit 15 measures a charge electric quantity charged to the electricity storage unit 10 during each charge period.

When a solar cell panel 1 starts generating power in concurrence with sunrise or the like for example, the charge control unit 7c causes a DC/DC converter 4 to start supplying a current to the storage battery 10. Subsequently, when a battery voltage Vb becomes equal to or higher than a charge-stopping voltage V1, the charge control unit 7c causes the supply of the current to the storage battery 10 by the DC/DC converter 4 to be stopped, and when a ratio Qn/Q2 of a charge electric quantity Qn measured by the charge electric quantity measurement unit 15 after a first charge period following the suspension of current supply to a charge electric quantity Q2 measured by the charge electric quantity measurement unit 15 during the first charge period following the suspension of current supply becomes equal to or lower than a judgment ratio Rq set in advance, the charge control unit 7c judges that a force-in charge start timing has arrived.

Fig. 12 is an explanatory diagram showing an example of a charge-discharge curve (battery voltage Vb, charge/discharge current value Ib) when charging the storage battery 10 with the power supply system 100c shown in Fig. 11. Figs. 13 and 4 are flow charts showing an example of operations of the power supply system 100c shown in Fig. 11. Moreover, in the description of the aforementioned flow charts, processes denoted by same step numbers as the steps executed by the charge control units 7, 7a, and 7b are to be executed by the charge control unit 7c.

The charge control unit 7c confirms whether or not power generation by the solar cell panel 1 has been started or, in other words, whether or not supply of electric energy from the solar cell panel 1 to the DC/DC converter 4 has been started (step S201). If power generation by the solar cell panel 1 has not been started (NO in step S201), the charge control unit 7c repeats step S201. On the other hand, when power generation by the solar cell panel 1 has been started in concurrence with sunrise or the like (YES in step S201), the charge control unit 7c proceeds to step S001.

For example, the charge control unit 7c may be arranged to: judge that power generation by the solar cell panel 1 has started upon receiving a signal indicating the start of power generation from the solar cell panel 1; judge that power generation by the solar cell panel 1 has started when an output voltage of the solar cell panel 1 rises from a voltage lower than a judgment voltage set in advance and exceeds the judgment voltage; or detect that power generation by the solar cell panel 1 has started using other means.

Subsequently, a step S001 similar to that in Fig. 3 is executed by the charge control unit 7c, charge of the storage battery 10 is performed by the DC/DC converter 4, and the charge control unit 7c proceeds to step S003. When the battery voltage Vb rises and satisfies Vb ≥ V1 (YES in step S003) or, in other words, when the battery voltage Vb first becomes equal to or higher than the charge-stopping voltage V1 after power generation by the solar cell panel 1 has been started, the charge of the storage battery 10 by the DC/DC converter 4 is suspended (step S005).

Subsequently, when the battery voltage Vb becomes equal to or lower than the charge-starting voltage V2 (YES in step S007), the charge control unit 7c starts charge to the storage battery 10 by the DC/DC converter 4 (step S001). In addition, the charge electric quantity measurement unit 15 measures the charge electric quantity charged to the storage battery 10 as a charge electric quantity Q2 (step S202). The charge electric quantity Q2 corresponds to a first charge electric quantity.

For example, the charge electric quantity measurement unit 15 may calculate a product of a charge/discharge current value Ib detected by a shunt resistor 13 and a charge time T1 measured by a timer 8 as a charge electric quantity, or calculate a charge electric quantity by adding up a charge/discharge current value Ib per unit time for a duration of a charge period.

Moreover, the charge electric quantity Q1 immediately following the start of power generation in step S201 fluctuates significantly depending on an immediately-previous discharge electric quantity and a state of charge of the storage battery 10 at the start of power generation. Therefore, the charge electric quantity Q2 is used without using the charge electric quantity Q1. Second and subsequent charge electric quantities Q2, ...,

Qn decrease at an approximately constant rate as periods comprising charge and suspension of the charge elapse. Therefore, the ratio Qn/Q2 can be used as an index that indicates a state of charge of the storage battery 10 after performing the charge of step S001c.

When the battery voltage Vb rises to satisfy Vb ≥ V1 (YES in step S003), the charge control unit 7c suspends the charge until Vb ≤ V2 is satisfied in steps S005 and S007 (until YES in step S007) and then makes a transition to step S001c. In step S001c, charge to the storage battery 10 is started by an operation similar to that in step S001.

The charge to the storage battery 10 is continued until Vb ≥ V1 is satisfied in step S003, and a charge electric quantity charged to the storage battery 10 during this charge period is measured by the charge electric quantity measurement unit 15 as a charge electric quantity Qn (step S203). The charge electric quantity Qn indicates a charge electric quantity in an n-th charge period from the start of power generation by the solar cell panel 1 (where n denotes any integer equal to or greater than 3). In addition, the charge electric quantity Qn corresponds to a second charge electric quantity.

When the battery voltage Vb rises to satisfy Vb ≥ V1 (YES in step S003), the charge control unit 7c suspends the charge until Vb ≤ V2 is satisfied in steps S005 and S007 (until YES in step S007) and then makes a transition to step S204.

In step S204, the charge control unit 7c judges whether or not the ratio Qn/Q2 of the charge electric quantity Q2 and the charge electric quantity Qn is equal to or below a judgment ratio Rq. When Qn/Q2 > Rq (NO in step S204), the charge control unit 7c returns to step S001c and repeats steps S001c to S204. On the other hand, when Qn/Q2 ≤ Rq (YES in step S204), the charge control unit 7c proceeds to step S010 in Fig. 4.

Thereafter, since operations of the force-in charge in steps S010 to S015 in Fig. 4 are as described earlier, a description thereof will be omitted.

As shown in Fig. 12, assuming that a single period starts when the charge is started, and ends when the suspension, which is started when the charge is stopped upon the storage battery 10 reaching the charge-stopping voltage V1, is cancelled (a next charge is started) upon the storage battery 10 reaching the charge-starting voltage V2 during the suspension, the charge electric quantities Q1, ..., Qn that are actually charged to the storage battery 10 decrease with each repeated period.

In this case, only the first charge electric quantity Q1 varies depending on a discharge electric quantity that had been immediately previously discharged by the storage battery 10. The second and subsequent charge electric quantities Q2, ..., Qn decrease in accordance with a state of the storage battery 10 at an approximately constant rate regardless of an immediately previous discharge electric quantity.

The ratio Qn/Q2 has a large value in periods in an early stage because the charge electric quantity Qn has a large value. However, since the charge electric quantity Qn becomes gradually smaller in periods in intermediate and late stages, the ratio Qn/Q2 also becomes gradually smaller. This tendency remains unchanged even if a charge current of each charge varies irregularly as shown in Fig. 12.

The power supply system 100c takes advantage of this phenomenon, and when the ratio Qn/Q2 becomes equal to or lower than the judgment ratio Rq (YES in S204), the power supply system 100c determines that a predetermined electric quantity has actually been stored in the storage battery 10. In addition, using the state where the predetermined electric quantity is charged as a reference, a charge accuracy of the storage battery 1.0 can be improved by continuing the supply of electric energy until a charge time after the storage battery 10 reaches the charge-stopping voltage V1 during an immediately subsequent charge and a force-in start timing (step S012) arrives becomes equal to or longer than the charge-continuation time T3 or, in other words, by continuing the supply of electric energy until a charge time after an electric quantity stored in the storage battery 10 approximately equals a predetermined quantity reaches the charge-continuation time T3.

Furthermore, when converting natural energy to electric energy, since the charge current fluctuates with changes in the natural environment, it is more difficult to add up and accurately grasp the electric quantity supplied to the storage battery 10 than in a case of conventional pulse charge using a commercial power supply with a constant charge current. However, with the power supply system 100c, by utilizing the fact that the ratio Qn/Q2 decreases with charge and that an added-up electric quantity actually charged to the storage battery 10 when the ratio Qn/Q2 becomes equal to the judgment ratio Rq is a predetermined quantity (approximately similar), a state of charge of the storage battery 10 before starting force-in charge can be made approximately uniform even when the charge current fluctuates with changes in the natural environment. Moreover, if the state of charge of the storage battery 10 before starting force-in charge can be made approximately uniform, a final state of charge of the storage battery 10 after the force-in charge is concluded can also be made approximately uniform. In other words, the charge accuracy of the storage battery 10 can be improved.

In the case of the power supply systems 100, 100a, and 100b, since a period combining the charge time T1 and the suspension time T2 has a duration of around 1 minute, changes in the natural environment such as the amount of sunlight within this period are small. Therefore, in the case of the power supply systems 100, 100a, and 100b, changes in the natural environment have only a small effect on a judgment accuracy of a force-in start timing. However, even with a duration of around one minute, there is a risk that a judgment accuracy of the force-in start timing may decline if a change occurs in the natural environment and the charge/discharge current value Ib fluctuates within the one-minute duration.

On the other hand, with the power supply system 100c, by judging a force-in start timing based on a ratio of charge electric quantity, an influence of changes in the natural environment (in the case of photovoltaic power generation, a fluctuation in the amount of sunlight) on a change in current values can be reduced and the charge accuracy of the storage battery 10 can be improved in comparison to judging a force-in start timing based on a charge time as in the case of the power supply systems 100, 100a, and 100b. In addition, if the charge accuracy is improved, by appropriately setting the charge-continuation time T3, the storage battery can be fully charged in a speedy and easy manner before a significant change occurs in the natural environment (for example, sundown).

While the judgment ratio Rq can be set ad libitum, $0.1 \leq Rq \leq 10$ is desirable from the perspective of satisfying both of increasing a charge electric quantity per unit time until the series of charge is concluded and securing uniformity of an electric quantity actually charged to the storage battery 10 at the same time.

Moreover, while an example using the charge electric quantity Q2 as the first charge electric quantity has been described, the first charge electric quantity may be any charge electric quantity other than the charge electric quantity Q that is affected by an immediately previous discharge electric quantity and the like. In other words, a charge electric quantity measured by the charge electric quantity measurement unit 15 during a first charge period after supply of a charge current from the DC/DC converter 4 is stopped by the charge control unit 7c due to the battery voltage Vb becoming equal to or higher than the charge-stopping voltage V1 may be used. For example, charge electric quantities Q3 to Q(n-1) may be used as the first charge electric quantity.

However, with each successive period, a difference between a charge electric quantity during that period and a charge electric quantity Qn (second charge electric quantity) that is detected in a state of charge in which a force-in start timing is to be detected becomes smaller. Therefore, a difference between the first charge electric quantity and the second electric quantity is greater when using the charge electric quantity Q2 as the first charge electric quantity than using charge electric quantities Q3 to Q(n-1) as the first charge electric quantity.

Accordingly, when the difference between the first charge electric quantity and the second charge electric quantity is small, a fluctuation in a ratio between the first charge electric quantity and the second charge electric quantity becomes smaller, and when a difference between the first charge electric quantity and the second charge electric quantity is greater, a change of the ratio between the first charge electric quantity and the second charge electric quantity due to the elapse of the periods is greater. Therefore, a detection accuracy of a force-in start timing can be improved when the charge electric quantity Q2 is used as the first charge electric quantity as compared to a case where charge electric quantities Q3 to Q(n-1) are used as the first charge electric quantity. In addition, when the detection accuracy of the force-in start timing increases, a charge accuracy of the storage battery 10 improves.

Furthermore, the microcomputer unit 6c may comprise a clock unit 21 and a storage unit 22 in the same manner as the microcomputer unit 6b shown in Fig. 5. Subsequently, in a similar manner to the charge control unit 7a, when the remaining time Tr is shorter than the charge-continuation time T3 at the force-in start timing, the charge control unit 7c may perform force-in charge by constant current charge by causing the DC/DC converter to supply a charge current having a current value Ir expressed by the formula (1) above to the storage battery 10.

(Fourth embodiment)

Next, a power supply system using a storage battery charge control method according to a fourth embodiment of the present invention will be described. Fig. 14 is a block diagram showing an example of a power supply system according to the fourth embodiment of the present invention. A power supply system 100d shown in Fig. 14 differs from the power supply system 100c shown in Fig. 11 in a configuration of a microcomputer unit 6d. The microcomputer unit 6d differs from the microcomputer unit 6c in a configuration of a charge control unit 7d (instruction unit).

The charge control unit 7d differs from the charge control unit 7c in that the charge control unit 7d performs pulse charge in a manner similar to the power supply system 100b during force-in charge.

Since other components are similar to those of the power supply system 100c shown in Fig. 11, a description thereof will be omitted. Hereinafter, features of the present embodiment will be described.

Fig. 15 is a diagram showing an example of a charge-discharge curve (battery voltage Vb, charge/discharge current value Ib) when charging a storage battery 10 with the power supply system 100d shown in Fig. 14. Figs. 16 and 9 are flow charts showing an example of operations of the power supply system 100d shown in Fig. 14. Moreover, in the description of the aforementioned flow charts, processes denoted by same step numbers as the steps executed by the charge control units 7, 7a, 7b, and 7c are to be executed by the charge control unit 7d.

Since processes of steps S201 to S204 shown in Fig. 16 are similar to those of steps S201 to S204 shown in Fig. 13, a description thereof will be omitted. Through operations of steps S201 to S204 shown in Fig. 16, by judging a force-in start timing based on a ratio Qn/Q2 in a similar manner to the power supply system 100c, the power supply system 100d is capable of improving a judgment accuracy of the force-in start timing and, in turn, improving a charge accuracy of the storage battery 10.

In addition, when a judgment condition for a force-in start timing is satisfied in step S204 (YES in step S204), the charge control unit 7d executes force-in charge by pulse charge by executing the steps S010 to S106 shown in Fig. 9. Due to the force-in charge (pulse charge) of steps S012 to S106 shown in Fig. 9, advantages similar to those of the power supply system 110b such as an increased effect of resolving sulfation can be obtained.

Moreover, in a similar manner to the power supply system 100b, the force-in current value Ag may be adopted as a current value of a charge pulse during force-in charge in the power supply system 100d. In addition, the power supply system 100d may be arranged so as to comprise a clock unit 21 and a storage unit 22 in a similar manner to the power supply system 100b, and when a remaining time Tr is shorter than a charge-continuation time T3, the power supply system 100d may perform force-in charge in which the current value Ir is adopted as a current value of a charge pulse.

(Fifth embodiment)

Next, a power supply system using a storage battery charge control method according to a fifth embodiment of the present invention will be described. Fig. 17 is a block diagram showing an example of a power supply system according to the fifth embodiment of the present invention. A power supply system 100e shown in Fig. 17 differs from the power supply system 100 shown in Fig. 1 in the following points.

Specifically, in addition to the components of the power supply system 100, the power supply system 100e comprises a storage battery 20, shunt resistors 13a and 13c, and total voltage measurement terminals 14a and 14c. Furthermore, the power supply system 100e comprises a control unit 3e instead of the control unit 3.

The control unit 3e comprises DC/DC converters 4a and 4b, PWM control units 5a and 5b, and a microcomputer unit 6e. The microcomputer unit 6e comprises a charge control unit 7e (instruction unit), a timer 8, and an A/D converter 9e.

Since other components are similar to those of the power supply system 100 shown in Fig. 1, a description thereof will be omitted. Hereinafter, features of the present embodiment will be described.

A cathode of a diode 2 is connected to a high potential-side input terminal of the DC/DC converter 4b. The shunt resistor 13a is connected between a low potential-side output terminal of a solar cell panel 1 and a low potential-side input terminal of the DC/DC converter 4b. A voltage between both terminals of the shunt resistor 13a is converted into a digital value by the A/D converter 9e. The digital value is outputted by the A/D converter 9e to the charge control unit 7e as data indicating a current value As of a current supplied from the solar cell panel 1 to the DC/DC converter 4b.

The total voltage measurement terminal 14a outputs a voltage between the input terminals of the DC/DC converter 4b or, in other words, an output voltage of the solar cell panel 1 to the A/D converter 9e as a generated voltage Vs. The A/D converter 9e outputs digital data indicating the generated voltage Vs to the charge control unit 7e. Accordingly, the charge control unit 7e is capable of acquiring both the current value As and the generated voltage Vs.

A high potential-side output terminal of the DC/DC converter 4b is connected to a positive electrode terminal of the storage battery 20 via the shunt resistor 13c. In addition, a connection point of the high potential-side output terminal of the DC/DC converter 4b and the shunt resistor 13c is connected to a high potential-side input terminal of the DC/DC converter 4a. A low potential-side output terminal of the DC/DC converter 4b is connected to a negative electrode terminal of the storage battery 20 and to a low potential-side input terminal of the DC/DC converter 4a. A high potential-side output terminal of the DC/DC converter 4a is connected to an output terminal 101, and a low potential-side output terminal of the DC/DC converter 4a is connected to an output terminal 102.

For example, the storage battery 20 is configured in a similar manner to the storage battery 10. Moreover, the storage battery 20 need only be a device capable of storing electric energy. For example, the storage battery 20 may be an electric double-layer capacitor or various capacitors. The storage battery 20 corresponds to an example of an auxiliary electricity storage unit.

The voltage between both terminals of the shunt resistor 13a is converted into a digital value by the A/D converter 9e. The digital value is outputted by the A/D converter 9e to the charge control unit 7e as data indicating a charge/discharge current value Ibb of the storage battery 20. With the charge/discharge current value Ibb, for example, a charge current of the storage battery 20 is represented as a positive current, and a discharge current of the storage battery 20 is represented as a negative current.

The total voltage measurement terminal 14c outputs a voltage between both terminals of the storage battery 20 as a battery voltage Vbb to the A/D converter 9e. The A/D converter 9e outputs digital data indicating the battery voltage Vbb to the charge control unit 7e.

As described above, in addition to a charge/discharge current value Ib and a battery voltage Vb in a similar manner to the A/D converter 9, the A/D converter 9e outputs data indicating the current value As, the generated voltage Vs, the charge/discharge current value Ibb, and the battery voltage Vbb to the charge control unit 7e.

The DC/DC converters 4a and 4b are respectively configured in a similar manner to the DC/DC converter 4. The PWM control units 5a and 5b are respectively configured in a similar manner to the PWM control unit 5. In addition, a voltage step-up ratio between input and output of the DC/DC converter 4a varies in accordance with a PWM signal outputted from the PWM control unit 5a, and a voltage step-up ratio between input and output of the DC/DC converter 4b varies in accordance with a PWM signal outputted from the PWM control unit 5b. The DC/DC converters 4a and 4b correspond to examples of a supply control unit.

The charge control unit 7e controls the voltage step-up ratio of the DC/DC converter 4a by outputting a control signal instructing the PWM control unit 5a to increase or reduce the voltage step-up ratio in order to cause the PWM control unit 5a to output a PWM signal in accordance with the control signal to the DC/DC converter 4a. In addition, the charge control unit 7e controls the voltage step-up ratio of the DC/DC converter 4b by outputting a control signal instructing the PWM control unit 5b to increase or reduce the voltage step-up ratio in order to cause the PWM control unit 5b to output a PWM signal in accordance with the control signal to the DC/DC converter 4b.

By controlling the voltage step-up ratios of the DC/DC converters 4a and 4b as described above, the charge control unit 7e respectively controls output voltages and output currents of the DC/DC converters 4a and 4b.

For example, the charge control unit 7e calculates a product of a value of the generated voltage Vs and the current value As during a charge period as a generated power value Ws. The generated power value Ws corresponds to an amount of electric energy per unit time that is supplied from the solar cell panel 1. In addition, the shunt resistor 13a, the total voltage measurement terminal 14a, and the A/D converter 9e correspond to an example of an energy detection unit.

Furthermore, for example, the charge control unit 7e calculates a product of the battery voltage Vb and the charge/discharge current value Ib as an amount of charging/discharging power Wb of the storage battery 10, and calculates a product of the battery voltage Vbb and the charge/discharge current value Ibb as an amount of charging/discharging power Wbb of the storage battery 20.

In addition, by controlling operations of the DC/DC converters 4a and 4b, the charge control unit 7e causes electric energy supplied from the solar cell panel 1 during the charge period described above to be charged to the storage battery 10, and causes electric energy supplied from the solar cell panel 1 during the suspension period described above to be charged to the storage battery 20.

Furthermore, as will be described later, when generated power of the solar cell panel 1 is lower than a power consumption of a load 11, the charge control unit 7e favorably preferentially discharges the storage battery 20 over the storage battery 10 to supply electric energy to the load 11 by having the DC/DC converters 4a and 4b preferentially execute supply of electric energy from the storage battery 20 to the load 11 (DC/AC converter 12) over supply of electric energy from the storage battery 10 to the load 11 (DC/AC converter 12).

Fig. 18 is an explanatory diagram showing an example of a charge-discharge curve (battery voltages Vb and Vbb, charge/discharge current value Ib) when charging the storage batteries 10 and 20 in the power supply system 100e shown in Fig. 17. Figs. 19 and 20 are flow charts showing an example of operations of the power supply system 100e shown in Fig. 17.

In the flow chart shown in Fig. 19, steps S001 and S005 in the flow chart shown in Fig. 3 have respectively been changed to steps S301 and S302. As for the other steps, processes executed by the charge control unit 7 in Fig. 3 are executed in Fig. 19 by the charge control unit 7e. Otherwise, the flow chart shown in Fig. 19 is similar to the flow chart shown in Fig. 3 and a description thereof will be omitted.

In step S301, the charge control unit 7e causes the DC/DC converters 4a and 4b to start charge of the storage battery 10 and, at the same time, suspend charge of the storage battery 20. In this manner, the charge period becomes a period in which the storage battery 10 is charged and charge of the storage battery 20 is suspended.

Specifically, for example, in step S301, the charge control unit 7e controls operations of the DC/DC converter 4b so that the charge/discharge current value Ibb of the storage battery 20 that is detected by the shunt resistor 13c becomes zero by increasing the voltage step-up ratio of the DC/DC converter 4b when the charge/discharge current value Ibb has a negative value and reducing the voltage step-up ratio of the DC/DC converter 4b when the charge/discharge current value Ibb has a negative value. Accordingly, the charge of the storage battery 20 is stopped.

In addition, the charge control unit 7e starts the charge of the storage battery 10 by controlling the DC/DC converter 4b so that the charge/discharge current value Ibb is maintained at zero by the DC/DC converter 4b and by having the DC/DC converter 4a supply a charge current to the storage battery 10. For example, in step S301, the charge control unit 7e controls operations of the DC/DC converter 4a so that the charge/discharge current value Ib detected by the shunt resistor 13 has a maximum value.

Accordingly, all of the electric energy supplied from the solar cell panel 1 to the control unit 3e is charged to the storage battery 10.

In step S302, the charge control unit 7e causes the DC/DC converters 4a and 4b to stop the charge of the storage battery 10 and, at the same time, start the charge of the storage battery 20. In this manner, the suspension period becomes a period in which the charge of the storage battery 10 is suspended and the storage battery 20 is charged.

Specifically, for example, the charge control unit 7e suspends the charge of the storage battery 10 by having the DC/DC converter 4a interrupt current output.

On the other hand, the charge control unit 7e starts the charge of the storage battery 20 by having the DC/DC converter 4b supply a charge current to the storage battery 20. In step S302, the charge control unit 7e causes the DC/DC converter 4b to output all of the power supplied from the solar cell panel 1. In order to have the DC/DC converter 4b output all of the power supplied from the solar cell panel 1, the charge control unit 7e need only control operations of the DC/DC converter 4b so that, for example, the charge/discharge current value Ibb detected by the shunt resistor 13c has a maximum value.

Accordingly, all of the electric energy supplied from the solar cell panel 1 to the control unit 3e is charged to the storage battery 20.

With the power supply systems 100, 100a, 100b, 100c, and 100d, since power generated by the solar cell panel 1 during a suspension period is not charged to the storage battery 10, an energy loss occurs. On the other hand, with the power supply system 100e, since power generated by the solar cell panel 1 during a suspension period is charged to the storage battery 20, loss of electric energy obtained based on natural energy can be mitigated.

Subsequently, in step S009, when $T1/T2 \leq Rj$ (YES in step S009), the charge control unit 7e proceeds to step S301 shown in Fig. 20.

In the flow chart shown in Fig. 20, step S010 in the flow chart shown in Fig. 4 has been changed to step S301. As for the other steps, processes executed by the charge control unit 7 in Fig. 4 are executed in Fig. 20 by the charge control unit 7e. Otherwise, the flow chart shown in Fig. 20 is similar to the flow chart shown in Fig. 4 and a description thereof will be omitted.

Moreover, with the power supply system 100e as a whole, in order to efficiently store electric energy supplied from the solar cell panel 1, charge to the storage battery 20 is favorably executed after completing a series of charge to the storage battery 10 in step S015 shown in Fig. 20. In this case, charge to the storage battery 20 is favorably completed when, for example, a battery voltage Vbb of the storage battery 20 becomes equal to or higher than an upper limit value Vu set in advance as a charge termination voltage (full charge voltage).

Moreover, as shown in Fig. 21, in a similar manner to the flow chart shown in Fig. 6, a condition that a ratio T1/T2 of a charge time T1 measured by the timer 8 to a suspension time T2 measured immediately before the charge time T1 becomes equal to or lower than a judgment ratio Rj may be used as the predetermined judgment condition. Furthermore, the steps S301 and S011 in Fig. 20 need not be executed.

Furthermore, in a similar manner to the charge control unit 7, during the force-in charge of step S012 and thereafter, the charge control unit 7e may perform constant current charge as the force-in charge by controlling the DC/DC converter 4a so that the charge/discharge current value Ib becomes the force-in current value Ag. In addition, in a similar manner to the charge control unit 7b, during the force-in charge, the charge control unit 7e may perform pulse charge in which the storage battery 10 is charged by supplying a pulsing charge current to the storage battery 10.

Moreover, when performing pulse charge during the force-in charge, the power supply system 100e may adopt the force-in current value Ag as a current value of a charge pulse in the force-in charge in a similar manner to the power supply system 100b. In addition, the power supply system 100e may be arranged so as to comprise a clock unit 21 and a storage unit 22 in a similar manner to the power supply system 100a, and when a remaining time Tr is shorter than a charge-continuation time T3, the power supply system 100e may perform force-in charge by setting a charge current of constant current charge to a current value Ir. Furthermore, the power supply system 100e may be arranged so as to comprise a clock unit 21 and a storage unit 22 in a similar manner to the power supply system 100b, and when a remaining time Tr is shorter than a charge-continuation time T3, the power supply system 100e may perform force-in charge in which the current value Ir is adopted as a current value of a charge pulse.

In addition, when performing constant current charge at the force-in current value Ag during force-in charge, the charge control unit 7e may have the DC/DC converter 4b supply the storage battery 20 with electric energy remaining after subtracting energy used by the DC/DC converter 4a when supplying a charge current having the force-in current value Ag to the storage battery 10 from electric energy supplied from the solar cell panel 1 to the DC/DC converter 4b.

Specifically, during force-in charge, along with causing the DC/DC converter 4a to execute constant current charge at the force-in current value Ag by feedback control based on the charge/discharge current value Ib, the charge control unit 7e causes the DC/DC converter 4b to output all power supplied from the solar cell panel 1.

Accordingly, during force-in charge, electric energy remaining after subtracting energy used by the DC/DC converter 4a when supplying a charge current having the force-in current value Ag to the storage battery 10 from electric energy supplied from the solar cell panel 1 to the DC/DC converter 4b is charged to the storage battery 20 by the DC/DC converter 4b.

Consequently, by performing constant current charge as the force-in charge, since excess electric energy supplied from the solar cell panel 1 can be charged to the storage battery 20 during force-in charge while improving charge accuracy of the storage battery 10, loss of electric energy obtained from natural energy can be reduced.

In addition, when performing pulse charge by adopting the force-in current value Ag as a current value of a charge pulse during force-in charge, during a charge pulse supply period, the charge control unit 7e may have the DC/DC converter 4b supply the storage battery 20 with electric energy remaining after subtracting energy used by the DC/DC converter 4a when supplying a charge current having the force-in current value Ag to the storage battery 10 from electric energy supplied from the solar cell panel 1 to the DC/DC converter 4b using a similar method to that of the force-in charge by constant current charge described above.

Moreover, when the battery voltage Vbb of the storage battery 20 reaches the upper limit value Vu, the charge control unit 7e interrupts the current to the storage battery 10b by adjusting an output voltage of the DC/DC converter 4b to a value equal to the upper limit value Vu. Accordingly, overcharge of the storage battery 20 can be prevented.

In force-in charge (step SO12), by increasing an output voltage of the DC/DC converter 4a while reducing an output voltage of the DC/DC converter 4b, force-in charge can also be performed by supplying electric energy from the storage battery 20 to the storage battery 10. However, when there is a predetermined output from the solar cell panel 1, it is favorable to preferentially supply electric energy from the solar cell panel 1 to the storage battery 10 without reducing the output voltage of the DC/DC converter 4b as described above because electric energy can be stored in an more efficient manner.

In force-in charge (step S012), when force-in charge cannot be completed by the output from the solar cell panel 1 alone, force-in charge to the storage battery 10 is automatically continued unless an output voltage of the DC/DC converter 4a is changed.

From the description provided above, unless there is a concern of overcharge of the storage battery 20 during the series of charge, it should be obvious that a method involving adjusting an output voltage of the DC/DC converter 4a while maintaining a maximum output voltage of the DC/DC converter 4b is most simple and effective.

In addition, when causing the DC/DC converter 4a to supply the storage battery 10 with a charge current having the force-in current value Ag during force-in charge, the charge control unit 7e may cause the DC/DC converter 4a to supply the electricity storage unit 10 with electric energy discharged from the storage battery 20 when the electric energy supplied from the solar cell panel 1 or, in other words, electric power generation of the solar cell panel 1 is lower than the energy necessary for supplying the charge current having the force-in current value Ag.

Specifically, during force-in charge, the charge control unit 7e controls the DC/DC converter 4b so that the charge/discharge current value Ibb detected by the shunt resistor 13c becomes maximum or, in other words, so that when the storage battery 20 is being charged, a charge current thereof becomes maximum, and when the storage battery 20 is being discharged, a charge current thereof becomes minimum, As a result, the charge control unit 7e causes the DC/DC converter 4b to take in all of the electric energy supplied from the solar cell panel 1 and output the electric energy to the DC/DC converter 4a and the storage battery 20.

In this manner, while causing the DC/DC converter 4b to output all of the electric energy supplied from the solar cell panel 1, the charge control unit 7e causes the DC/DC converter 4a to execute constant current charge at the force-in current value Ag by feedback control based on the charge/discharge current value Ib.

In this state, when the electric power generation of the solar cell panel 1 becomes less than the energy necessary for supplying a charge current having the force-in current value Ag, an amount of current taken in by the DC/DC converter 4a becomes greater than an amount of output current of the DC/DC converter 4b. As a result, the DC/DC converter 4b becomes unable to maintain its output voltage which then starts to decline. Subsequently, as the output voltage of the DC/DC converter 4b drops below an OCV (Open circuit voltage) of the storage battery 20, the storage battery 20 starts to discharge. Consequently, the DC/DC converter 4a is able to supply a charge current having the force-in current value Ag to the storage battery 20 based on the electric energy discharged from the storage battery 20.

In other words, during force-in charge, by causing the DC/DC converter 4a to execute constant current charge at the force-in current value Ag while causing the DC/DC converter 4b to output all of the electric energy supplied from the solar cell panel 1, when the electric power generation of the solar cell panel 1 is lower than the energy necessary for supplying a charge current having the force-in current value Ag, the charge control unit 7e can cause the DC/DC converter 4a to supply the electricity storage unit 10 with electric energy discharged from the storage battery 20.

For example, in a case where the energy conversion unit is a solar cell, by supplying electric energy stored in the storage battery 20 to the storage battery 10 when an amount of electric energy supplied from the energy conversion unit to the storage battery 10 becomes insufficient (or becomes depleted) due to a duration of the charge-continuation time T3 coinciding with cloudy weather or nighttime, the storage battery 10 can be placed in a favorable fully-charged state while hardly wasting natural energy stored in the storage battery 20. As a result, a cycle life of the power supply system itself can be improved.

In addition, in regards to an electric quantity necessary for fully charging the storage batteries 10 and 20 (electric quantity when fully charged), if an electric quantity E1 denotes an electric quantity necessary for fully charging the storage battery 10 and an electric quantity E2 denotes an electric quantity necessary for fully charging the storage battery 20, then the electric quantities E1 and E2 are desirably determined as follows. First, using statistical data of the amount of sunlight at an installation site of the solar cell panel 1, a minimum sunlight that is a minimum amount of sunlight and a maximum sunlight that is a maximum amount of sunlight among a year's worth of daily amounts of sunlight are obtained. Subsequently, an electric quantity that the solar cell panel 1 can generate using the minimum sunlight is obtained as an expected minimum conversion electric quantity EL. In addition, an electric quantity that the solar cell panel 1 can generate using the maximum sunlight is obtained as an expected maximum conversion electric quantity EU.

The electric quantity E1 is set approximately equal to the expected minimum conversion electric quantity EL (EL ≅ E1). In addition, an electric quantity E1+E2 that is necessary for fully charging the storage battery 10 and the storage battery 20 is set approximately equal to the expected maximum conversion electric quantity EU (EU ≅ E1+E2). Accordingly, an ideal charge system can be designed.

The power supply system 100e operates as follows when supplying power to the load 11. The charge control unit 7e monitors the charge/discharge current value Ib detected by the shunt resistor 13. When the charge/discharge current value Ib has a negative value, the charge control unit 7e determines that the DC/AC converter 12 has started to take in current from the output terminals 101 and 102 (a power output request has been made by the load 11) in order to supply power to the load 11.

Accordingly, the charge control unit 7e increases an output current of the DC/DC converter 4a by causing the DC/DC converter 4b to output all of the electric energy supplied from the solar cell panel 1, and by instructing the DC/DC converter 4a to increase a voltage step-up ratio thereof until the charge/discharge current value Ib becomes zero. The output current of the DC/DC converter 4a increased in this manner is outputted to the DC/AC converter 12 to supply power to the load 11.

Moreover, when electric energy is supplied to the load 11 in a situation where output from the solar cell panel 1 is less than a power consumption of the load 11 such as during cloudy weather, during sunset, or during nighttime, the electric energy is favorably supplied by preferentially discharging the storage battery 20 over the storage battery 10. The reason therefor is as follows. In the power supply system 100e shown in Fig. 17, unlike the storage battery 10, the storage battery 20 that is charged during the suspension time T2 of the storage battery 10 is never subjected to precise charge control. Therefore, if the storage battery 20 is almost fully charged upon the arrival of the suspension time T2 of the storage battery 10, there is a risk that the storage battery 20 may become overcharged.

In consideration thereof, the storage battery 20 discharges to the load 11 before the storage battery 10 when the load 11. requests the power supply system 100e to output power in a state where the amount of electric energy supplied from the solar cell panel 1 is insufficient such as during cloudy weather or during sunset, or when the load 11 requests the power supply system 100e to output power in a state where the solar cell panel 1 is substantially unable to supply electric energy such as during nighttime. Such an arrangement reduces the risk of overcharge of the storage battery 20 because the SOC of the storage battery 20 is sufficiently lowered upon the arrival of a next suspension time T2 of the storage battery 10 (when charge of the storage battery 20 starts). In addition, since there is a lower risk of having to stop the charge to the storage battery 20 in order to avoid overcharge of the storage battery 20 during the suspension time T2, a risk of wasting a part of the output from the solar cell panel 1 is reduced.

Specifically, as described above, when the power supply system 100e supplies power to the load 11, the charge control unit 7e causes the DC/DC converter 4b to output all of the electric energy supplied from the solar cell panel 1, and controls the output current of the DC/DC converter 4a so that the charge/discharge current value Ib becomes zero.

In this state, when the power (the amount of electric energy) supplied from the solar cell panel 1 becomes less than the power consumption of the load 11, an amount of current taken in by the DC/DC converter 4a becomes greater than an amount of output current of the DC/DC converter 4b and an output voltage of the DC/DC converter 4b decreases.

Subsequently, as the output voltage of the DC/DC converter 4b drops below the OCV of the storage battery 20, the storage battery 20 starts to discharge. Accordingly, the DC/DC converters 4a and 4b are able to supply power to the load 11 by preferentially starting discharge of the storage battery 20 without first discharging the storage battery 10.

In this manner, when the generated power of the solar cell panel 1 is lower than the power consumption of the load 11, the charge control unit 7e can supply electric energy to the load 11 by preferentially discharging the storage battery 20 over the storage battery 10.

Furthermore, when even a sum of power supplied from the solar cell panel 1 and power discharged from the storage battery 20 is less than the power consumption of the load 11, the output voltage of the DC/DC converter 4a declines. When the output voltage of the DC/DC converter 4a drops below the OCV of the storage battery 10, since the storage battery 10 starts to discharge, the power supplied from the solar cell panel 1 and the power discharged from the storage batteries 10 and 20 can be outputted to the DC/AC converter 12 as the power consumption of the load 11.

In addition, the charge control unit 7e monitors the battery voltage Vbb of the storage battery 20, and when the battery voltage Vbb becomes equal to or lower than a discharge lower limit voltage, the charge control unit 7e causes the DC/DC converter 4b to output all of the electric energy supplied from the solar cell panel 1, and controls the voltage step-up ratio of the DC/DC converter 4a to control a current taken in by the DC/DC converter 4a so that the battery voltage Vbb is kept equal to or above the discharge lower limit voltage. Accordingly, since discharge of the storage battery 20 is stopped, overdischarge of the storage battery 20 can be avoided.

Furthermore, the charge control unit 7e retrieves a weather forecast issued by the Meteorological Agency or the like as information, and predicts that, for example, a period of time required to reach the ratio T1/T2 is longer on cloudy days than on sunny days. In addition, the charge control circuit 7e issues an instruction for increasing the force-in current value Ag in the force-in charge mode for cloudy days in comparison to that of sunny days, and in accordance with the instruction, the PWM control unit 5b transmits a signal to the DC/DC converter 4b to lower the output voltage in comparison to that of sunny days. Consequently, since the current charged to the storage battery 20 becomes relatively smaller, a current distributed to the storage battery 10 becomes relatively greater.

Alternatively, on cloudy days, the charge control circuit 7e can easily conclude the series of charge in approximately the same amount of time regardless of the weather by having the PWM control unit 5b instruct the DC/DC converter 4b to output an output voltage of a same magnitude as an output voltage instructed by the PWM control unit 5a to the DC/DC converter 4a in order to increase a current to the storage battery 10 so as to relatively increase the current supplied to the storage battery 10 while interrupting the current to the storage battery 20.

(Sixth embodiment)

Next, a power supply system using a storage battery charge control method according to a sixth embodiment of the present invention will be described. Fig. 22 is a block diagram showing an example of a power supply system according to the sixth embodiment of the present invention. A power supply system 100f shown in Fig. 22 differs from the power supply system 100e shown in Fig. 17 in that a microcomputer unit 6f comprises a charge electric quantity measurement unit 15 similar to that of the power supply system 100c and that a charge control unit 7f (instruction unit) judges a force-in start timing based on a ratio of charge electric quantities in a similar manner to the charge control unit 7c.

Since other components are similar to those of the power supply system 100e shown in Fig. 17, a description thereof will be omitted. Hereinafter, features of the present embodiment will be described.

Fig. 23 is an explanatory diagram showing an example of a charge-discharge curve (battery voltages Vb and Vbb, charge/discharge current value Ib) when charging the storage batteries 10 and 20 in the power supply system 100f shown in Fig. 22. Figs. 24 and 20 are flow charts showing an example of operations of the power supply system 100f shown in Fig. 22. Moreover, in the description of the aforementioned flow charts, processes denoted by same step numbers as the steps executed by the charge control units 7, 7a, 7b, 7c, 7d, and 7e are to be executed by the charge control unit 7f.

In the flow chart shown in Fig. 24, steps S001, S005, and S001c in the flow chart shown in Fig. 13 have respectively been changed to steps S301, S302, and S301f. In addition, operations in steps S301 and S301f in Fig. 24 are similar to that of step S301 shown in Fig. 21, and an operation in step S302 in Fig. 24 is similar to that of step S302 shown in Fig. 21. Since other steps in Fig. 24 are similar to the flow chart shown in Fig. 13, a description thereof will be omitted.

As described above, in regards to operations of steps S201 and thereafter and up to performing a judgment of a force-in start timing in step S204, the power supply system 100f is capable of improving a judgment accuracy of the force-in start timing in a similar manner to the power supply system 100c, and reducing loss of electric energy obtained based on natural energy in a similar manner to the power supply system 100e.

In addition, by executing force-in charge similar to that performed by the power supply systems 100, 100a, and 100b, the power supply system 100f is capable of improving a charge accuracy of the storage battery 10.

Furthermore, in a similar manner to the charge control unit 7, during the force-in charge of step S012 and thereafter in Fig. 20, the charge control unit 7f may perform constant current charge as the force-in charge by controlling the DC/DC converter 4a so that the charge/discharge current value Ib becomes the force-in current value Ag.

In addition, when performing constant current charge at the force-in current value Ag during the force-in charge, in a similar manner to the charge control unit 7e, the charge control unit 7f may have the DC/DC converter 4b supply the storage battery 20 with electric energy remaining after subtracting energy used by the DC/DC converter 4a when supplying a charge current having the force-in current value Ag to the storage battery 10 from electric energy supplied from the solar cell panel 1 to the DC/DC converter 4b.

Furthermore, when causing the DC/DC converter 4a to supply the storage battery 10 with a charge current having the force-in current value Ag during the force-in charge, in a similar manner to the charge control unit 7e, the charge control unit 7f may cause the DC/DC converter 4a to supply the electricity storage unit 10 with electric energy discharged from the storage battery 20 when the electric energy supplied from the solar cell panel 1 or, in other words, electric power generation of the solar cell panel 1 is lower than the energy necessary for supplying the charge current having the force-in current value Ag.

In addition, in a similar manner to the charge control unit 7b, during the force-in charge, the charge control unit 7f may perform pulse charge in which the storage battery 10 is charged by supplying a pulsing charge current to the storage battery 10.

Furthermore, when performing pulse charge during the force-in charge, the charge control unit 7f may adopt the force-in current value Ag as a current value or a charge pulse during the force-in charge in a similar manner to the power supply system 100b.

In addition, when performing pulse charge by adopting the force-in current value Ag as a current value of a charge pulse during force-in charge, during a charge pulse supply period, the charge control unit 7f may have the DC/DC converter 4b supply the storage battery 20 with electric energy remaining after subtracting energy used by the DC/DC converter 4a when supplying a charge current having the force-in current value Ag to the storage battery 10 from electric energy supplied from the solar cell panel 1 to the DC/DC converter 4b using a similar method to that of the charge control unit 7e.

Furthermore, the power supply system 100f may be arranged so as to comprise a clock unit 21 and a storage unit 22 in a similar manner to the power supply system 100a, and when a remaining time Tr is shorter than a charge-continuation time T3, the power supply system 100f may perform force-in charge by setting a charge current of constant current charge to the force-in current value Ag. Moreover, the power supply system 100f may be arranged so as to comprise a clock unit 21 and a storage unit 22 in a similar manner to the power supply system 100b, and when a remaining time Tr is shorter than a charge-continuation time T3, the power supply system 100f may perform force-in charge in which the current value Ir is adopted as a current value of a charge pulse.

Specifically, a power supply system according to an aspect of the present invention includes: an energy conversion unit that converts natural energy to electric energy; an electricity storage unit that stores electric energy supplied from the energy conversion unit; a supply control unit that controls supply of the electric energy from the energy conversion unit to the electricity storage unit; an instruction unit that stops the supply of the electric energy by the supply control unit when a terminal voltage of the electricity storage unit becomes equal to or higher than a charge-stopping voltage set in advance and starts the supply of the electric energy by the supply control unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and an information acquisition unit that acquires, as charge information, information regarding a charge electric quantity charged to the electricity storage unit during each of the charge periods, wherein the instruction unit causes the supply control unit to supply the electric energy to the electricity storage unit during a charge-continuation period which starts from a force-in start timing based on a timing when charge information acquired by the information acquisition unit satisfies a judgment condition set in advance and which expires upon elapse of a charge-continuation time set in advance.

In addition, a storage battery charge control method according to an aspect of the present invention includes: an energy conversion step of converting natural energy to electric energy; a supply control step of controlling supply of the electric energy to an electricity storage unit; an instruction step of stopping the supply of the electric energy to the electricity storage unit when a terminal voltage of the electricity storage unit becomes equal to or higher than a charge-stopping voltage set in advance, and starting the supply of the electric energy to the electricity storage unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and an information acquisition step of acquiring, as charge information, information regarding a charge electric quantity charged to the electricity storage unit during each of the charge periods, wherein in the instruction step, the electric energy is supplied to the electricity storage unit during a charge-continuation period which starts from a force-in start timing based on a timing when charge information satisfies a judgment condition set in advance and which expires upon elapse of a charge-continuation time set in advance.

According to this configuration, when a terminal voltage of the electricity storage unit becomes equal to or higher than a charge-stopping voltage, supply of electric energy converted from natural energy to the electricity storage unit is stopped, and when the terminal voltage of the electricity storage unit becomes equal to or lower than a charge-starting voltage that is lower than the charge-stopping voltage, the supply of the electric energy to the electricity storage unit is started. Once the supply of the electric energy to the electricity storage unit is stopped, the terminals voltage of the electricity storage unit gradually falls. In addition, once the supply of the electric energy to the electricity storage unit is started, the terminal voltage of the electricity storage unit gradually rises. Therefore, a charge period during which the electric energy is supplied to the electricity storage unit and a suspension period during which the supply of the electric energy to the electricity storage unit is stopped are alternately repeated.

In addition, the further charge of the electricity storage unit progresses, the less the charge electric quantity charged to the electricity storage unit during a charge period. Therefore, the charge electric quantity charged to the electricity storage unit during each charge period has a correlation with a state of charge of the electricity storage unit.

In consideration thereof, the information acquisition unit acquires information regarding a charge electric quantity charged to the electricity storage unit during each charge period as charge information. Subsequently, the instruction unit causes the supply control unit to supply the electric energy to the electricity storage unit during a charge-continuation period which starts from a force-in start timing based on a timing when charge information satisfies a judgment condition set in advance and which expires upon elapse of a charge-continuation time set in advance. As a result, a state of charge of the electricity storage unit at the force-in start timing becomes approximately constant. Therefore, since the instruction unit is able to start charge for a charge-continuation time set in advance from an approximately constant state of charge by causing the supply control unit to supply electric energy to the electricity storage unit for a duration of the charge-continuation time that starts from the force-in start timing, a charge accuracy of a storage battery can be easily improved.

In addition, favorably, the information acquisition unit is a time measurement unit which measures a length of each charge period as a charge time and which measures a length of each suspension period as a suspension time, the instruction unit uses the charge time as the charge information, and the judgment condition is that a ratio of a charge time measured by the time measurement unit immediately before a suspension time measured by the time measurement unit to the suspension time becomes equal to or lower than a judgment ratio set in advance.

The charge time has a correlation with a charge electric quantity charged to the electricity storage unit during each charge period. Therefore, the information acquisition unit acquires each charge time as charge information. In addition, the further charge of the electricity storage unit progresses, the smaller the ratio of a charge time measured immediately before a suspension time to the suspension time. Therefore, by setting a judgment condition that the ratio of a charge time measured immediately before a suspension time to the suspension time becomes equal to or lower than a judgment ratio set in advance, a state of charge of the electricity storage unit at a force-in start timing becomes approximately constant. Furthermore, measuring a charge time and a suspension time is easier than actually measuring a charge electric quantity charged to the electricity storage unit during each charge period. Accordingly, since the instruction unit is able to start charge for a charge-continuation time from an approximately constant state of charge, a charge accuracy of a storage battery can be easily improved.

Alternatively, the information acquisition unit may be a time measurement unit which measures a length of each charge period as a charge time and which measures a length of each suspension period as a suspension time, the instruction unit may use each charge time as the charge information, and the judgment condition may be that a ratio of a charge time measured by the time measurement unit to a suspension time measured by the time measurement unit immediately before the charge time becomes equal to or lower than a judgment ratio set in advance.

According to this configuration, the charge time has a correlation with a charge electric quantity charged to the electricity storage unit during each charge period. Therefore, the information acquisition unit acquires each charge time as charge information. In addition, the further charge of the electricity storage unit progresses, the smaller the ratio of a charge time to a suspension time measured immediately before the charge time. Therefore, by setting a judgment condition that the ratio of a charge time to a suspension time measured immediately before the charge time becomes equal to or lower than a judgment ratio set in advance, a state of charge of the electricity storage unit at a force-in start timing becomes approximately constant. Accordingly, since the instruction unit is able to start the charge for a charge-continuation time from an approximately constant state of charge, a charge accuracy of a storage battery can be easily improved.

Furthermore, favorably, the information acquisition unit is a charge electric quantity measurement unit which measures a charge electric quantity charged to the electricity storage unit during each charge period, the instruction unit uses each charge electric quantity as the charge information, and the judgment condition is that a ratio of a second charge electric quantity to a first charge electric quantity becomes equal to or lower than a judgment ratio set in advance, the first charge electric quantity being a charge electric quantity measured by the charge electric quantity measurement unit during a first charge period after the supply of the electric energy from the supply control unit is stopped by the instruction unit due to a terminal voltage of the electricity storage unit becoming equal to or higher than the charge-stopping voltage, and the second charge electric quantity being a charge electric quantity measured by the charge electric quantity measurement unit during a charge period subsequent to the first charge period.

According to this configuration, the charge electric quantity measurement unit that is an information acquisition unit measures a charge electric quantity charged to the electricity storage unit during each charge period as charge information. In addition, the further charge of the electricity storage unit progresses, the less the charge electric quantity charged to the electricity storage unit during a charge period. Therefore, by using a judgment condition that the ratio of the second charge electric quantity that is a charge electric quantity measured after the first charge electric quantity described above to the first charge electric quantity becomes equal to or lower than a judgment ratio set in advance, a state of charge of the electricity storage unit at a force-in start timing becomes approximately constant. Furthermore, even when a current supplied to the electricity storage unit fluctuates due to a fluctuation in natural energy, since a charge electric quantity charged to the electricity storage unit during a charge period does not fluctuate, a judgment accuracy of a force-in start timing can be improved by judging the force-in start timing based on a charge electric quantity. Accordingly, since the instruction unit is able to start charge for a charge-continuation time from an approximately constant state of charge, a charge accuracy of a storage battery can be easily improved.

In addition, favorably, the first charge electric quantity is a charge electric quantity that is measured by the charge electric quantity measurement unit during a first charge period after the start of the supply of the electric energy by the energy conversion unit and subsequent stopping by the instruction unit of the supply of the electric energy from the supply control unit due to a terminal voltage of the electricity storage unit becoming equal to or higher than the charge-stopping voltage for the first time among the respective charge periods.

According to this configuration, a charge electric quantity that is measured by the charge electric quantity measurement unit during a first charge period subsequent to the start of supply of electric energy by the energy conversion unit and the start of repetition of the suspension period and the charge period described above is used as the first charge electric quantity. Consequently, since a charge electric quantity charged during a charge period in an early stage of charge in which the charge electric quantity has not yet started to decline is used as the first charge electric quantity, a difference between the first charge electric quantity and the second charge electric quantity increases. In this manner, by judging a force-in start timing based on a ratio of the first charge electric quantity and the second charge electric quantity which significantly differ from each other, a judgment accuracy of the force-in start timing can be improved.

Furthermore, favorably, the instruction unit performs constant current charge by causing the supply control unit to supply a charge current having a force-in current value set in advance to the electricity storage unit for a duration of the charge-continuation period.

According to this configuration, even when electric energy supplied from the energy conversion unit fluctuates due to a fluctuation in natural energy, since the electricity storage unit is charged at a constant current for a duration of the charge-continuation period, an electric quantity charged to the electricity storage unit during the charge-continuation period becomes constant. As a result, a charge accuracy of the electricity storage unit is improved.

In addition, favorably, a clock unit that measures current time and a storage unit that stores a time of sunset are further provided, wherein the energy conversion unit is a solar cell, and the instruction unit calculates a period of time from the current time to the time of sunset as a remaining time, and performs, when the remaining time is shorter than the charge-continuation time, constant current charge by causing the supply control unit to supply the electricity storage unit with a charge current having a current value that is a multiplication value of a ratio of the charge-continuation time to the remaining time and the force-in current value.

According to this configuration, since a solar cell is used as the energy conversion unit, the solar cell becomes incapable of supplying electric energy after sunset. In consideration thereof, when the remaining time from the current time to the time of sunset is shorter than the charge-continuation time, by causing the supply control unit to supply the electricity storage unit with a charge current having a multiplication value of a ratio of the charge-continuation time to the remaining time and the force-in current value, the instruction unit is capable of charging the electricity storage unit before sunset with an electric quantity similar to when constant current charge at the force-in current value is performed for a duration of the charge-continuation time. As a result, a charge accuracy of the electricity storage unit is improved.

Furthermore, favorably, the instruction unit performs, for a duration of the charge-continuation period, pulse charge in which a pulsing charge current is supplied to the electricity storage unit by causing the supply of the electric energy by the supply control unit to be stopped when a terminal voltage of the electricity storage unit becomes equal to or higher than a pulse charge-stopping voltage that is higher than the charge-stopping voltage, and by causing the supply of the electric energy by the supply control unit to be started when a terminal voltage of the electricity storage unit becomes equal to or lower than a pulse charge-starting voltage which is lower than the pulse charge-stopping voltage and which is equal to or higher than the charge-stopping voltage.

According to this configuration, for a duration of the charge-continuation period, pulse charge is performed by the supply of a pulsing charge current to the electricity storage unit at a pulse voltage equal to or higher than a pulse charge-stopping voltage that is higher than the charge-stopping voltage. In this manner, by pulse-charging the electricity storage unit during the charge-continuation period, a charge efficiency during the charge-continuation period is improved.

In addition, favorably, a clock unit that measures current time and a storage unit that stores a time of sunset are further provided, wherein the energy conversion unit is a solar cell, and the instruction unit calculates a period of time from the current time to the time of sunset as a remaining time, sets, when the remaining time is longer than the charge-continuation time, a current value of the pulsing charge current as a force-in current value set in advance, and sets, when the remaining time is shorter than the charge-continuation time, a current value of the pulsing charge current as a multiplication value of a ratio of the charge-continuation time to the remaining time and the force-in current value.

According to this configuration, since a solar cell is used as the energy conversion unit, the solar cell becomes incapable of supplying electric energy after sunset. In consideration thereof, when the remaining time from the current time to the time of sunset is shorter than the charge-continuation time, by causing the supply control unit to supply the electricity storage unit with a pulsing charge current having a multiplication value of a ratio of the charge-continuation time to the remaining time and the force-in current value, the instruction unit is capable of charging the electricity storage unit before sunset with an electric quantity similar to when pulse charge in which the force-in current value is adopted as the current value of the pulse current is performed for a duration of the charge-continuation time. As a result, a charge accuracy of the electricity storage unit is improved.

Furthermore, favorably, an auxiliary electricity storage unit that stores electric energy supplied from the energy conversion unit is further provided, wherein the supply control unit further controls the supply of the electric energy from the energy conversion unit to the electricity storage unit and the auxiliary electricity storage unit, and the instruction unit causes the supply control unit to supply the auxiliary electricity storage unit with electric energy supplied from the energy conversion unit during the suspension period.

According to this configuration, electric energy supplied from the energy conversion unit during the suspension period in which the electricity storage unit is not charged is charged to the auxiliary electricity storage unit. Consequently, since electric energy obtained from natural energy is charged to the auxiliary electricity storage unit without being wasted even during the suspension period, energy loss can be reduced.

In addition, favorably, the supply control unit further controls a supply of electric energy from the electricity storage unit and the auxiliary electricity storage unit to a load, and the instruction unit causes the supply control unit to preferentially execute the supply of electric energy from the auxiliary electricity storage unit to the load over the supply of electric energy from the electricity storage unit to the load when the electric energy supplied from the energy conversion unit is lower than a power consumption of the load.

The auxiliary electricity storage unit is charged during a suspension period regardless of a state of charge of the auxiliary electricity storage unit. Therefore, when the auxiliary electricity storage unit enters a suspension period in an almost fully-charged state, there is a risk that the auxiliary electricity storage unit may become overcharged. According to this configuration, since the supply of electric energy from the auxiliary electricity storage unit to the load is preferentially executed over the supply of electric energy from the electricity storage unit to the load when the electric energy supplied from the energy conversion unit is lower than a power consumption of the load, the auxiliary electricity storage unit has more discharge opportunities than the electricity storage unit. As a result, since the risk of the auxiliary electricity storage unit being charged to an almost fully-charged state is reduced, the risk that the auxiliary electricity storage unit may become overcharged is also reduced.

Furthermore, favorably, the instruction unit performs constant current charge by causing the supply control unit to supply a charge current having a force-in current value set in advance to the electricity storage unit for a duration of the charge-continuation period.

According to this configuration, even when electric energy supplied from the energy conversion unit fluctuates due to a fluctuation in natural energy, since the electricity storage unit is charged at a constant current for a duration of the charge-continuation period, an electric quantity charged to the electricity storage unit during the charge-continuation period becomes constant. As a result, a charge accuracy of the electricity storage unit is improved.

In addition, favorably, the instruction unit causes electric energy remained after subtracting electric energy for supplying a charge current having the force-in current value to the electricity storage unit from the electric energy supplied from the energy conversion unit to be charged to the auxiliary electricity storage unit for a duration of the charge-continuation period.

According to this configuration, even when electric energy that exceeds electric energy for supplying a charge current having the force-in current value to the electricity storage unit is supplied from the energy conversion unit during a charge-continuation period, excess electric energy is charged to the auxiliary electricity storage unit without being wasted. Accordingly, loss of electric energy obtained from natural energy can be reduced.

Furthermore, favorably, the instruction unit performs, for a duration of the charge-continuation period, pulse charge in which a pulsing charge current is supplied to the electricity storage unit by causing the supply of the electric energy by the supply control unit to be stopped when a terminal voltage of the electricity storage unit becomes equal to or higher than a pulse charge-stopping voltage that is higher than the charge-stopping voltage, and by causing the supply control unit to supply a charge current having a force-in current value set in advance to the electricity storage unit when a terminal voltage of the electricity storage unit becomes equal to or lower than a pulse charge-starting voltage which is lower than the pulse charge-stopping voltage and which is equal to or higher than the charge-stopping voltage.

According to this configuration, for a duration of the charge-continuation period, pulse charge is performed by the supply of a pulse current having the force-in current value to the electricity storage unit at a pulse voltage equal to or higher than a pulse charge-stopping voltage that is higher than the charge-stopping voltage. In this manner, by pulse-charging the electricity storage unit during the charge-continuation period, a charge efficiency during the charge-continuation period is improved.

In addition, favorably, the instruction unit causes electric energy remained after subtracting electric energy for supplying a charge current having the force-in current value to the electricity storage unit from the electric energy supplied from the energy conversion unit to be charged to the auxiliary electricity storage unit during a period in which a pulsing charge current is supplied to the electricity storage unit.

According to this configuration, even when electric energy that exceeds electric energy for supplying a charge current having the force-in current value to the electricity storage unit is supplied from the energy conversion unit during a period in which a pulsing charge current is supplied to the electricity storage unit, excess electric energy is charged to the auxiliary electricity storage unit without being wasted. Accordingly, loss of electric energy obtained from natural energy can be reduced.

Furthermore, favorably, the instruction unit causes, when causing the supply control unit to supply the electricity storage unit with a charge current having the force-in current value during the charge-continuation period, the supply control unit to supply the electric energy stored in the auxiliary electricity storage unit to the electricity storage unit if the electric energy supplied from the energy conversion unit is lower than the energy necessary for supplying the charge current having the force-in current value.

During a charge-continuation period, when the electric energy supplied from the energy conversion unit is lower than the energy necessary for supplying the charge current having the force-in current value, there is a risk that a charge accuracy of the electricity storage unit may decline due to an insufficient charge electric quantity. According to this configuration, when the electric energy supplied from the energy conversion unit is lower than the energy necessary for supplying the charge current having the force-in current value during a charge-continuation period, since a shortage of the electric energy supplied from the energy conversion unit can be compensated by supplying electric energy stored in the auxiliary electricity storage unit to the electricity storage unit, a charge accuracy of the electricity storage unit can be improved.

In addition, favorably, the energy conversion unit is a solar cell.

The solar cell is preferable as an energy conversion unit for converting sunlight that is natural energy to electric energy.

Furthermore, favorably, the storage battery is a lead storage battery.

A lead storage battery has a tendency that the further charge progresses, the smaller a charge electric quantity charged during the charge period. Therefore, a lead storage battery is preferable as the storage battery.

In addition, favorably, the charge-continuation time ranges from 0.1 hours to 4 hours.

By setting the charge-continuation time to a time ranging from 0.1 hours to 4 hours, a risk of excessive overcharge can be reduced while resolving sulfation of a lead storage battery.

Moreover, favorably, the storage battery is a lead storage battery, and the force-in current value is a current value ranging from a 100 hour rate to a 10 hour rate.

By setting the force-in current value to a current value ranging from a 100 hour rate to a 10 hour rate, a risk of electrolysis of an electrolyte of the lead storage battery into gas and subsequent dissipation and decrease of the gas can be reduced while resolving sulfation of the lead storage battery.

The present application claims priority to Japanese Patent Application No. 2009-275119, filed December 3, 2009, Japanese Patent Application No. 2009-281264, filed December 11, 2009, Japanese Patent Application No. 2010-008761, filed January 19, 2010, Japanese Patent Application No. 2010-009778 and Japanese Patent Application No. 2010-009779, filed January 20, 2010, and Japanese Patent Application No. 2010-021766, filed February 3, 2010, the entire contents of which are incorporated herein by reference.

It is to be understood that the specific embodiments or examples described in Description of Embodiments merely illustrate the technical contents of the present invention. As such, the present invention should not be interpreted narrowly only to such specific examples, and various modifications may be made without departing from the spirit of the invention and from the scope of the subjoined claims.

## INDUSTRIAL APPLICABILITY

A power supply system and a storage battery charge control method utilizing the present invention are extremely useful in the effective utilization of natural energy and, in particular, in the generalization of an independent power supply that utilizes natural energy.

## Claims

**1.** A power supply system comprising:

an energy conversion unit that converts natural energy to electric energy;
an electricity storage unit that stores electric energy supplied from the energy conversion unit;
a supply control unit that controls supply of the electric energy from the energy conversion unit to the electricity storage unit;
an instruction unit that stops the supply of the electric energy by the supply control unit when a terminal voltage of the electricity storage unit becomes equal to or higher than a charge-stopping voltage set in advance and starts the supply of the electric energy by the supply control unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and

an information acquisition unit that acquires, as charge information, information regarding a charge electric quantity charged to the electricity storage unit during each of the charge periods, wherein

the instruction unit causes the supply control unit to supply the electric energy to the electricity storage unit during a charge-continuation period which starts from a force-in start timing based on a timing when charge information acquired by the information acquisition unit satisfies a judgment condition set in advance and which expires upon elapse of a charge-continuation time set in advance.

**2.** The power supply system according to claim 1, wherein
the information acquisition unit is a time measurement unit which measures a length of each charge period as a charge time and which measures a length of each suspension period as a suspension time,
the instruction unit uses the charge time as the charge information, and
the judgment condition is that a ratio of a charge time measured by the time measurement unit immediately before a suspension time measured by the time measurement unit to the suspension time becomes equal to or lower than a judgment ratio set in advance.

**3.** The power supply system according to claim 1, wherein
the information acquisition unit is a time measurement unit which measures a length of each charge period as a charge time and which measures a length of each suspension period as a suspension time,
the instruction unit uses each charge time as the charge information, and
the judgment condition is that a ratio of a charge time measured by the time measurement unit to a suspension time measured by the time measurement unit immediately before the charge time becomes equal to or lower than a judgment ratio set in advance.

**4.** The power supply system according to claim 1, wherein
the information acquisition unit is a charge electric quantity measurement unit which measures a charge electric quantity charged to the electricity storage unit during each charge period,
the instruction unit uses each charge electric quantity as the charge information, and
the judgment condition is that a ratio of a second charge electric quantity to a first charge electric quantity becomes equal to or lower than a judgment ratio set in advance, the first charge electric quantity being a charge electric quantity measured by the charge electric quantity measurement unit during a first charge period after the supply of the electric energy from the supply control unit is stopped by the instruction unit due to a terminal voltage of the electricity storage unit becoming equal to or higher than the charge-stopping voltage, and the second charge electric quantity being a charge electric quantity measured by the charge electric quantity measurement unit during a charge period subsequent to the first charge period.

**5.** The power supply system according to claim 4, wherein
the first charge electric quantity is a charge electric quantity that is measured by the charge electric quantity measurement unit during a first charge period after the start of the supply of the electric energy by the energy conversion unit and subsequent stopping by the instruction unit of the supply of the electric energy from the supply control unit due to a terminal voltage of the electricity storage unit becoming equal to or higher than the charge-stopping voltage for the first time among the respective charge periods.

**6.** The power supply system according to any one of claims 1 to 5, wherein
the instruction unit performs constant current charge by causing the supply control unit to supply a charge current having a force-in current value set in advance to the electricity storage unit for a duration of the charge-continuation period.

**7.** The power supply system according to claim 6, further comprising:

a clock unit that measures current time; and
a storage unit that stores a time of sunset, wherein
the energy conversion unit is a solar cell, and
the instruction unit calculates a period of time from the current time to the time of sunset as a remaining time, and performs, when the remaining time is shorter than the charge-continuation time, constant current charge by causing the supply control unit to supply the electricity storage unit with a charge current having a current value that is a multiplication value of a ratio of the charge-continuation time to the remaining time and the force-in current value.

**8.** The power supply system according to any one of claims 1 to 5, wherein

the instruction unit performs, for a duration of the charge-continuation period, pulse charge in which a pulsing charge current is supplied to the electricity storage unit by causing the supply of the electric energy by the supply control unit to be stopped when a terminal voltage of the electricity storage unit becomes equal to or higher than a pulse charge-stopping voltage that is higher than the charge-stopping voltage, and by causing the supply of the electric energy by the supply control unit to be started when a terminal voltage of the electricity storage unit becomes equal to or lower than a pulse charge-starting voltage which is lower than the pulse charge-stopping voltage and which is equal to or higher than the charge-stopping voltage.

**9.** The power supply system according to claim 8, further comprising:

a clock unit that measures current time; and
a storage unit that stores a time of sunset, wherein
the energy conversion unit is a solar cell, and
the instruction unit calculates a period of time from the current time to the time of sunset as a remaining time, sets, when the remaining time is longer than the charge-continuation time, a current value of the pulsing charge current as a force-in current value set in advance, and sets, when the remaining time is shorter than the charge-continuation time, a current value of the pulsing charge current as a multiplication value of a ratio of the charge-continuation time to the remaining time and the force-in current value.

**10.** The power supply system according to any one of claims 1 to 5, further comprising an auxiliary electricity storage unit that stores electric energy supplied from the energy conversion unit, wherein
the supply control unit further controls the supply of the electric energy from the energy conversion unit to the electricity storage unit and the auxiliary electricity storage unit, and
the instruction unit causes the supply control unit to supply the auxiliary electricity storage unit with electric energy supplied from the energy conversion unit during the suspension period.

**11.** The power supply system according to claim 10, wherein
the supply control unit further controls a supply of electric energy from the electricity storage unit and the auxiliary electricity storage unit to a load, and
the instruction unit causes the supply control unit to preferentially execute the supply of electric energy from the auxiliary electricity storage unit to the load over the supply of electric energy from the electricity storage unit to the load when the electric energy supplied from the energy conversion unit is lower than a power consumption of the load.

**12.** The power supply system according to claim 10 or 11, wherein
the instruction unit performs constant current charge by causing the supply control unit to supply a charge current having a force-in current value set in advance to the electricity storage unit for a duration of the charge-continuation period.

**13.** The power supply system according to claim 12, wherein
the instruction unit causes electric energy remained after subtracting electric energy for supplying a charge current having the force-in current value to the electricity storage unit from the electric energy supplied from the energy conversion unit to be charged to the auxiliary electricity storage unit for a duration of the charge-continuation period.

**14.** The power supply system according to claim 10 or 11, wherein
the instruction unit performs, for a duration of the charge-continuation period, pulse charge in which a pulsing charge current is supplied to the electricity storage unit by causing the supply of the electric energy by the supply control unit to be stopped when a terminal voltage of the electricity storage unit becomes equal to or higher than a pulse charge-stopping voltage that is higher than the charge-stopping voltage, and by causing the supply control unit to supply a charge current having a force-in current value set in advance to the electricity storage unit when a terminal voltage of the electricity storage unit becomes equal to or lower than a pulse charge-starting voltage which is lower than the pulse charge-stopping voltage and which is equal to or higher than the charge-stopping voltage.

**15.** The power supply system according to claim 14, wherein
the instruction unit causes electric energy remained after subtracting electric energy for supplying a charge current having the force-in current value to the electricity storage unit from the electric energy supplied from the energy conversion unit to be charged to the auxiliary electricity storage unit during a period in which a pulsing charge current is supplied to the electricity storage unit.

**16.** The power supply system according to any one of claims 12 to 15, wherein
the instruction unit causes, when causing the supply control unit to supply the electricity storage unit with a charge current having the force-in current value during the charge-continuation period, the supply control unit to supply the electric energy stored in the auxiliary electricity storage unit to the electricity storage unit if the electric energy supplied from the energy conversion unit is lower than the energy necessary for supplying the charge current having the force-in current value.

**17.** The power supply system according to any one of claims 1 to 6 and 8 to 16, wherein the energy conversion unit is a solar cell.

**18.** The power supply system according to any one of claims 1 to 17, wherein the storage battery is a lead storage battery.

**19.** The power supply system according to claim 18, wherein the charge-continuation time ranges from 0.1 to 4 hours.

**20.** The power supply system according to any one of claims 6, 7, 9, and 12 to 16, wherein
the storage battery is a lead storage battery, and
the force-in current value is a current value ranging from a 100 hour rate to a 10 hour rate.

**21.** A storage battery charge control method comprising:

an energy conversion step of converting natural energy to electric energy;
a supply control step of controlling supply of the electric energy to an electricity storage unit;
an instruction step of stopping the supply of the electric energy to the electricity storage unit when a terminal voltage of the electricity storage unit becomes equal to or higher than a charge-stopping voltage set in advance, and starting the supply of the electric energy to the electricity storage unit when the terminal voltage of the electricity storage unit becomes equal to or lower than a charge-starting voltage, which is lower than the charge-stopping voltage, in order to alternately repeat a charge period during which the electric energy is supplied to the electricity storage unit and a suspension period during which the supply of the electric energy to the electricity storage unit is stopped; and
an information acquisition step of acquiring, as charge information, information regarding a charge electric quantity charged to the electricity storage unit during each of the charge periods, wherein
in the instruction step, the electric energy is supplied to the electricity storage unit during a charge-continuation period which starts from a force-in start timing based on a timing when charge information satisfies a judgment condition set in advance and which expires upon elapse of a charge-continuation time set in advance.

FIG. 1

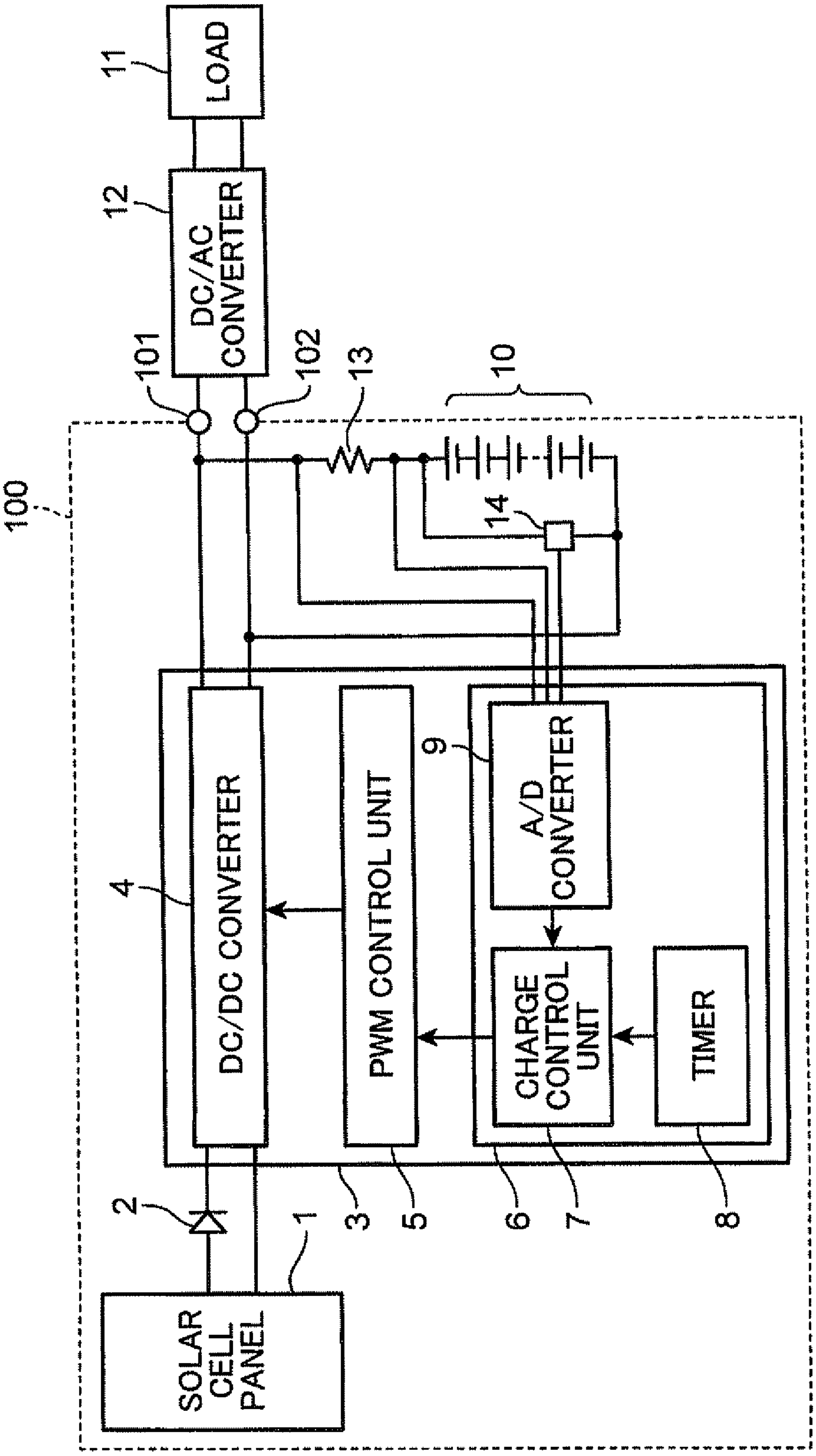
LOAD
11
DC/AC CONVERTER
12
101
102
13
10
100
14
DC/DC CONVERTER
4
PWM CONTROL UNIT
9
A/D CONVERTER
CHARGE CONTROL UNIT
TIMER
SOLAR CELL PANEL
2
1
3
5
6
7
8

FIG. 2

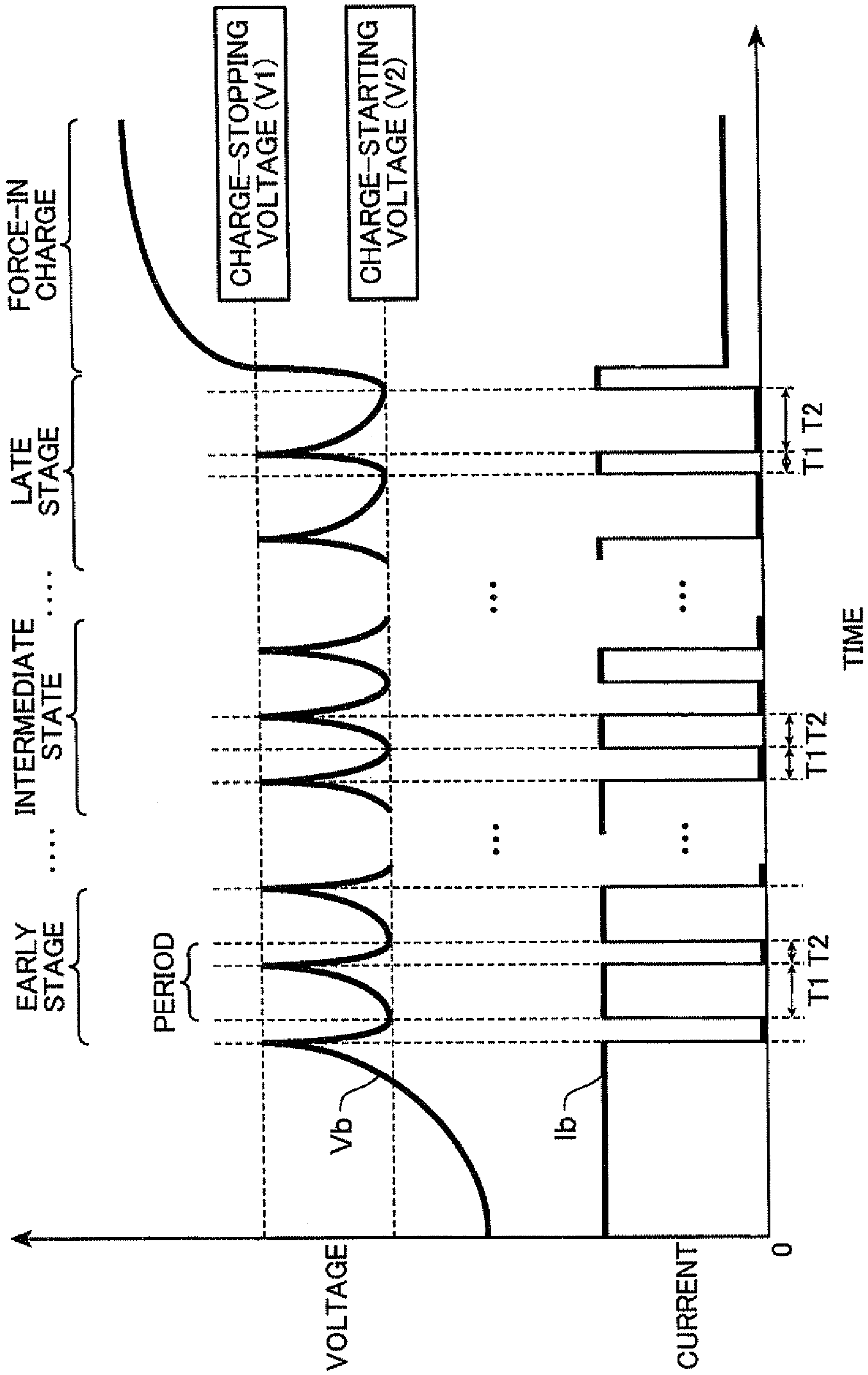
FORCE-IN CHARGE
CHARGE-STOPPING VOLTAGE (V1)
CHARGE-STARTING VOLTAGE (V2)
LATE STAGE
INTERMEDIATE STATE
EARLY STAGE
PERIOD
Vb
Ib
T1 T2
T1 T2
T1 T2
VOLTAGE
CURRENT
0
TIME

FIG. 3

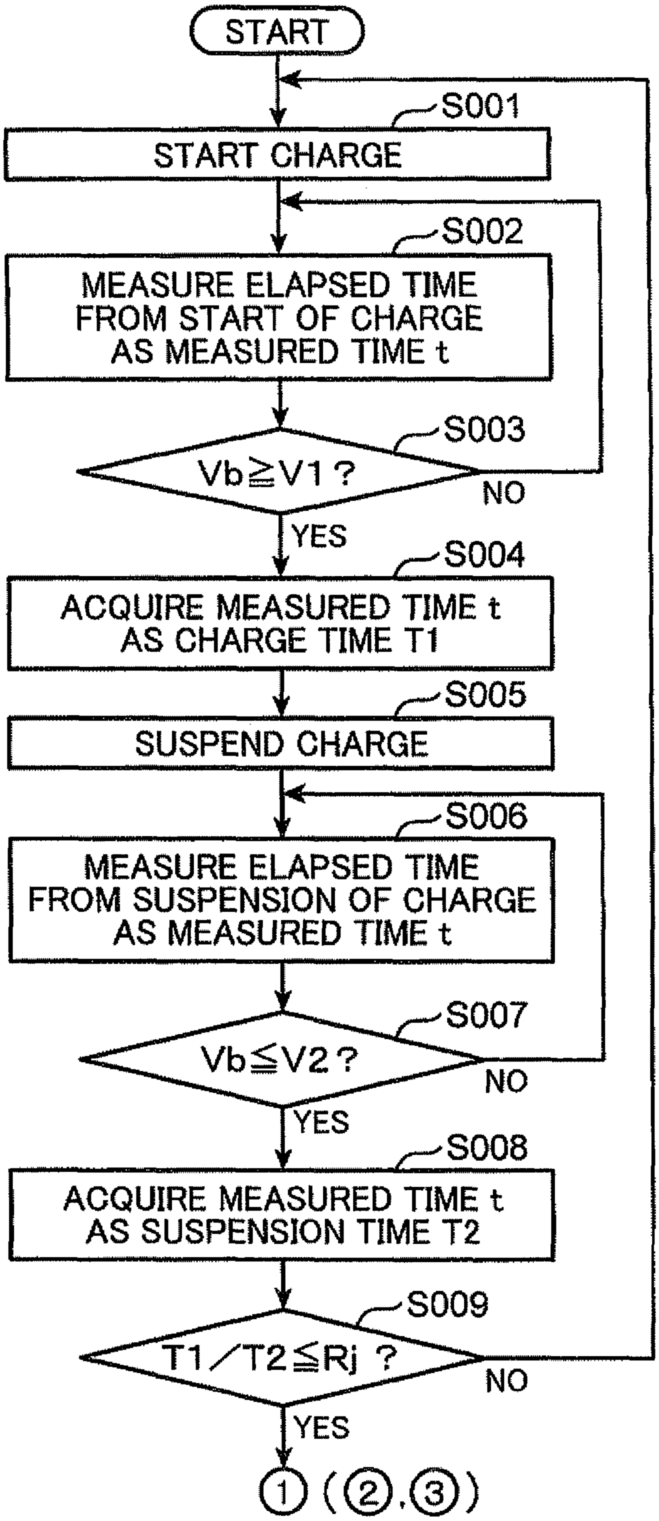
START
S001
START CHARGE
S002
MEASURE ELAPSED TIME FROM START OF CHARGE AS MEASURED TIME t
S003
Vb≧V1 ?
NO
YES
S004
ACQUIRE MEASURED TIME t AS CHARGE TIME T1
S005
SUSPEND CHARGE
S006
MEASURE ELAPSED TIME FROM SUSPENSION OF CHARGE AS MEASURED TIME t
S007
Vb≦V2 ?
NO
YES
S008
ACQUIRE MEASURED TIME t AS SUSPENSION TIME T2
S009
T1/T2≦Rj ?
NO
YES
① (②,③)

FIG. 4

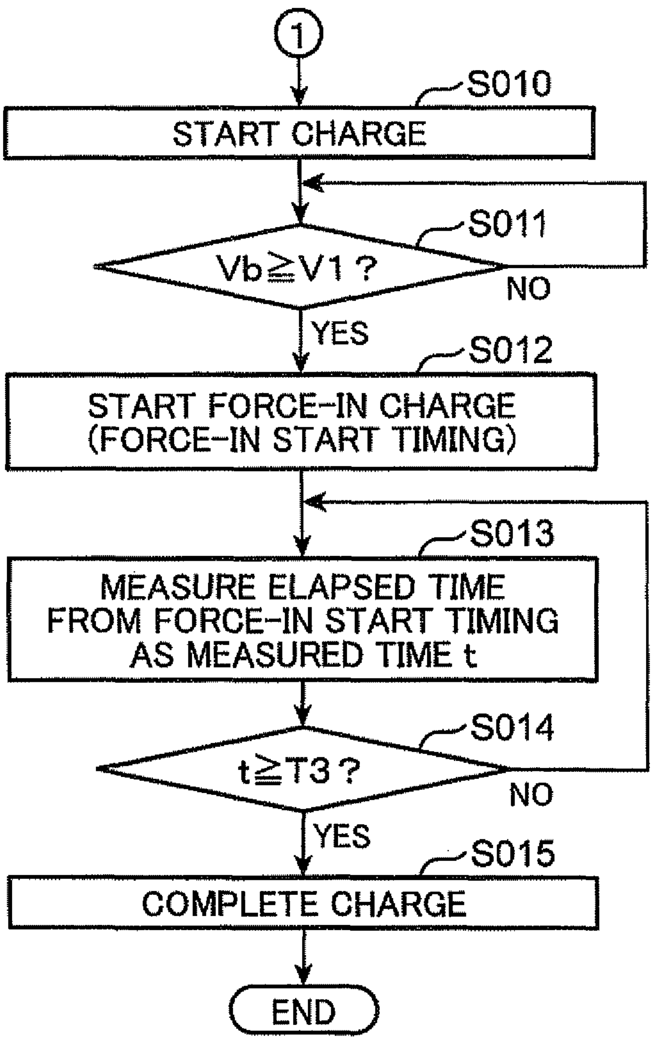
1
S010
START CHARGE
S011
Vb≧V1 ?
NO
YES
S012
START FORCE-IN CHARGE
(FORCE-IN START TIMING)
S013
MEASURE ELAPSED TIME
FROM FORCE-IN START TIMING
AS MEASURED TIME t
S014
t≧T3 ?
NO
YES
S015
COMPLETE CHARGE
END

FIG. 5

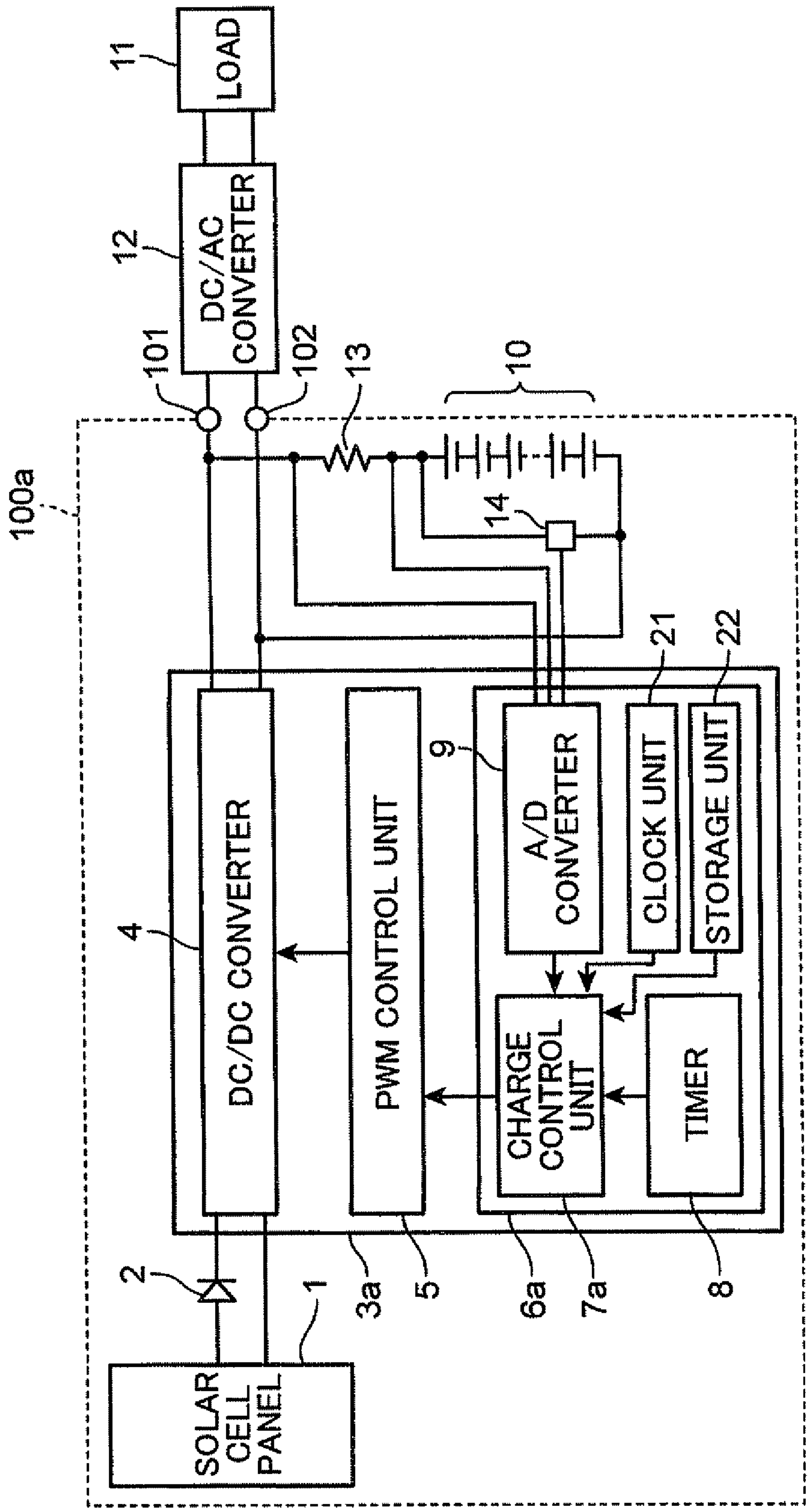
LOAD
DC/AC CONVERTER
SOLAR CELL PANEL
DC/DC CONVERTER
PWM CONTROL UNIT
A/D CONVERTER
CLOCK UNIT
STORAGE UNIT
CHARGE CONTROL UNIT
TIMER
100a
101
102
1
2
3a
4
5
6a
7a
8
9
10
11
12
13
14
21
22

FIG. 6

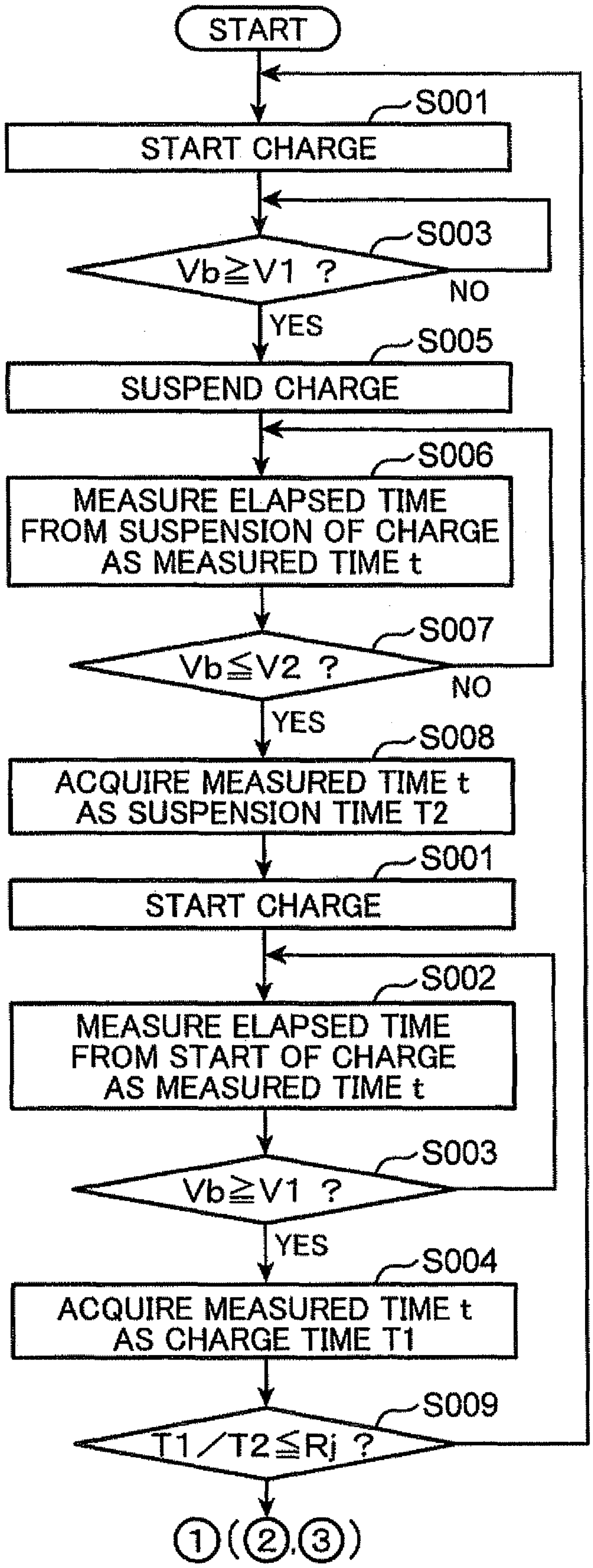
START
S001
START CHARGE
S003
Vb≧V1 ?
NO
YES
S005
SUSPEND CHARGE
S006
MEASURE ELAPSED TIME FROM SUSPENSION OF CHARGE AS MEASURED TIME t
S007
Vb≦V2 ?
NO
YES
S008
ACQUIRE MEASURED TIME t AS SUSPENSION TIME T2
S001
START CHARGE
S002
MEASURE ELAPSED TIME FROM START OF CHARGE AS MEASURED TIME t
S003
Vb≧V1 ?
YES
S004
ACQUIRE MEASURED TIME t AS CHARGE TIME T1
S009
T1／T2≦Rj ?
①(②,③)

FIG. 7

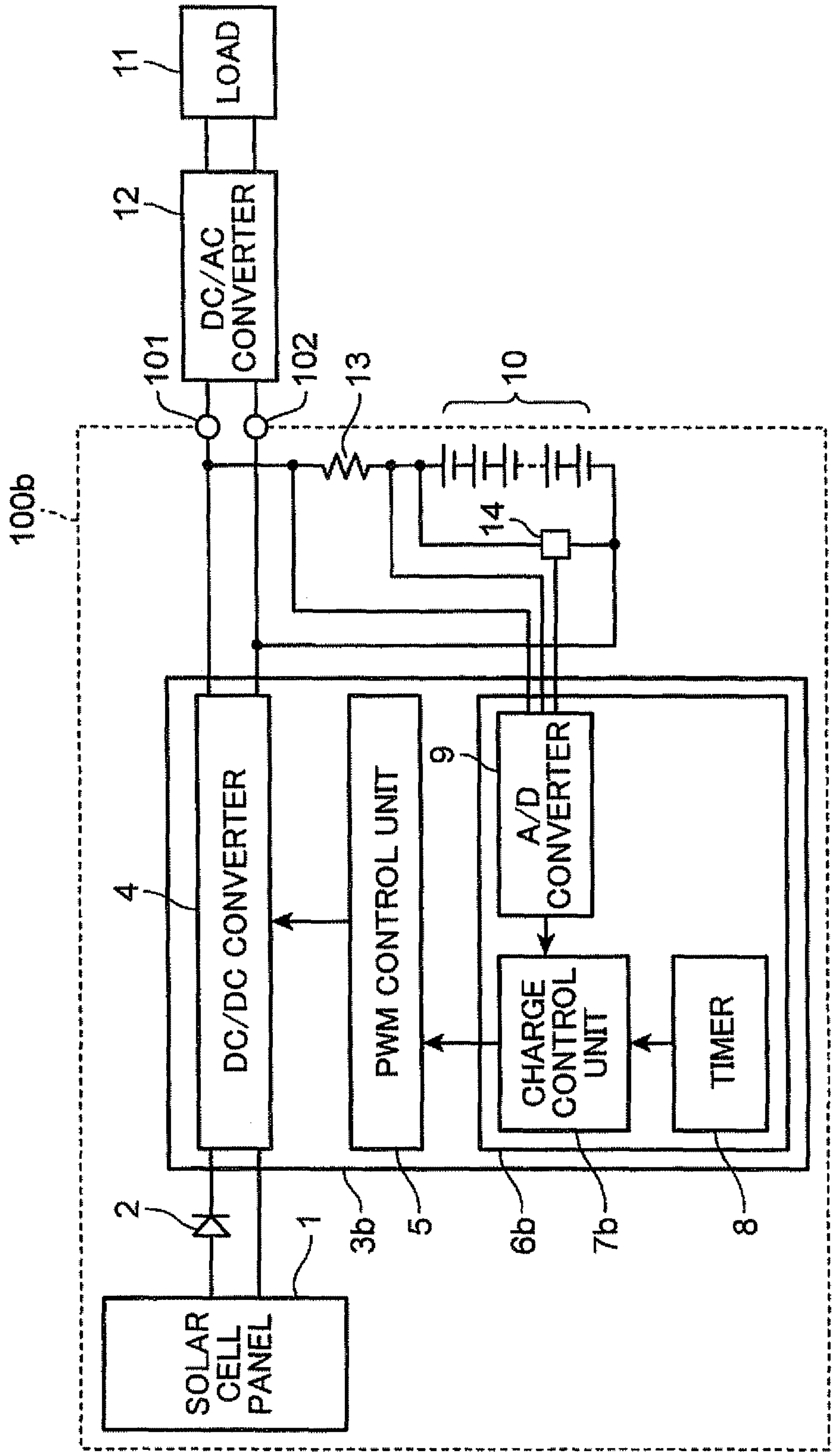

LOAD
DC/AC CONVERTER
SOLAR CELL PANEL
DC/DC CONVERTER
PWM CONTROL UNIT
A/D CONVERTER
CHARGE CONTROL UNIT
TIMER
100b
1
2
3b
4
5
6b
7b
8
9
10
11
12
13
14
101
102

FIG. 8

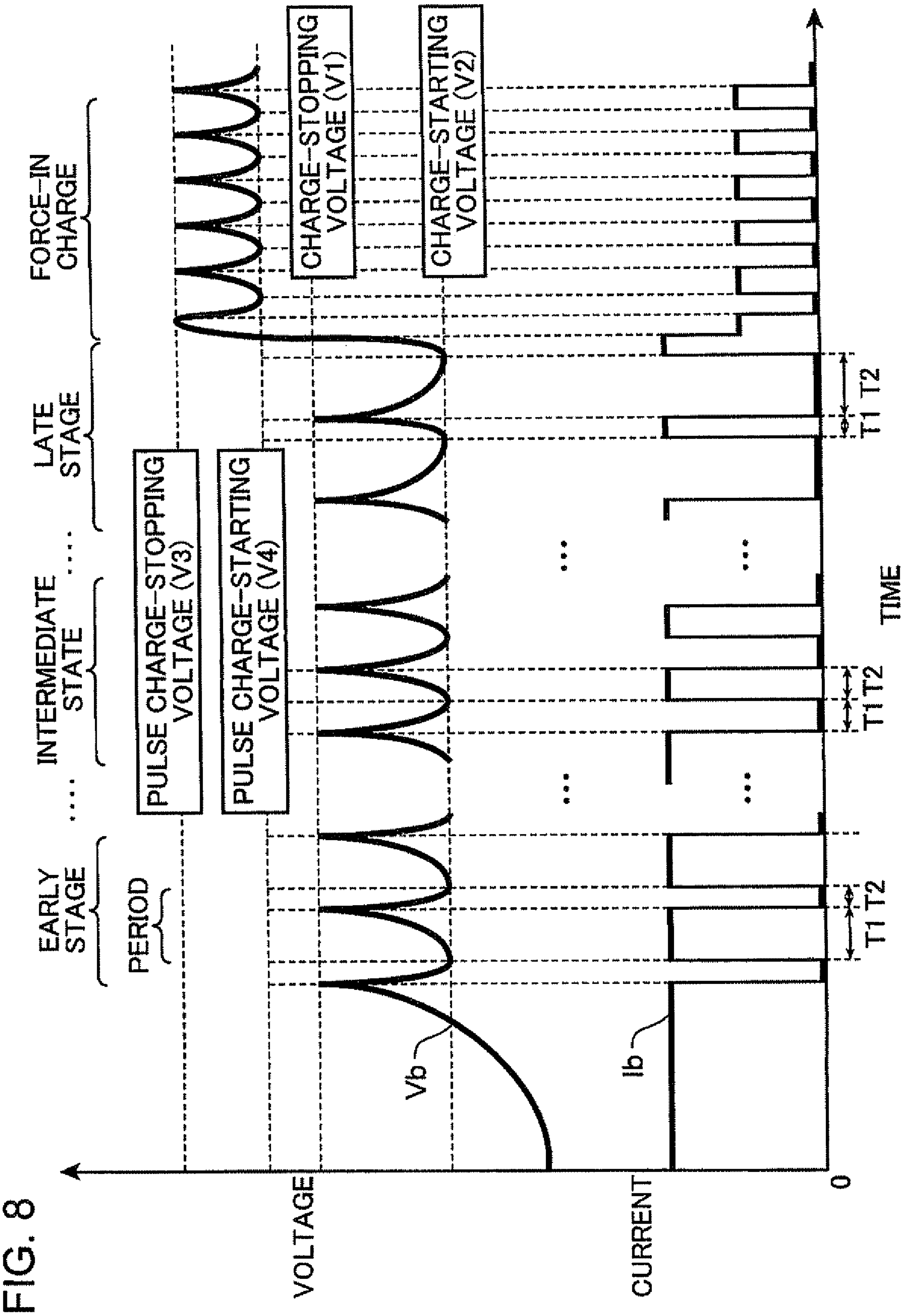
VOLTAGE
CURRENT
0
TIME
Vb
Ib
EARLY STAGE
PERIOD
INTERMEDIATE STATE
LATE STAGE
FORCE-IN CHARGE
PULSE CHARGE-STOPPING VOLTAGE (V3)
PULSE CHARGE-STARTING VOLTAGE (V4)
CHARGE-STOPPING VOLTAGE (V1)
CHARGE-STARTING VOLTAGE (V2)
T1 T2
T1 T2
T1 T2

FIG. 9

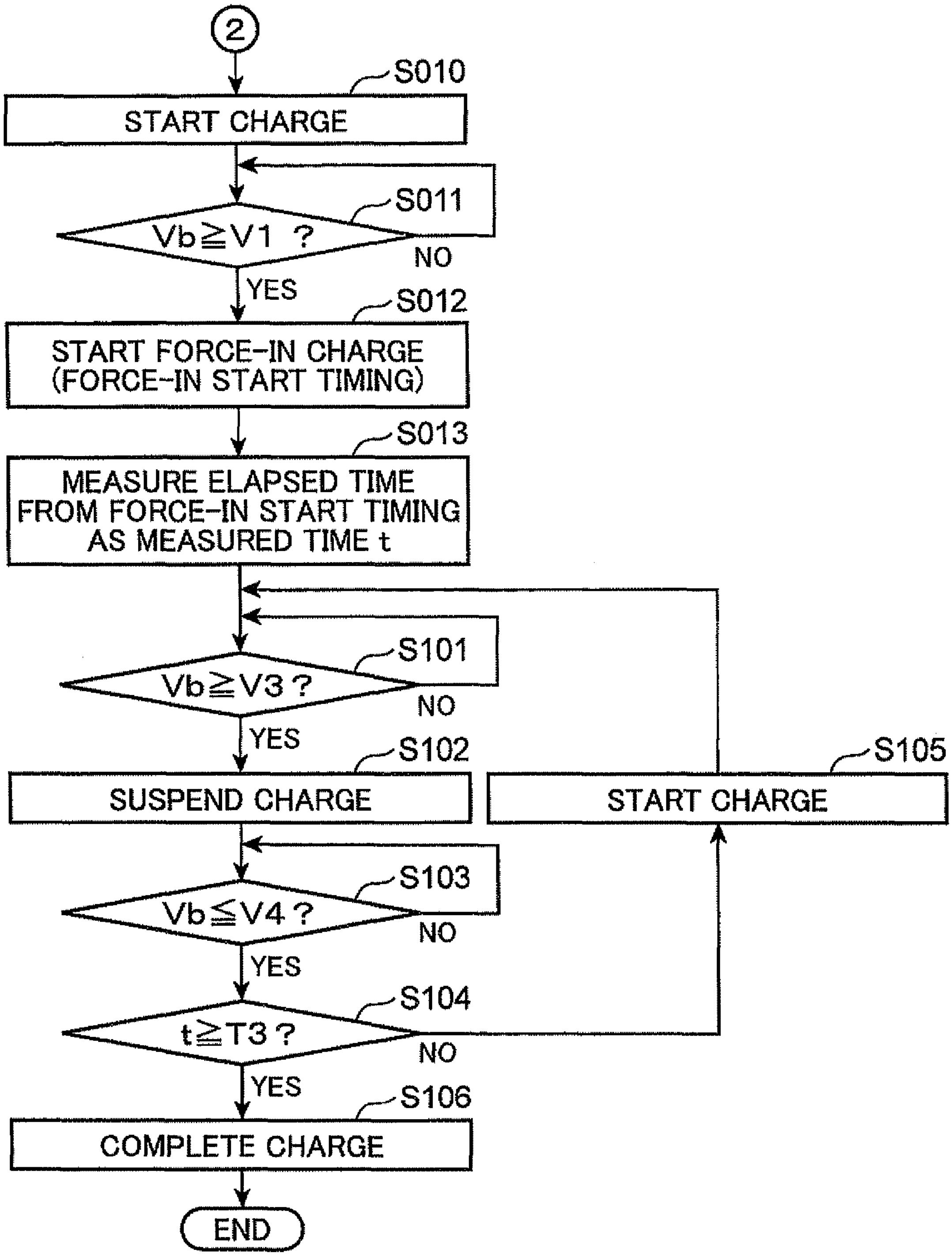
2
S010
START CHARGE
S011
Vb≧V1 ?
NO
YES
S012
START FORCE-IN CHARGE
(FORCE-IN START TIMING)
S013
MEASURE ELAPSED TIME
FROM FORCE-IN START TIMING
AS MEASURED TIME t
S101
Vb≧V3 ?
NO
YES
S102
SUSPEND CHARGE
S105
START CHARGE
S103
Vb≦V4 ?
NO
YES
S104
t≧T3 ?
NO
YES
S106
COMPLETE CHARGE
END

FIG. 10

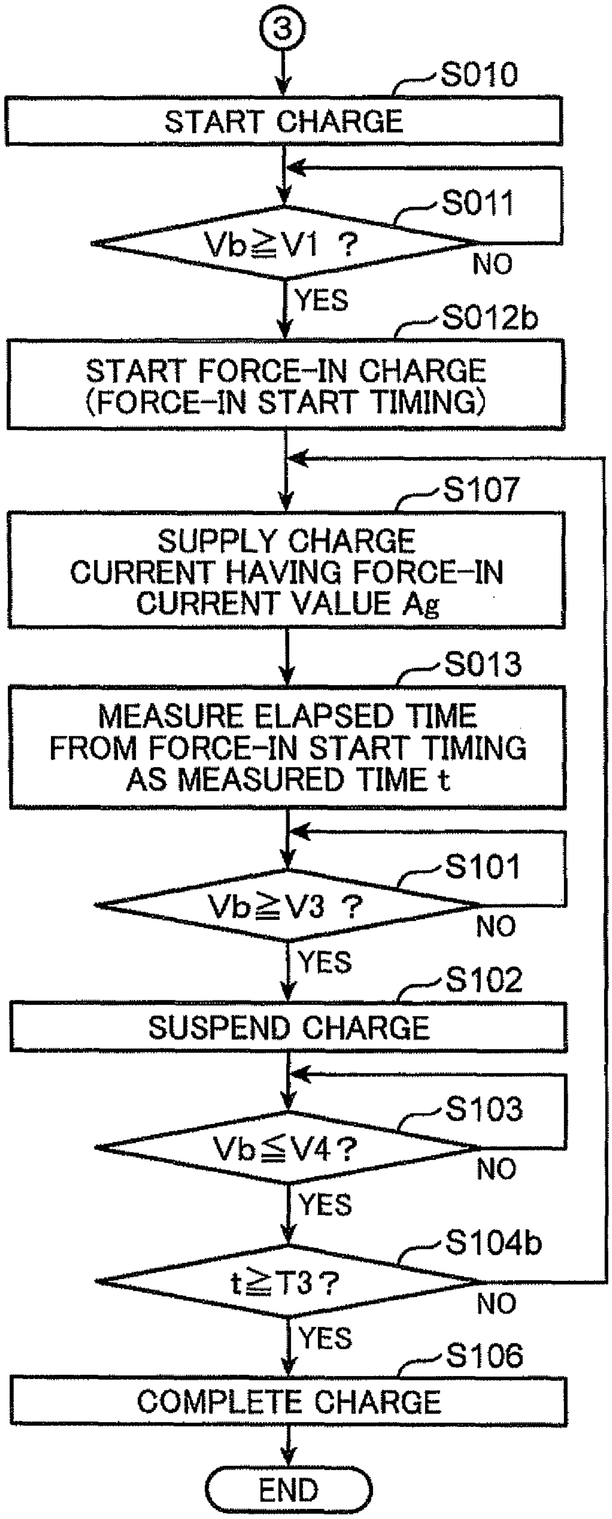
3
S010
START CHARGE
S011
Vb≧V1 ?
NO
YES
S012b
START FORCE-IN CHARGE
(FORCE-IN START TIMING)
S107
SUPPLY CHARGE
CURRENT HAVING FORCE-IN
CURRENT VALUE Ag
S013
MEASURE ELAPSED TIME
FROM FORCE-IN START TIMING
AS MEASURED TIME t
S101
Vb≧V3 ?
NO
YES
S102
SUSPEND CHARGE
S103
Vb≦V4 ?
NO
YES
S104b
t≧T3 ?
NO
YES
S106
COMPLETE CHARGE
END

FIG. 11

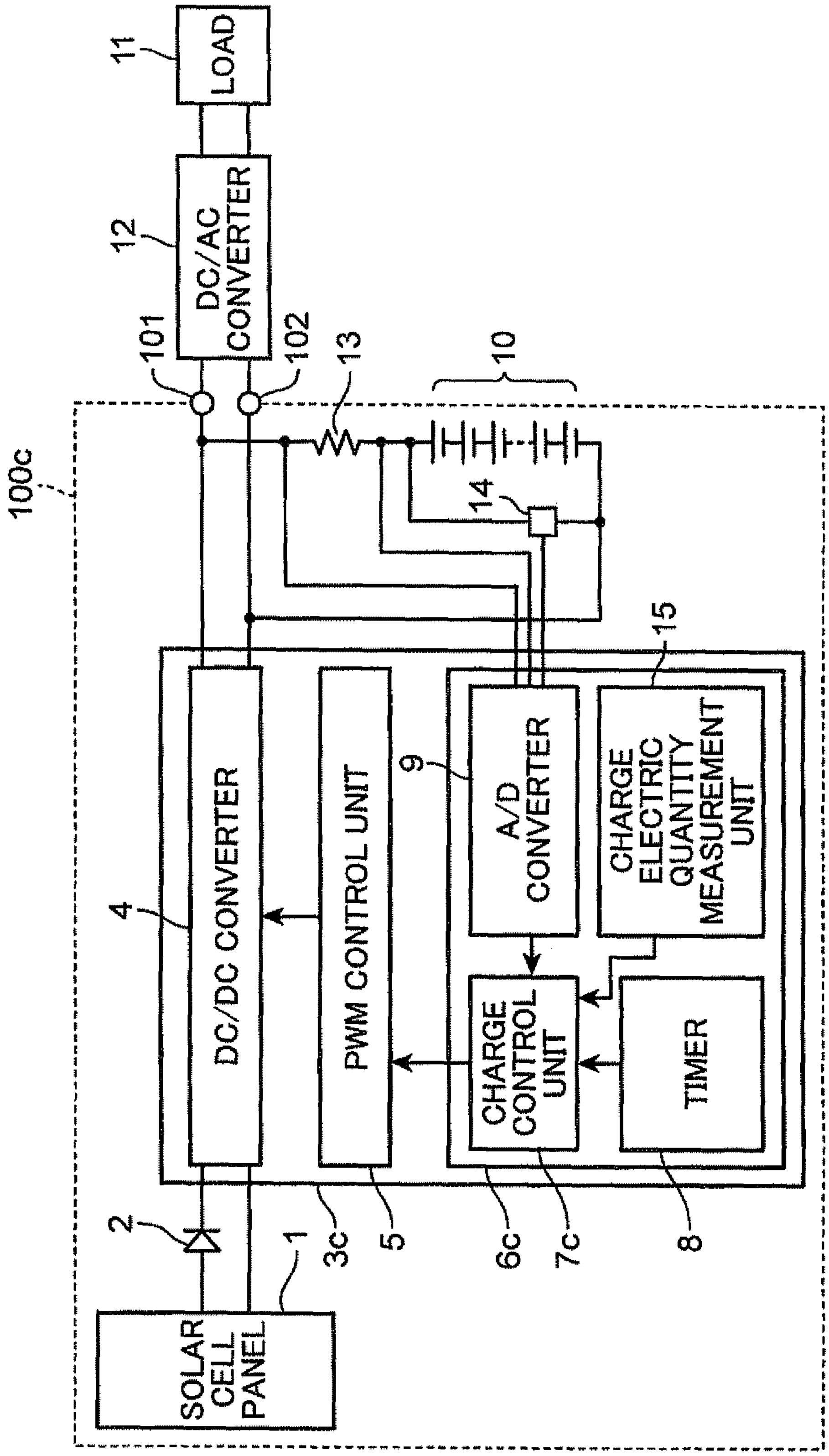
LOAD
11
DC/AC CONVERTER
12
101
102
13
10
100c
14
15
DC/DC CONVERTER
4
PWM CONTROL UNIT
9
A/D CONVERTER
CHARGE ELECTRIC QUANTITY MEASUREMENT UNIT
CHARGE CONTROL UNIT
TIMER
SOLAR CELL PANEL
2
1
3c
5
6c
7c
8

FIG. 12

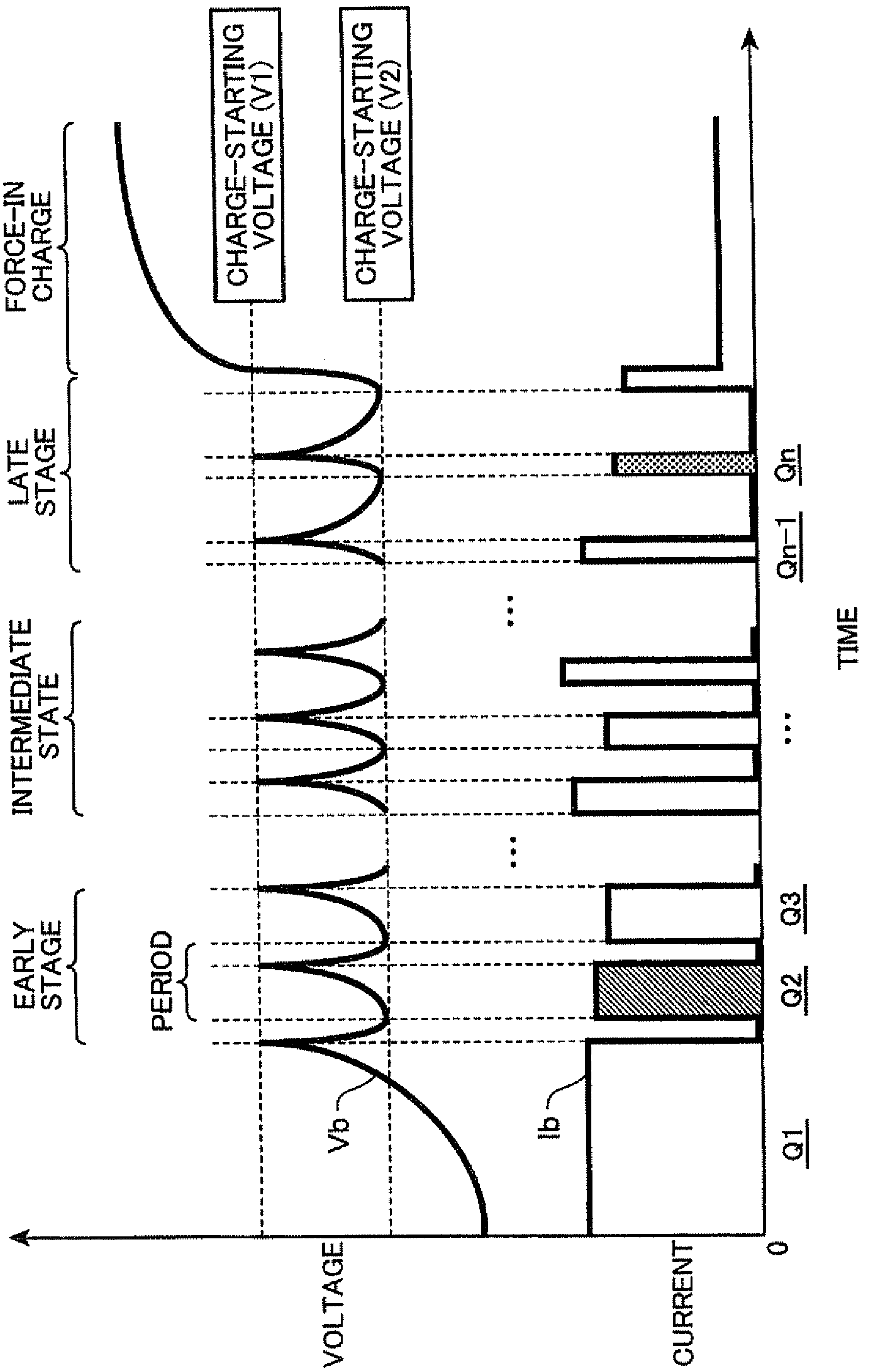
VOLTAGE
CURRENT
0
TIME
Vb
Ib
EARLY STAGE
PERIOD
INTERMEDIATE STATE
LATE STAGE
FORCE-IN CHARGE
CHARGE-STARTING VOLTAGE (V1)
CHARGE-STARTING VOLTAGE (V2)
Q1
Q2
Q3
Qn-1
Qn

FIG. 13

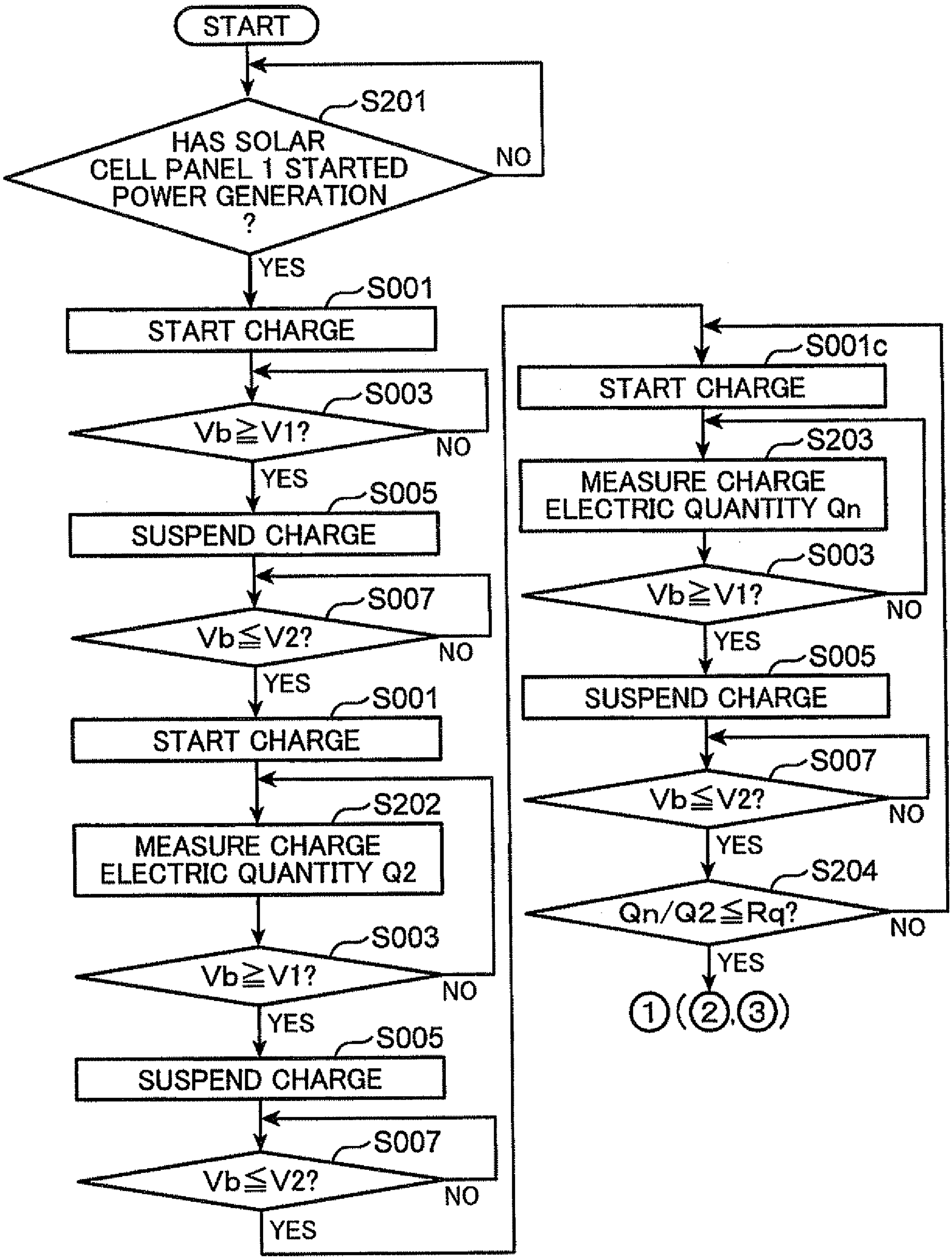
START
S201
HAS SOLAR CELL PANEL 1 STARTED POWER GENERATION ?
NO
YES
S001
START CHARGE
S003
Vb≧V1?
NO
YES
S005
SUSPEND CHARGE
S007
Vb≦V2?
NO
YES
S001
START CHARGE
S202
MEASURE CHARGE ELECTRIC QUANTITY Q2
S003
Vb≧V1?
NO
YES
S005
SUSPEND CHARGE
S007
Vb≦V2?
NO
YES
S001c
START CHARGE
S203
MEASURE CHARGE ELECTRIC QUANTITY Qn
S003
Vb≧V1?
NO
YES
S005
SUSPEND CHARGE
S007
Vb≦V2?
NO
YES
S204
Qn/Q2≦Rq?
NO
YES
①(②,③)

FIG. 14

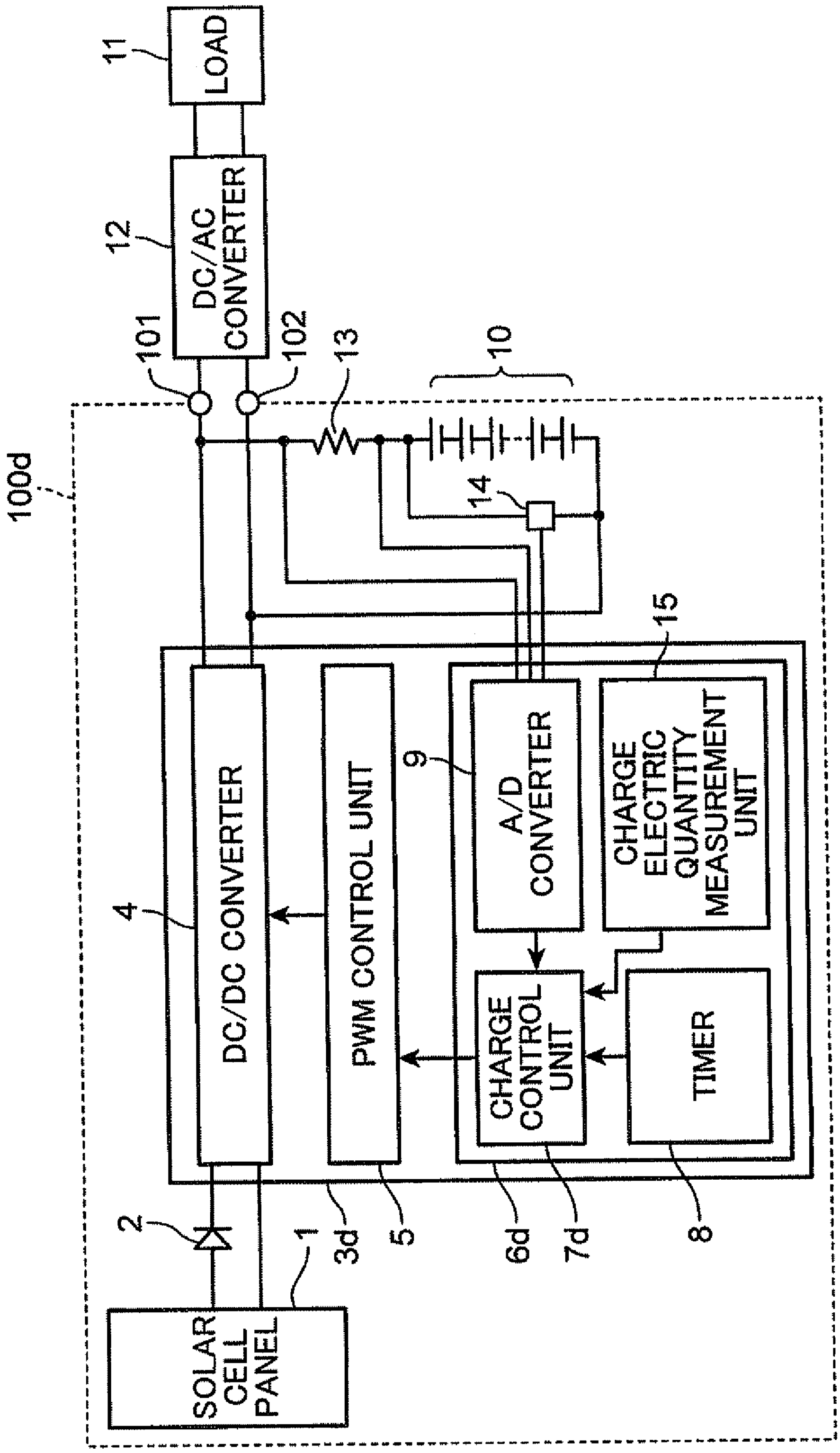
11
LOAD
12
DC/AC
CONVERTER
101
102
13
10
100d
14
15
4
DC/DC CONVERTER
PWM CONTROL UNIT
9
A/D
CONVERTER
CHARGE
ELECTRIC
QUANTITY
MEASUREMENT
UNIT
CHARGE
CONTROL
UNIT
TIMER
SOLAR
CELL
PANEL
2
1
3d
5
6d
7d
8

FIG. 15

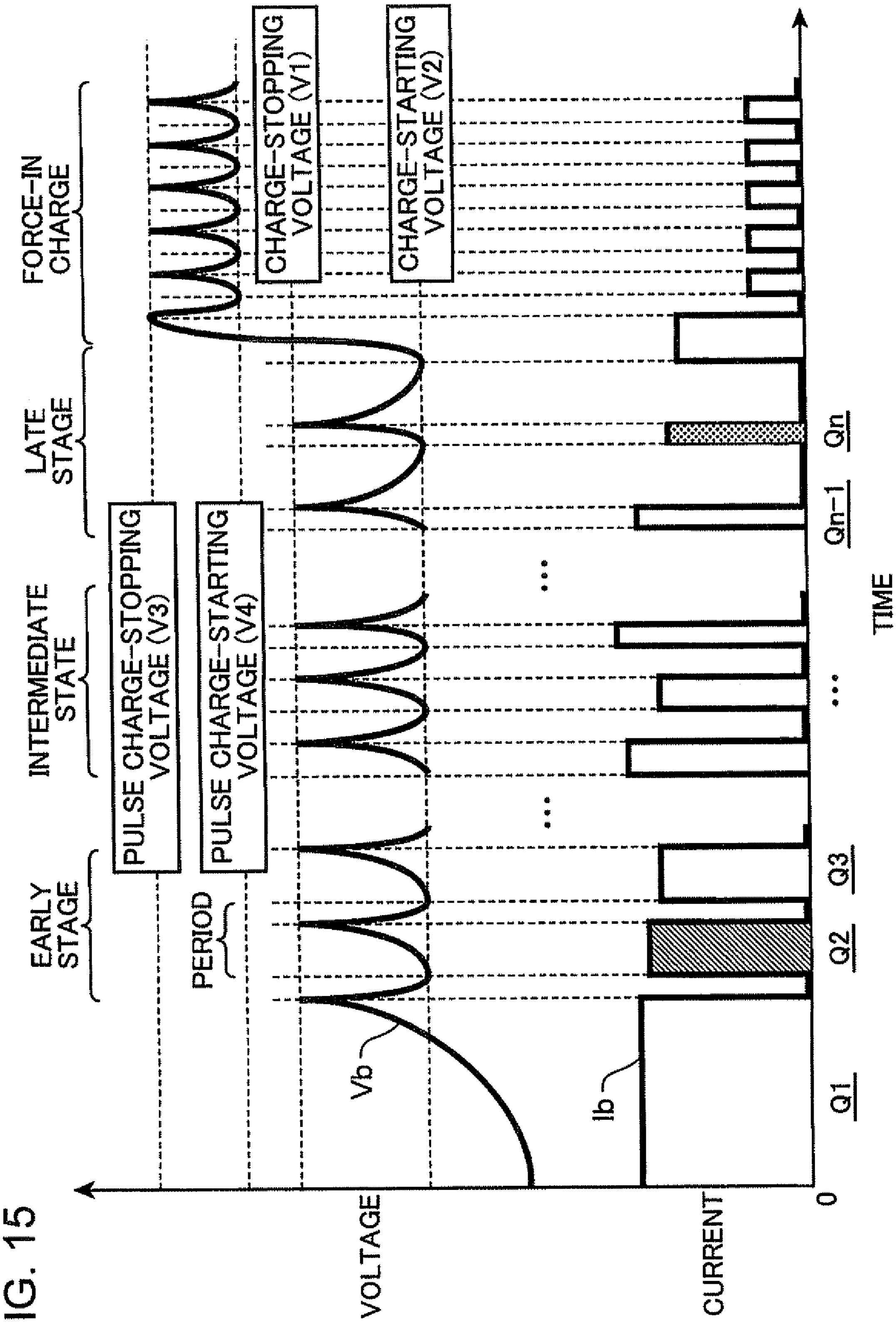
VOLTAGE
CURRENT
0
TIME
Vb
Ib
Q1
Q2
Q3
Qn-1
Qn
EARLY STAGE
PERIOD
INTERMEDIATE STATE
LATE STAGE
FORCE-IN CHARGE
PULSE CHARGE-STOPPING VOLTAGE (V3)
PULSE CHARGE-STARTING VOLTAGE (V4)
CHARGE-STOPPING VOLTAGE (V1)
CHARGE-STARTING VOLTAGE (V2)

FIG. 16

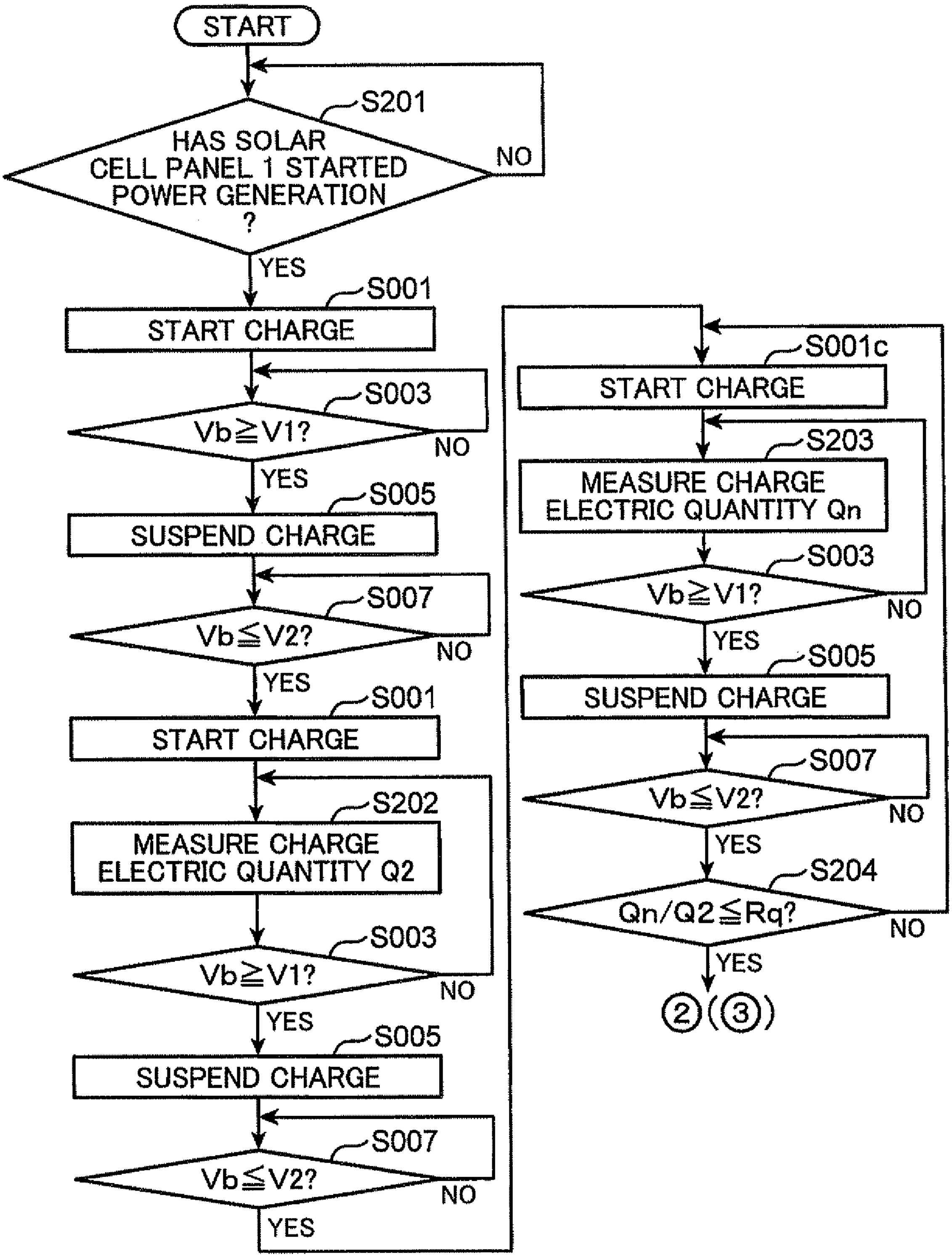
START
S201
HAS SOLAR CELL PANEL 1 STARTED POWER GENERATION ?
NO
YES
S001
START CHARGE
S003
Vb≧V1?
NO
YES
S005
SUSPEND CHARGE
S007
Vb≦V2?
NO
YES
S001
START CHARGE
S202
MEASURE CHARGE ELECTRIC QUANTITY Q2
S003
Vb≧V1?
NO
YES
S005
SUSPEND CHARGE
S007
Vb≦V2?
NO
YES
S001c
START CHARGE
S203
MEASURE CHARGE ELECTRIC QUANTITY Qn
S003
Vb≧V1?
NO
YES
S005
SUSPEND CHARGE
S007
Vb≦V2?
NO
YES
S204
Qn/Q2≦Rq?
NO
YES
②(③)

FIG. 17

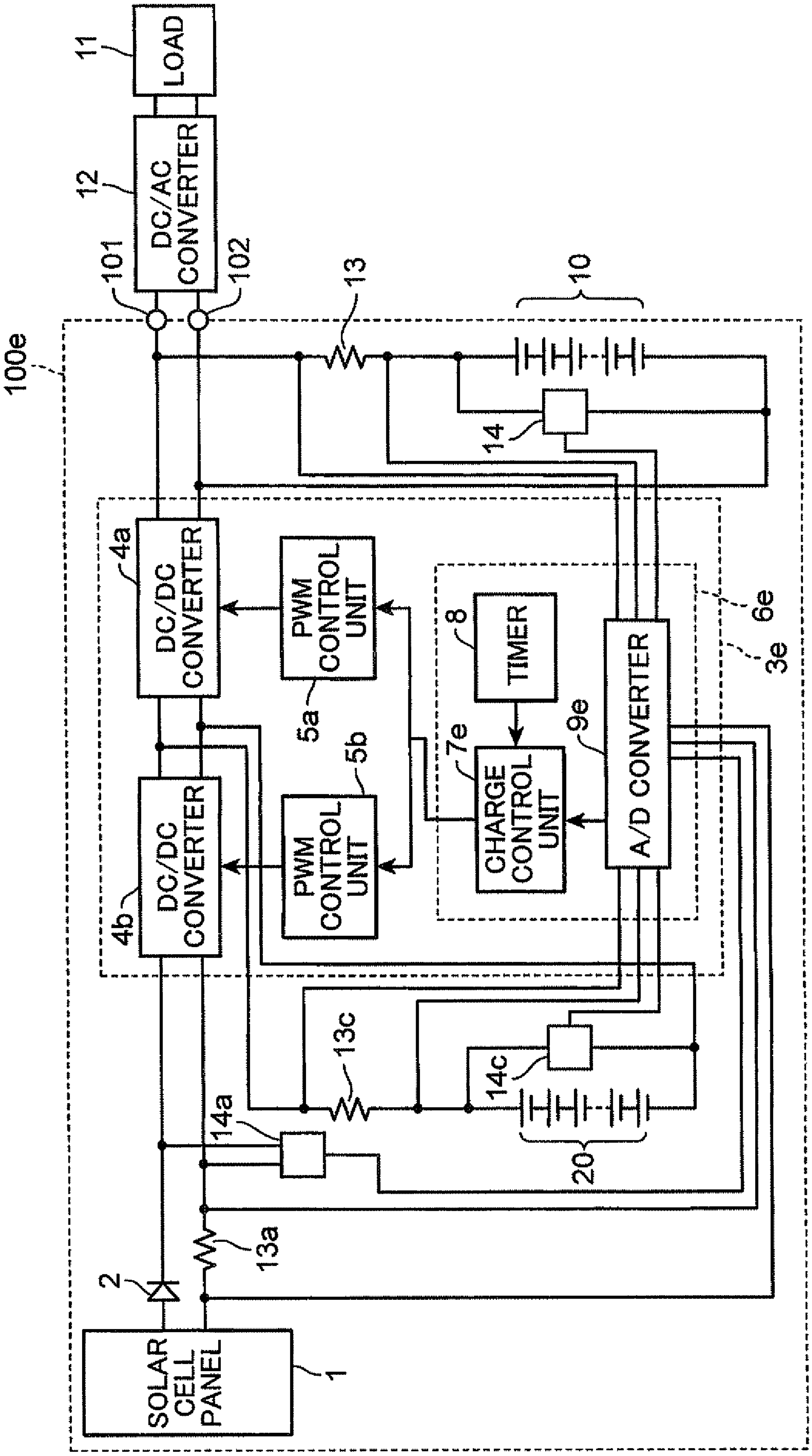
LOAD
DC/AC CONVERTER
DC/DC CONVERTER
PWM CONTROL UNIT
TIMER
CHARGE CONTROL UNIT
A/D CONVERTER
DC/DC CONVERTER
PWM CONTROL UNIT
SOLAR CELL PANEL

FIG. 18

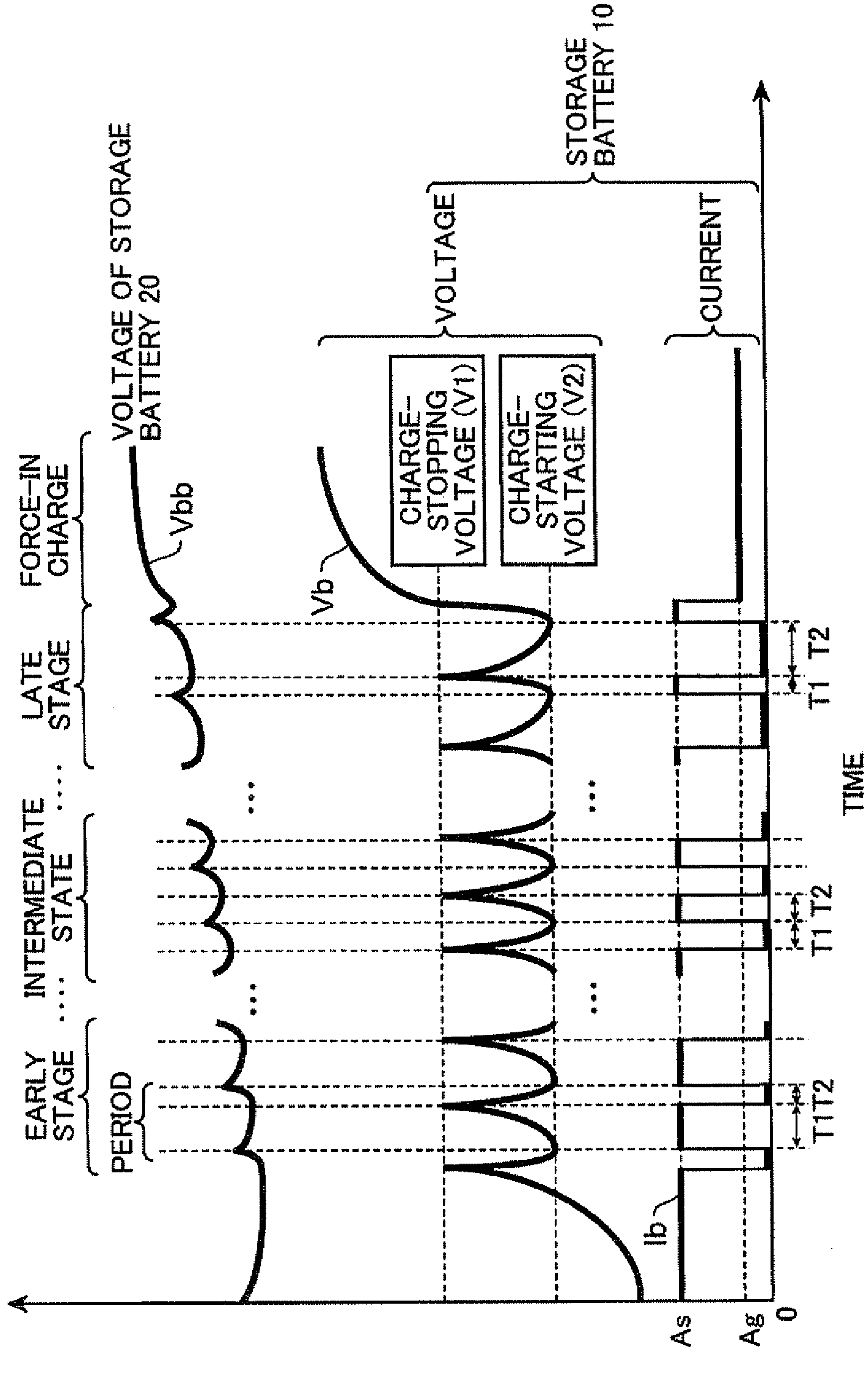
EARLY STAGE
INTERMEDIATE STATE
LATE STAGE
FORCE-IN CHARGE
PERIOD
VOLTAGE OF STORAGE BATTERY 20
Vbb
Vb
CHARGE-STOPPING VOLTAGE (V1)
CHARGE-STARTING VOLTAGE (V2)
VOLTAGE
CURRENT
STORAGE BATTERY 10
Ib
As
Ag
0
T1T2
T1 T2
T1 T2
TIME

FIG. 19

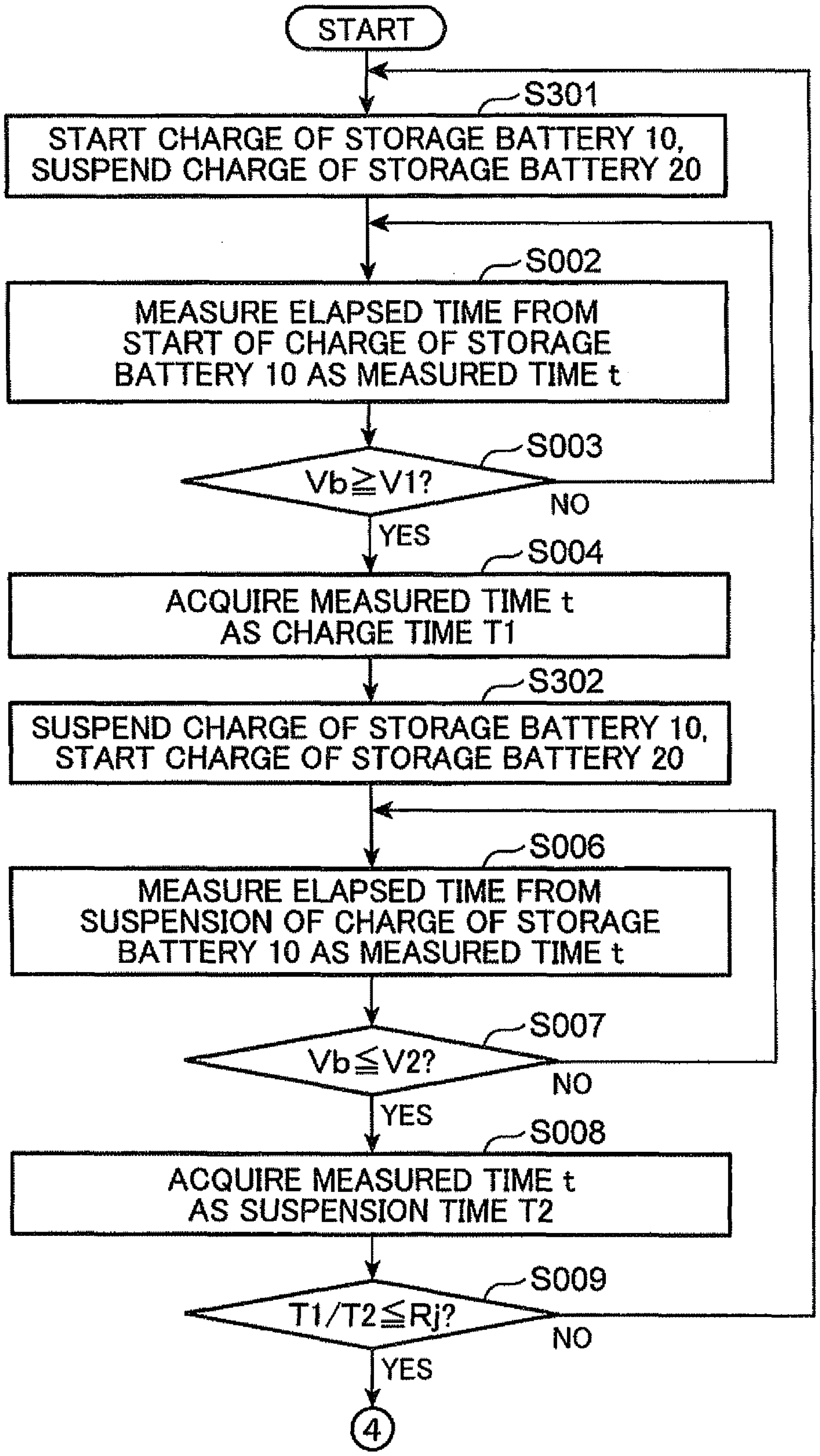
START
S301
START CHARGE OF STORAGE BATTERY 10, SUSPEND CHARGE OF STORAGE BATTERY 20
S002
MEASURE ELAPSED TIME FROM START OF CHARGE OF STORAGE BATTERY 10 AS MEASURED TIME t
S003
Vb≧V1?
NO
YES
S004
ACQUIRE MEASURED TIME t AS CHARGE TIME T1
S302
SUSPEND CHARGE OF STORAGE BATTERY 10, START CHARGE OF STORAGE BATTERY 20
S006
MEASURE ELAPSED TIME FROM SUSPENSION OF CHARGE OF STORAGE BATTERY 10 AS MEASURED TIME t
S007
Vb≦V2?
NO
YES
S008
ACQUIRE MEASURED TIME t AS SUSPENSION TIME T2
S009
T1/T2≦Rj?
NO
YES
4

FIG. 20

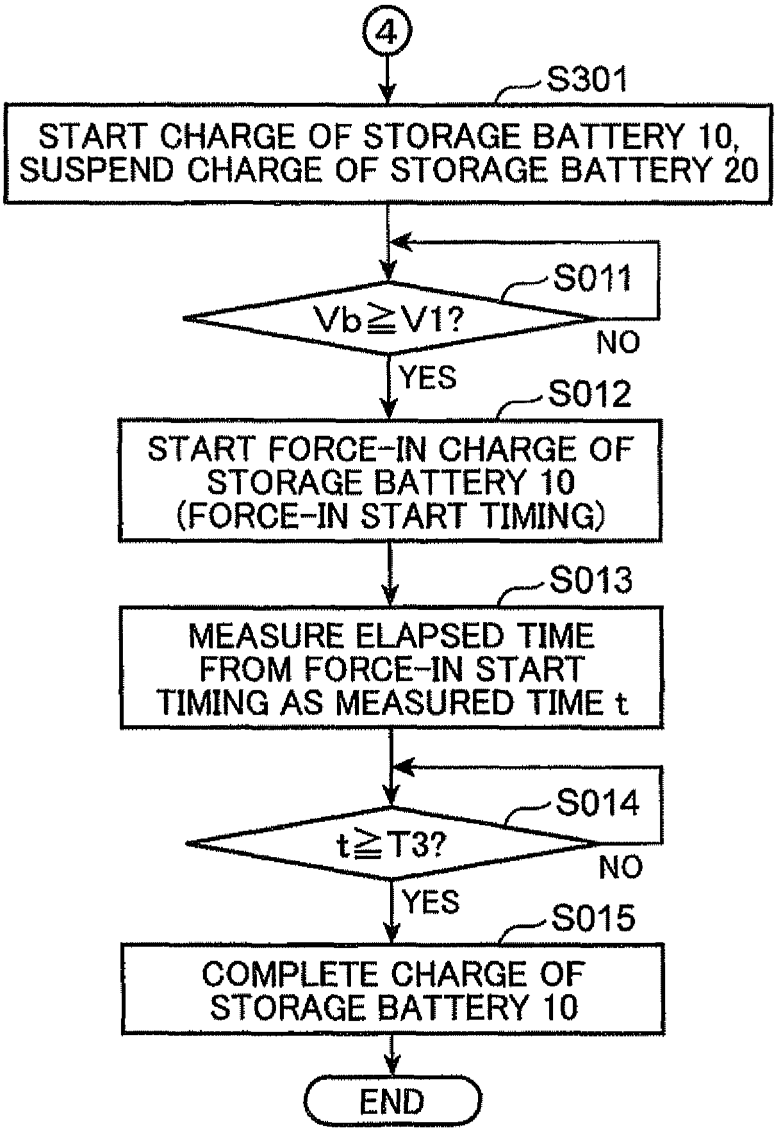
4
S301
START CHARGE OF STORAGE BATTERY 10, SUSPEND CHARGE OF STORAGE BATTERY 20
S011
Vb≧V1?
NO
YES
S012
START FORCE-IN CHARGE OF STORAGE BATTERY 10 (FORCE-IN START TIMING)
S013
MEASURE ELAPSED TIME FROM FORCE-IN START TIMING AS MEASURED TIME t
S014
t≧T3?
NO
YES
S015
COMPLETE CHARGE OF STORAGE BATTERY 10
END

FIG. 21

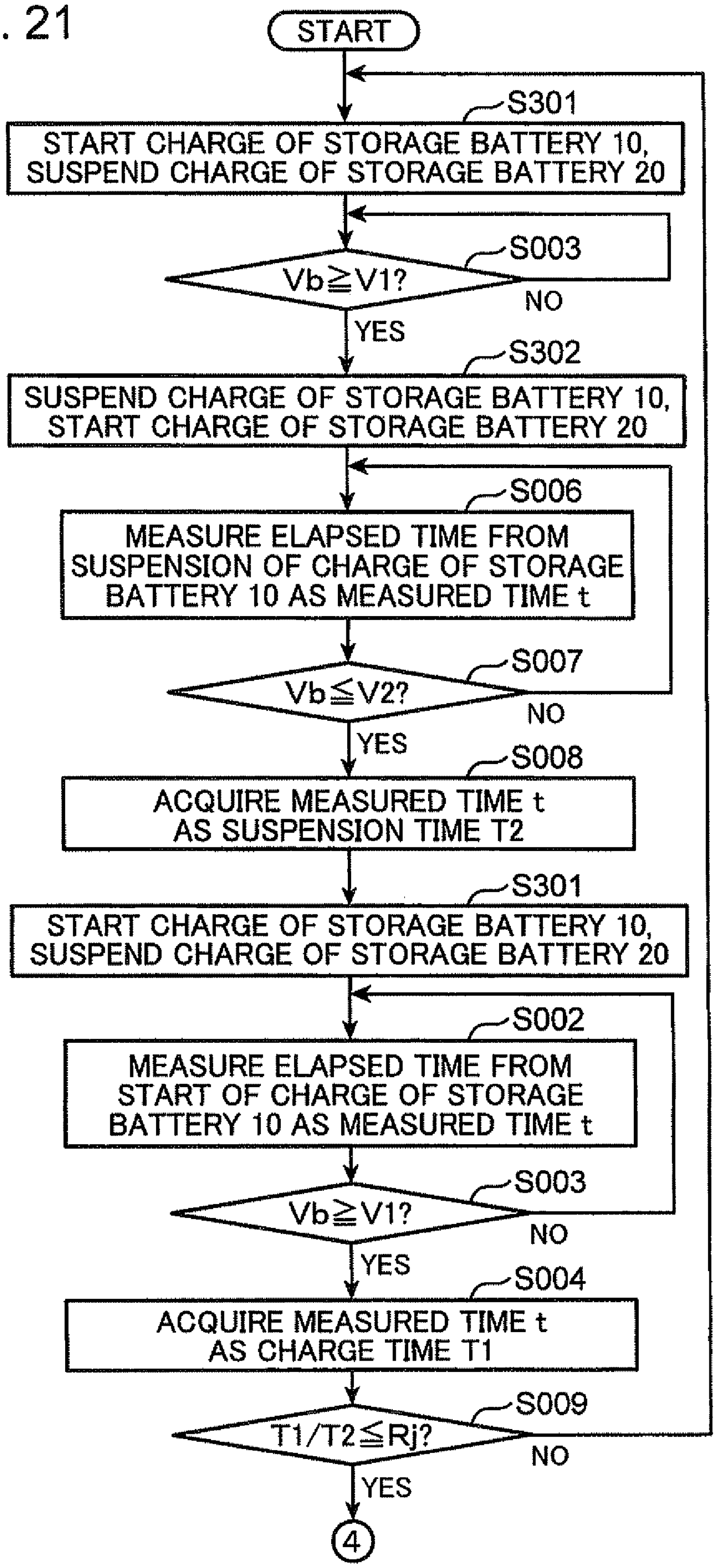
START
S301
START CHARGE OF STORAGE BATTERY 10, SUSPEND CHARGE OF STORAGE BATTERY 20
S003
Vb≧V1?
NO
YES
S302
SUSPEND CHARGE OF STORAGE BATTERY 10, START CHARGE OF STORAGE BATTERY 20
S006
MEASURE ELAPSED TIME FROM SUSPENSION OF CHARGE OF STORAGE BATTERY 10 AS MEASURED TIME t
S007
Vb≦V2?
NO
YES
S008
ACQUIRE MEASURED TIME t AS SUSPENSION TIME T2
S301
START CHARGE OF STORAGE BATTERY 10, SUSPEND CHARGE OF STORAGE BATTERY 20
S002
MEASURE ELAPSED TIME FROM START OF CHARGE OF STORAGE BATTERY 10 AS MEASURED TIME t
S003
Vb≧V1?
NO
YES
S004
ACQUIRE MEASURED TIME t AS CHARGE TIME T1
S009
T1/T2≦Rj?
NO
YES
4

FIG. 22

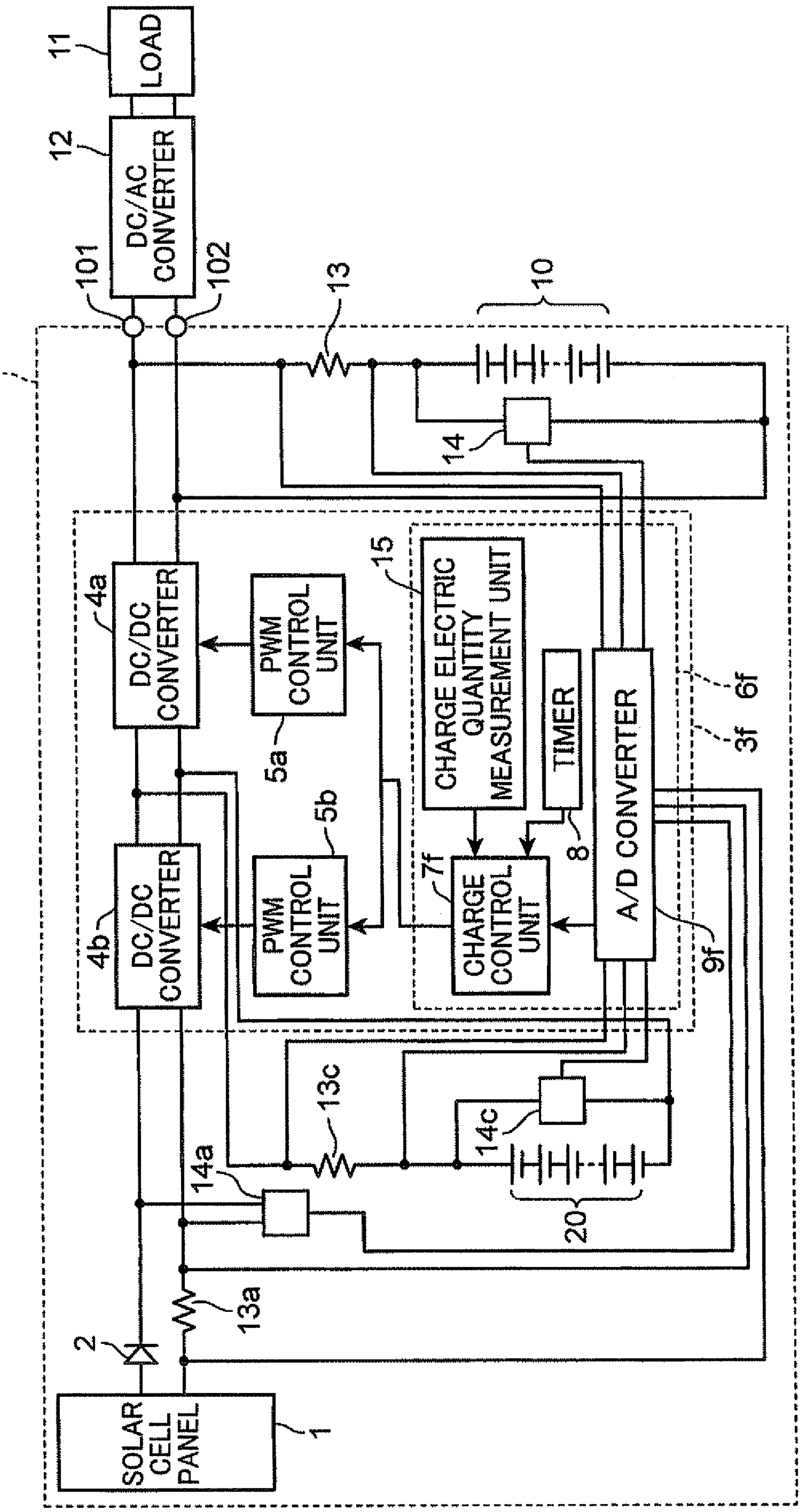

LOAD
11
DC/AC CONVERTER
12
101
102
13
10
100f
14
15
CHARGE ELECTRIC QUANTITY MEASUREMENT UNIT
TIMER
A/D CONVERTER
4a
DC/DC CONVERTER
PWM CONTROL UNIT
5a
5b
6f
3f
PWM CONTROL UNIT
CHARGE CONTROL UNIT
7f
8
9f
4b
DC/DC CONVERTER
13c
14c
14a
20
2
13a
SOLAR CELL PANEL
1

FIG. 23

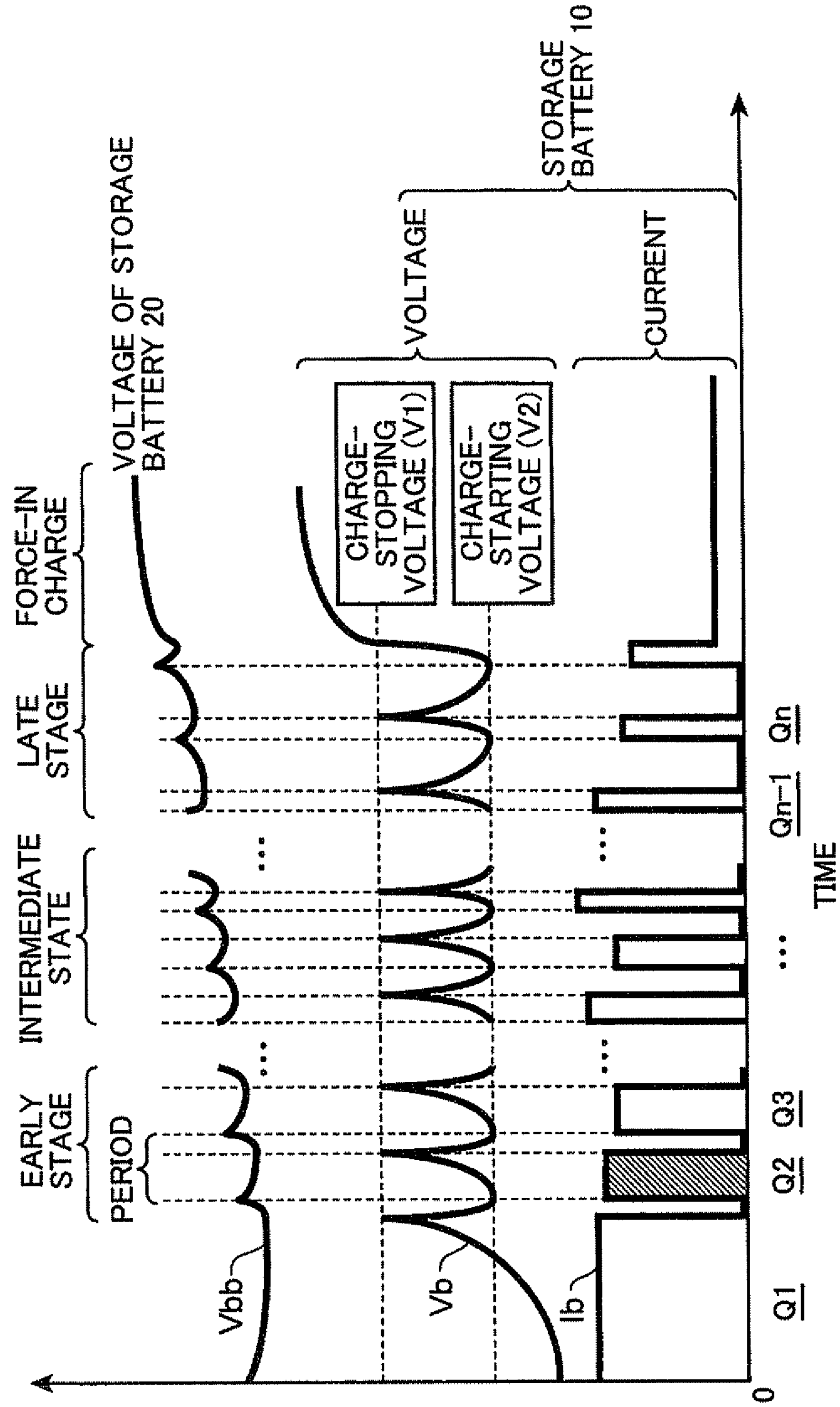

EARLY STAGE
PERIOD
INTERMEDIATE STATE
LATE STAGE
FORCE-IN CHARGE
VOLTAGE OF STORAGE BATTERY 20
Vbb
Vb
Ib
CHARGE-STOPPING VOLTAGE (V1)
CHARGE-STARTING VOLTAGE (V2)
VOLTAGE
CURRENT
STORAGE BATTERY 10
0
Q1
Q2
Q3
Qn-1
Qn
TIME

FIG. 24

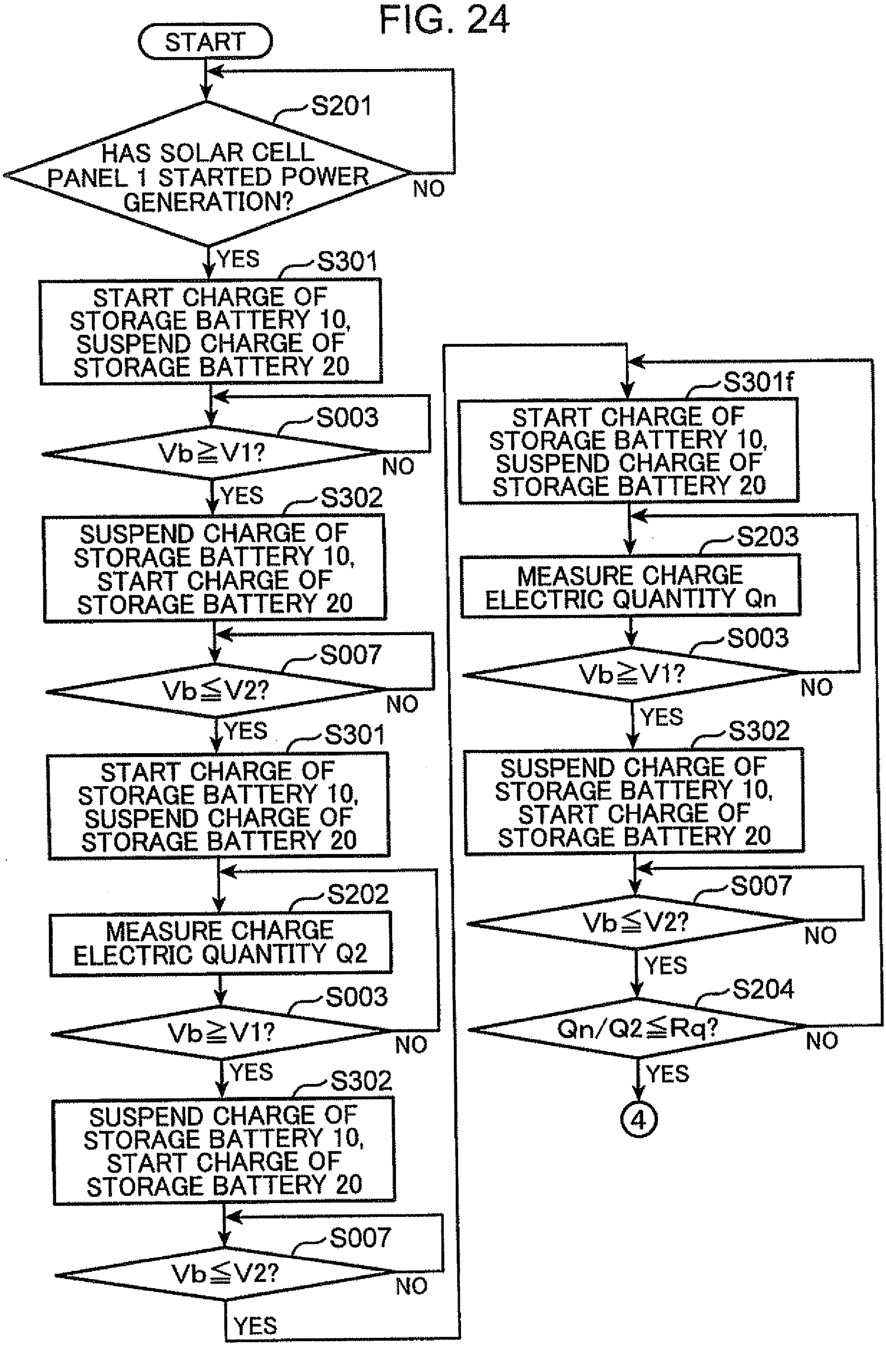
START
S201
HAS SOLAR CELL PANEL 1 STARTED POWER GENERATION?
NO
YES
S301
START CHARGE OF STORAGE BATTERY 10, SUSPEND CHARGE OF STORAGE BATTERY 20
S003
Vb≧V1?
NO
YES
S302
SUSPEND CHARGE OF STORAGE BATTERY 10, START CHARGE OF STORAGE BATTERY 20
S007
Vb≦V2?
NO
YES
S301
START CHARGE OF STORAGE BATTERY 10, SUSPEND CHARGE OF STORAGE BATTERY 20
S202
MEASURE CHARGE ELECTRIC QUANTITY Q2
S003
Vb≧V1?
NO
YES
S302
SUSPEND CHARGE OF STORAGE BATTERY 10, START CHARGE OF STORAGE BATTERY 20
S007
Vb≦V2?
NO
YES
S301f
START CHARGE OF STORAGE BATTERY 10, SUSPEND CHARGE OF STORAGE BATTERY 20
S203
MEASURE CHARGE ELECTRIC QUANTITY Qn
S003
Vb≧V1?
NO
YES
S302
SUSPEND CHARGE OF STORAGE BATTERY 10, START CHARGE OF STORAGE BATTERY 20
S007
Vb≦V2?
NO
YES
S204
Qn/Q2≦Rq?
NO
YES
4

## INTERNATIONAL SEARCH REPORT

International application No.
PCT/JP2010/006710

**A. CLASSIFICATION OF SUBJECT MATTER**
*H02J7/35*(2006.01)i, *H01M10/44*(2006.01)i

According to International Patent Classification (IPC) or to both national classification and IPC

**B. FIELDS SEARCHED**

Minimum documentation searched (classification system followed by classification symbols)
H02J7/35, H01M10/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2-142325 A (Matsushita Electric Works, Ltd.), 31 May 1990 (31.05.1990), entire text; all drawings (Family: none) | 1-21 |
| A | JP 6-141484 A (Matsushita Electric Works, Ltd.), 20 May 1994 (20.05.1994), entire text; all drawings (Family: none) | 1-21 |
| A | JP 9-289741 A (Suzuki Motor Corp.), 04 November 1997 (04.11.1997), entire text; all drawings (Family: none) | 1-21 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 February, 2011 (08.02.11) | 15 February, 2011 (15.02.11) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63103627 B
- JP 2002315226 A
- JP 2009275119 A
- JP 2009281264 A
- JP 2010008761 A
- JP 2010009778 A
- JP 2010009779 A
- JP 2010021766 A